# EUROPEAN PATENT APPLICATION

(11) **EP 4 485 156 A1**
(43) Date of publication of application: **01.01.2025**
(21) Application number: 23795287.4
(22) Date of filing: 23.04.2023
(51) Int. Cl.: G06F 3/04817

(54) **METHOD FOR DISPLAYING APPLICATION WINDOW, AND ELECTRONIC DEVICE**

(30) Priority: 28.04.2022 CN 202210462965
(71) Applicant: Huawei Technologies Co., Ltd., Shenzhen, Guangdong 518129 (CN)
(72) Inventor: YANG, Tong, Shenzhen, Guangdong 518129 (CN); ZHANG, Yanan, Shenzhen, Guangdong 518129 (CN); FENG, Yu, Shenzhen, Guangdong 518129 (CN); SONG, Lang, Shenzhen, Guangdong 518129 (CN)
(74) Representative: Pfenning, Meinig & Partner mbB
(86) International application number: PCT/CN2023/090113
(87) International publication number: WO 2023/207854

(57) **Abstract**

An application window display method and an electronic device are provided, and relate to the field of electronic technologies, to implement quick switching between different display states of an application window, so as to improve user operation convenience. In the solutions, the electronic device displays an application window in a floating window state, where the application window includes a first control used to move the application window (S1101). In response to a first sliding operation starting from the first control, the electronic device may move the application window along a sliding track of the first sliding operation, where the first sliding operation is a first movement in a first direction (S1102). The electronic device may display the application window in a full-screen state in response to a first lifting operation after the first movement, where before displaying the application window in the full-screen state, the electronic device further continues to move the application window in the first direction in response to the first lifting operation after the first movement, where a window size of the application window gradually increases in a moving process until the application window is in the full-screen state (S 1103).

## Description

This application claims priority to Chinese Patent Application No. 202210462965.7, filed with the China National Intellectual Property Administration on April 28, 2022 and entitled "APPLICATION WINDOW DISPLAY METHOD AND ELECTRONIC DEVICE", which is incorporated herein by reference in its entirety.

### TECHNICAL FIELD

Embodiments of this application relate to the field of electronic technologies, and in particular, to an application window display method and an electronic device.

### BACKGROUND

With continuous development of electronic devices, various applications (applications, APPs), such as an instant messaging application, a network browsing application, and a music player application, may be installed on the electronic devices to meet requirements of people in daily life and work. In addition, as a screen of an electronic device continuously increases, display states that can be supported by an application on the electronic device gradually become diversified, for example, a full-screen state, a floating window state, and a minimization state, to provide a user with richer information and better user experience.

However, these display states of the application are currently triggered in scattered and separated gesture interaction manners, and these gesture interaction manners are usually different on different types of electronic devices. Consequently, interaction efficiency is low, and the gesture interaction manners are not easily learned and remembered by the user.

### SUMMARY

This application provides an application window display method and an electronic device, to implement quick switching between different display states of an application window, so as to improve user operation convenience.

To achieve the foregoing objectives, the following technical solutions are used in this application.

According to a first aspect, this application provides an application window display method, and the method may be applied to an electronic device. The application window display method includes: displaying an application window in a floating window state, where the application window includes a first control used to move the application window; in response to a first sliding operation starting from the first control, moving the application window along a sliding track of the first sliding operation, where the first sliding operation is a first movement in a first direction; and displaying the application window in a full-screen state in response to a first lifting operation after the first movement. Before the displaying the application window in a full-screen state, the method further includes: continuing to move the application window in the first direction in response to the first lifting operation after the first movement, where a window size of the application window gradually increases in a moving process until the application window is in the full-screen state.

According to the solutions provided in the first aspect, when displaying the application window in the floating window state, the electronic device may trigger, by detecting a first sliding gesture of a user performed on the first control on the application window, quick switching of the application window from the floating window state to the full-screen state. In this way, the user may directly switch, on the application window in the floating window state, the application window from the floating window state to the full-screen state by performing only a sliding operation. The operation is very convenient. In addition, because a hot zone corresponding to the sliding operation is large, an accidental touch is not likely to occur. This greatly improves interaction efficiency. In addition, when detecting that the first sliding gesture ends, the electronic device may move the application window in a sliding direction of the first sliding gesture. In this way, when a finger of the user ends sliding, that is, the finger leaves the screen, the application window may move in a direction intended by the user. This reflects inertial movement effect of the application window under control of a user operation, and improves operation flexibility and object simulation effect of the application window. In addition, the user may alternatively determine, by observing whether the movement direction of the application window is a direction actually intended by the user, whether the electronic device is ready to identify the sliding direction of the sliding operation. Therefore, when subsequently observing that the application window does not move toward the direction actually intended by the user, the user can optimize the sliding operation of the user or optimize a method for identifying the sliding direction by the electronic device.

In a possible implementation, the application window display method may further include: in response to a second sliding operation starting from the first control, moving the application window along a sliding track of the second sliding operation, where the second sliding operation is a second movement in a second direction; and displaying the application window in a minimization state in response to a first lifting operation after the second movement. Before the displaying the application window in a minimization state, the method further includes: continuing to move the application window in the second direction in response to the first lifting operation after the second movement, where the window size of the application window gradually decreases in a moving process until the application window is in the minimization state. In this way, the electronic device may trigger, by detecting a second sliding gesture of the user performed on the first control on the application window, quick switching of the application window from the floating window state to the minimization state.

In a possible implementation, the application window display method may further include: in response to a third sliding operation starting from the first control, moving the application window along a sliding track of the third sliding operation, where the third sliding operation is a third movement in a third direction; and closing the application window in response to a first lifting operation after the third movement. Before the closing the application window, the method further includes: continuing to move the application window in the third direction in response to the first lifting operation after the third movement, where the window size of the application window gradually decreases in a moving process until the application window is closed. In this way, the electronic device may trigger, by detecting a third sliding gesture of the user performed on the first control on the application window, quick switching of the application window from the floating window state to an application closing state.

In a possible implementation, the application window display method may further include: determining, based on a sliding angle of the first sliding operation and an angle range corresponding to a preset sliding direction, that a sliding direction of the first sliding operation is the first direction; or determining, based on a sliding angle of the second sliding operation and an angle range corresponding to a preset sliding direction, that a sliding direction of the second sliding operation is the second direction; or determining, based on a sliding angle of the third sliding operation and an angle range corresponding to a preset sliding direction, that a sliding direction of the third sliding operation is the third direction. In this way, an angle range of each sliding direction is set, so that accuracy of identifying the sliding direction by the electronic device can be improved, and the identified sliding direction is closer to a real intention of the user.

In a possible implementation, before the continuing to move the application window in the first direction, the method further includes: detecting that a sliding parameter of the first sliding operation meets a first target condition, where the sliding parameter includes at least one of a sliding speed, a sliding acceleration, a sliding distance, and a sliding time. Before the continuing to move the application window in the second direction, the method further includes: detecting that a sliding parameter of the second sliding operation meets a second target condition, where the sliding parameter includes at least one of a sliding speed, a sliding acceleration, a sliding distance, and a sliding time. Before the continuing to move the application window in the third direction, the method further includes: detecting that a sliding parameter of the third sliding operation meets a third target condition, where the sliding parameter includes at least one of a sliding speed, a sliding acceleration, a sliding distance, and a sliding time. In this way, the electronic device may determine, by using the target condition that the sliding parameter needs to meet, whether the detected sliding operation can successfully trigger switching of a display state of the application window. This improves accuracy of identifying the sliding operation by the electronic device, and reduces an accidental response probability of the electronic device.

In a possible implementation, a screen of the electronic device may be divided into at least two areas, and a corresponding target condition is allocated to each area. The detecting that a sliding parameter of the first sliding operation meets a first target condition includes: detecting that the sliding parameter of the first sliding operation meets the first target condition corresponding to a first area, where the first area is an area that is in the at least two areas and in which the first sliding operation is performed. The detecting that a sliding parameter of the second sliding operation meets a second target condition includes: detecting that the sliding parameter of the second sliding operation meets the second target condition corresponding to a second area, where the second area is an area that is in the at least two areas and in which the second sliding operation is performed. The detecting that a sliding parameter of the third sliding operation meets a third target condition: detecting that the sliding parameter of the third sliding operation meets the third target condition corresponding to a third area, where the third area is an area that is in the at least two areas and in which the third sliding operation is performed.

Because sliding difficulty at different locations on the screen of the electronic device is different, in this method, different target conditions are set for different locations on the screen of the electronic device, so that successful triggering of sliding operations in different areas may be determined by using adapted target conditions. This ensures consistent triggering experience at all locations on the screen of the electronic device, avoids a case in which inconsistent triggering experience at different locations is caused by determining successful triggering by using a same target condition, and improves user operation experience.

In a possible implementation, the method may further include: determining the first area in the at least two areas based on a contact point location of the first sliding operation; or determining the second area in the at least two areas based on a contact point location of the second sliding operation; or determining the third area in the at least two areas based on a contact point location of the third sliding operation. In this way, the electronic device may accurately and directly identify, by using touch point coordinates in a case in which the finger slides, a screen area in which the sliding operation is performed.

In a possible implementation, the method may further include: determining, from the at least two areas based on a display location of the application window, the area in which the sliding operation is performed. When the finger of the user touches the application window, the touch point coordinates of the finger definitely fall within a display range of the application window. Therefore, the electronic device may alternatively indirectly determine, based on the display location of the application window, the screen area in which the sliding operation is performed, and does not need to determine, in real time, an area in which an operation is performed when the user performs the operation. This improves a response speed of the electronic device.

In a possible implementation, the method may further include: determining, based on a screen status of the electronic device, the at least two areas obtained by dividing the screen and the target condition corresponding to each area. For the electronic device in different screen states, distribution of finger sliding difficult areas on the screen is also different. Therefore, in this method, different screen area division is performed on the electronic device in different screen states, so that a correspondence between an area and a target condition may be adapted to different screen states. This ensures consistent trigger experience at all the locations on the screen of the electronic device in different screen states, and improves user operation experience.

In a possible implementation, the screen status may include a landscape state or a portrait state. In this way, according to this method, trigger experience at each location on the screen of the electronic device in the landscape state can be consistent with that of the electronic device in the portrait state. This improves user operation experience.

In a possible implementation, the electronic device may include a foldable screen, and the screen status may include a folded state or an unfolded state. In this way, according to this method, trigger experience at each location on the screen of the electronic device in the folded state can be consistent with that of the electronic device in the unfolded state. This improves user operation experience.

In a possible implementation, the method may further include: displaying the application window in the floating window state at a location after the first movement in response to a second lifting operation after the first movement; or displaying the application window in the floating window state at a location after the second movement in response to a second lifting operation after the second movement; or displaying the application window in the floating window state at a location after the third movement in response to a second lifting operation after the third movement. In this way, only a window location is moved when an operation is not a quick sliding operation.

In a possible implementation, the first lifting operation indicates that a lifting operation detected after a sliding operation ends occurs in a first time period, and the second lifting operation indicates that a lifting operation detected after a sliding operation ends occurs in a second time period, where the first time period is less than the second time period. Therefore, whether the sliding operation is quick sliding or dragging and sliding may be determined based on an occurrence speed of the lifting operation.

In a possible implementation, the continuing to move the application window in the first direction includes: if the sliding track of the sliding operation does not point to the first direction, moving the application window along a first specified route, where the first specified route points to the first direction. In this way, when the application window cannot move along the sliding track of the finger of the user in the direction intended by the user, the electronic device may set the specified route along which the application window can move in the direction intended by the user, so that the application window can move along the specified route, and the user can observe effect of an adsorption movement of the application window in the direction intended by the user. This improves operation flexibility and object simulation effect of the application window.

In another possible implementation, the continuing to move the application window in the first direction includes: if the sliding track of the sliding operation points to the first direction, moving the application window along an extension line of the sliding track. In this way, when the application window can move in the direction intended by the user along the sliding track of the finger of the user, the electronic device can directly inertially move the application window along the extension line of the sliding track, so that the user can observe effect of an inertial movement of the application window in the direction intended by the user. This improves operation flexibility and object simulation effect of the application window.

In a possible implementation, before the continuing to move the application window in the third direction, the method further includes: displaying a close icon at a screen edge corresponding to the third direction. The continuing to move the application window in the third direction includes: moving the application window along a second specified route, where the second specified route points to the close icon. In this way, when the user intends to switch the display state of the application window to the application closing state, the electronic device may display the close icon at the target edge of the screen. In addition, when the application window cannot move to the close icon along the sliding track of the finger of the user, the electronic device may set a specified route for moving to the close icon, so that the application window can move along the specified route, and the user can observe effect of an adsorption movement of the application window to the close icon. This improves operation flexibility and object simulation effect of the application window.

In a possible implementation, the displaying the application window in a minimization state may include: displaying the application window in a mini floating window state; or displaying a floating icon of the application window. In this way, a plurality of styles of minimization can be implemented.

In a possible implementation, the method may further include: displaying the application window in a split-screen state, where a second application window is displayed in the first area, a third application window is displayed in the second area, and the second application window includes a second control; moving the second application window along a sliding track of a sliding operation in response to the sliding operation starting from the second control, where the sliding operation is a target movement in a target direction; and in response to a first lifting operation after the target movement, displaying the second application window in a second display state corresponding to the target direction. Before the mobile phone displays the second application window in the second display state, the mobile phone continues to move the second application window in the target direction in response to the first lifting operation after the target movement, and displays the second application window in a transition display state in a moving process. In this way, the method can also implement quick switching of the application from the split-screen state to another display state.

In a possible implementation, the method may further include: displaying the application window in a multi-task window state, where the application window includes a third control used to move the application window; in response to a sliding operation starting from the third control, moving the application window along a sliding track of the sliding operation, where the sliding operation is a target movement in a target direction; and in response to a first lifting operation after the target movement, displaying the application window in a second display state corresponding to the target direction. Before the mobile phone displays the application window in the second display state, the mobile phone continues to move the application window in the target direction in response to the first lifting operation after the target movement, and displays the application window in a transition display state in a moving process. In this way, the method can also implement quick switching of the application from the multi-task window state to another display state.

According to a second aspect, this application provides an electronic device, including a display unit. The display unit is configured to display an application window in a floating window state, where the application window includes a first control used to move the application window. The display unit is further configured to: in response to a first sliding operation starting from the first control, move the application window along a sliding track of the first sliding operation, where the first sliding operation is a first movement in a first direction; and display the application window in a full-screen state in response to a first lifting operation after the first movement. The display unit is further configured to continue to move the application window in the first direction in response to the first lifting operation after the first movement, where a window size of the application window gradually increases in a moving process until the application window is in the full-screen state.

In a possible implementation, the display unit is further configured to: in response to a second sliding operation starting from the first control, move the application window along a sliding track of the second sliding operation, where the second sliding operation is a second movement in a second direction; display the application window in a minimization state in response to a first lifting operation after a second movement; and continue to move the application window in the second direction in response to the first lifting operation after the second movement, where the window size of the application window gradually decreases in a moving process until the application window is in the minimization state. In this way, the electronic device may trigger, by detecting a second sliding gesture of the user performed on the first control on the application window, quick switching of the application window from the floating window state to the minimization state.

In a possible implementation, the display unit is further configured to: in response to a third sliding operation starting from the first control, move the application window along a sliding track of the third sliding operation, where the third sliding operation is a third movement in a third direction; close the application window in response to a first lifting operation after the third movement; and continue to move the application window in the third direction in response to the first lifting operation after the third movement, where the window size of the application window gradually decreases in a moving process until the application window is closed. In this way, the electronic device may trigger, by detecting a third sliding gesture of the user performed on the first control on the application window, quick switching of the application window from the floating window state to an application closing state.

In a possible implementation, the electronic device includes a processing unit, configured to: determine, based on a sliding angle of the first sliding operation and an angle range corresponding to a preset sliding direction, that a sliding direction of the first sliding operation is the first direction; or determine, based on a sliding angle of the second sliding operation and an angle range corresponding to a preset sliding direction, that a sliding direction of the second sliding operation is the second direction; or determine, based on a sliding angle of the third sliding operation and an angle range corresponding to a preset sliding direction, that a sliding direction of the third sliding operation is the third direction. In this way, an angle range of each sliding direction is set, so that accuracy of identifying the sliding direction by the electronic device can be improved, and the identified sliding direction is closer to a real intention of the user.

In a possible implementation, the electronic device may further include a detection unit. The detection unit may be configured to detect that a sliding parameter of the first sliding operation meets a first target condition, where the sliding parameter includes at least one of a sliding speed, a sliding acceleration, a sliding distance, and a sliding time. The detection unit may be further configured to detect that a sliding parameter of the second sliding operation meets a second target condition, where the sliding parameter includes at least one of a sliding speed, a sliding acceleration, a sliding distance, and a sliding time. The detection unit may be further configured to detect that a sliding parameter of the third sliding operation meets a target condition, where the sliding parameter includes at least one of a sliding speed, a sliding acceleration, a sliding distance, and a sliding time. In this way, the electronic device may determine, by using the third target condition that the sliding parameter needs to meet, whether the detected sliding operation can successfully trigger switching of a display state of the application window. This improves accuracy of identifying the sliding operation by the electronic device, and reduces an accidental response probability of the electronic device.

In a possible implementation, a screen of the electronic device may be divided into at least two areas, and a corresponding target condition is allocated to each area. The detection unit may be further configured to detect that the sliding parameter of the first sliding operation meets the first target condition corresponding to a first area, where the first area is an area that is in the at least two areas and in which the first sliding operation is performed. The detection unit may be further configured to detect that the sliding parameter of the second sliding operation meets the second target condition corresponding to a second area, where the second area is an area that is in the at least two areas and in which the second sliding operation is performed. The detection unit may be further configured to detect that the sliding parameter of the third sliding operation meets the third target condition corresponding to a third area, where the third area is an area that is in the at least two areas and in which the third sliding operation is performed.

Because sliding difficulty at different locations on the screen of the electronic device is different, in this method, different target conditions are set for different locations on the screen of the electronic device, so that successful triggering of sliding operations in different areas may be determined by using adapted target conditions. This ensures consistent triggering experience at all locations on the screen of the electronic device, avoids a case in which inconsistent triggering experience at different locations is caused by determining successful triggering by using a same target condition, and improves user operation experience.

In a possible implementation, the electronic device may further include a positioning unit. The positioning unit may be configured to: determine the first area in the at least two areas based on a contact point location of the first sliding operation; or determine the second area in the at least two areas based on a contact point location of the second sliding operation; or determine the third area in the at least two areas based on a contact point location of the third sliding operation. In this way, the electronic device may accurately and directly identify, by using touch point coordinates in a case in which the finger slides, a screen area in which the sliding operation is performed.

In a possible implementation, the positioning unit may be further configured to determine, from the at least two areas based on a display location of the application window, the area in which the sliding operation is performed. When the finger of the user touches the application window, the touch point coordinates of the finger definitely fall within a display range of the application window. Therefore, the electronic device may alternatively indirectly determine, based on the display location of the application window, the screen area in which the sliding operation is performed, and does not need to determine, in real time, an area in which an operation is performed when the user performs the operation. This improves a response speed of the electronic device.

In a possible implementation, the electronic device may further include a determining unit. The determining unit may be configured to determine, based on a screen status of the electronic device, the at least two areas obtained by dividing the screen and the target condition corresponding to each area. For the electronic device in different screen states, distribution of finger sliding difficult areas on the screen is also different. Therefore, in this method, different screen area division is performed on the electronic device in different screen states, so that a correspondence between an area and a target condition may be adapted to different screen states. This ensures consistent trigger experience at all the locations on the screen of the electronic device in different screen states, and improves user operation experience.

In a possible implementation, the screen status in the determining unit may include a landscape state or a portrait state. In this way, according to this method, trigger experience at each location on the screen of the electronic device in the landscape state can be consistent with that of the electronic device in the portrait state. This improves user operation experience.

In a possible implementation, the electronic device may include a foldable screen, and the screen status in the determining unit may include a folded state or an unfolded state. In this way, according to this method, trigger experience at each location on the screen of the electronic device in the folded state can be consistent with that of the electronic device in the unfolded state. This improves user operation experience.

In a possible implementation, the display unit may be further configured to: display, in the floating window state, the application window at a location after the first movement in response to a second lifting operation after the first movement; or display, in the floating window state, the application window at a location after the second movement in response to a second lifting operation after the second movement; or display, in the floating window state, the application window at a location after the third movement in response to a second lifting operation after the third movement. In this way, only a window location is moved when an operation is not a quick sliding operation.

In a possible implementation, the first lifting operation indicates that a lifting operation detected after a sliding operation ends occurs in a first time period, and the second lifting operation indicates that a lifting operation detected after a sliding operation ends occurs in a second time period, where the first time period is less than the second time period. Therefore, whether the sliding operation is quick sliding or dragging and sliding may be determined based on an occurrence speed of the lifting operation.

In a possible implementation, the display unit may be further configured to move the application window along a first specified route if the sliding track of the sliding operation does not point to the first direction, where the first specified route points to the first direction. In this way, when the application window cannot move along the sliding track of the finger of the user in the direction intended by the user, the electronic device may set the specified route along which the application window can move in the direction intended by the user, so that the application window can move along the specified route, and the user can observe effect of an adsorption movement of the application window in the direction intended by the user. This improves operation flexibility and object simulation effect of the application window.

In another possible implementation, the display unit may be further configured to move the application window along an extension line of the sliding track if the sliding track of the sliding operation points to the first direction. In this way, when the application window can move in the direction intended by the user along the sliding track of the finger of the user, the electronic device can directly inertially move the application window along the extension line of the sliding track, so that the user can observe effect of an inertial movement of the application window in the direction intended by the user. This improves operation flexibility and object simulation effect of the application window.

In a possible implementation, the display unit may be further configured to display a close icon at a screen edge corresponding to the third direction. The display unit may be further configured to move the application window along a second specified route, where the second specified route points to the close icon. In this way, when the user intends to switch the display state of the application window to the application closing state, the electronic device may display the close icon at the target edge of the screen. In addition, when the application window cannot move to the close icon along the sliding track of the finger of the user, the electronic device may set a specified route for moving to the close icon, so that the application window can move along the specified route, and the user can observe effect of an adsorption movement of the application window to the close icon. This improves operation flexibility and object simulation effect of the application window.

In a possible implementation, the display unit may be further configured to move the application window along the second specified route, where the second specified route points to the close icon. In this way, when the user intends to switch the display state of the application window to the application closing state, the electronic device may display the close icon at the target edge of the screen. In addition, when the application window cannot move to the close icon along the sliding track of the finger of the user, the electronic device may set a specified route for moving to the close icon, so that the application window can move along the specified route, and the user can observe effect of an adsorption movement of the application window to the close icon. This improves operation flexibility and object simulation effect of the application window.

In a possible implementation, the display unit may be further configured to: display the application window in a mini floating window state; or display a floating icon of the application window. In this way, a plurality of styles of minimization can be implemented.

According to a third aspect, this application provides an electronic device, including one or more processors and one or more memories. The one or more memories are coupled to the one or more processors. The one or more memories are configured to store computer program code. The computer program code includes computer instructions. When the one or more processors execute the computer instructions, the electronic device is enabled to perform the application window display method according to any possible implementation of the first aspect.

According to a fourth aspect, this application provides an application window display apparatus. The apparatus is included in an electronic device, and the apparatus has a function of implementing behavior of the electronic device according to any method in the first aspect or the possible implementations of the first aspect. The function may be implemented by using hardware, or may be implemented by hardware executing corresponding software. The hardware or the software includes one or more modules or units corresponding to the foregoing function.

According to a fifth aspect, this application provides a chip system, and the chip system is used in an electronic device. The chip system includes one or more interface circuits and one or more processors. The interface circuit and the processor are connected through a line. The interface circuit is configured to: receive a signal from the memory of the electronic device, and send the signal to the processor. The signal includes computer instructions stored in the memory. When the processor executes the computer instructions, the electronic device performs the application window display method according to any possible implementation of the first aspect.

According to a sixth aspect, this application provides a computer storage medium, including computer instructions. When the computer instructions are runs on an electronic device, the electronic device is enabled to perform the application window display method according to any possible implementation of the first aspect.

According to a seventh aspect, this application provides a computer program product. When the computer program product runs on a computer, the computer is enabled to perform the application window display method according to any possible implementation of the first aspect.

It may be understood that, for beneficial effect that can be achieved by the electronic device according to any one of the second aspect and the possible implementations of the second aspect, the electronic device according to the third aspect, the apparatus according to the fourth aspect, the chip system according to the fifth aspect, the computer storage medium according to the sixth aspect, and the computer program product according to the seventh aspect, refer to the beneficial effect in any one of the first aspect and the possible implementations of the first aspect. Details are not described herein again.

### BRIEF DESCRIPTION OF DRAWINGS

FIG. 1 is a diagram of a form of a foldable screen according to an embodiment of this application;
FIG. 2 is a diagram of a form of another foldable screen according to an embodiment of this application;
FIG. 3 is a diagram of a form of a non-foldable screen according to an embodiment of this application;
FIG. 4 is a diagram of a hardware structure of an electronic device according to an embodiment of this application;
FIG. 5 is a diagram of an example of a software architecture of an electronic device according to an embodiment of this application;
FIG. 6 is a diagram of an example of displaying an application window by a mobile phone according to an embodiment of this application;
FIG. 7(a) to FIG. 7(h) are a diagram 1 of an example of displaying an application window by a mobile phone according to an embodiment of this application;
FIG. 8 is a diagram 2 of an example of displaying an application window by a mobile phone according to an embodiment of this application;
FIG. 9(a) to FIG. 9(f) are a diagram 3 of an example of displaying an application window by a mobile phone according to an embodiment of this application;
FIG. 10(a) to FIG. 10(f) are a diagram 4 of an example of displaying an application window by a mobile phone according to an embodiment of this application;
FIG. 11 is a method flowchart of an application window display method according to an embodiment of this application;
FIG. 12 is a diagram 5 of an example of displaying an application window by a mobile phone according to an embodiment of this application;
FIG. 13 is a diagram 6 of an example of displaying an application window by a mobile phone according to an embodiment of this application;
FIG. 14 is a diagram 7 of an example of displaying an application window by a mobile phone according to an embodiment of this application;
FIG. 15 is a diagram 8 of an example of displaying an application window by a mobile phone according to an embodiment of this application;
FIG. 16 is a diagram 9 of an example of displaying an application window by a mobile phone according to an embodiment of this application;
FIG. 17 is a diagram 10 of an example of displaying an application window by a mobile phone according to an embodiment of this application;
FIG. 18 is a diagram of an example of a sliding direction according to an embodiment of this application;
FIG. 19 is another diagram of an example of a sliding direction according to an embodiment of this application;
FIG. 20 is a diagram 11 of an example of displaying an application window by a mobile phone according to an embodiment of this application;
FIG. 21 is another diagram of an example of a sliding direction according to an embodiment of this application;
FIG. 22 is another diagram of an example of a sliding direction according to an embodiment of this application;
FIG. 23 is a diagram 12 of an example of displaying an application window by a mobile phone according to an embodiment of this application;
FIG. 24 is a method flowchart of another application window display method according to an embodiment of this application;
FIG. 25 is a diagram 13 of an example of displaying an application window by a mobile phone according to an embodiment of this application;
FIG. 26 is a diagram 14 of an example of displaying an application window by a mobile phone according to an embodiment of this application;
FIG. 27 is a method flowchart of another application window display method according to an embodiment of this application;
FIG. 28(a) to FIG. 28(d) are a diagram 15 of an example of displaying an application window by a mobile phone according to an embodiment of this application;
FIG. 29(a) to FIG. 29(d) are a diagram 16 of an example of displaying an application window by a mobile phone according to an embodiment of this application;
FIG. 30(a) and FIG. 30(b) are a diagram of a trigger setting of a display state according to an embodiment of this application;
FIG. 31(a) and FIG. 31(b) are a diagram 17 of an example of displaying an application window by a mobile phone according to an embodiment of this application;
FIG. 32(a) and FIG. 32(b) are a diagram 18 of an example of displaying an application window by a mobile phone according to an embodiment of this application;
FIG. 33(a) and FIG. 33(b) are a diagram 19 of an example of displaying an application window by a mobile phone according to an embodiment of this application;
FIG. 34(a) and FIG. 34(b) are a diagram 20 of an example of displaying an application window by a mobile phone according to an embodiment of this application;
FIG. 35 is a method flowchart of another application window display method according to an embodiment of this application;
FIG. 36 is a diagram 21 of an example of displaying an application window by a mobile phone according to an embodiment of this application;
FIG. 37 is a diagram 22 of an example of displaying an application window by a mobile phone according to an embodiment of this application;
FIG. 38 is a diagram of another trigger setting of a display state according to an embodiment of this application;
FIG. 39 is a diagram of another trigger setting of a display state according to an embodiment of this application;
FIG. 40 is a method flowchart of another application window display method according to an embodiment of this application;
FIG. 41 is a diagram of an example of area division of a screen of a mobile phone according to an embodiment of this application;
FIG. 42 is another diagram of an example of area division of a screen of a mobile phone according to an embodiment of this application;
FIG. 43 is a diagram 23 of an example of displaying an application window by a mobile phone according to an embodiment of this application; and
FIG. 44 is a diagram of a structure of an electronic device according to an embodiment of this application.

### DESCRIPTION OF EMBODIMENTS

The following describes the technical solutions in embodiments of this application with reference to the accompanying drawings in embodiments of this application. The following terms "first" and "second" are merely intended for a purpose of descriptions, and shall not be understood as an indication or implication of relative importance or implicit indication of a quantity of indicated technical features. Therefore, a feature limited by "first" or "second" may explicitly or implicitly include one or more features. In descriptions of embodiments, unless otherwise specified, "a plurality of" means two or more.

An embodiment of this application provides an application window display method. The method may be applied to an electronic device. The electronic device may be a foldable electronic device, or may be a non-foldable electronic device.

The foldable electronic device may be an electronic device that includes a foldable screen. The foldable screen may be folded to form at least two screens. For example, the foldable screen may be folded along a folding edge or a folding shaft to form a first screen and a second screen. That is, the at least two screens include the first screen and the second screen.

Foldable screens in embodiments of this application may be classified into two types. One type is a foldable screen that is folded outward (briefly referred to as an outward foldable screen), and the other type is a foldable screen that is folded inward (briefly referred to as an inward foldable screen). For example, the foldable screen may be folded to form a first screen and a second screen. After the outward foldable screen is folded, the first screen and the second screen are back to back. After the inward foldable screen is folded, the first screen and the second screen are face to face.

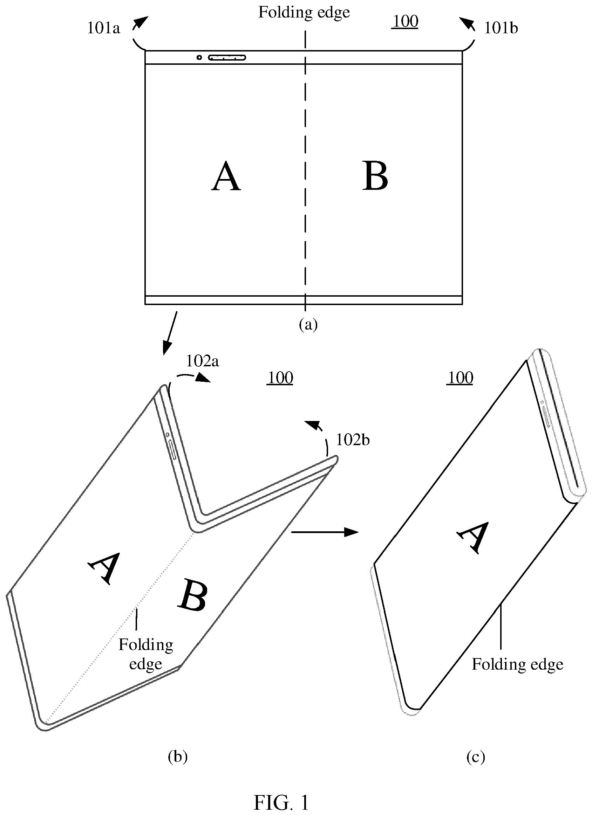

For example, FIG. 1 is a diagram of a product form of an electronic device 100 including an outward foldable screen according to an embodiment of this application. (a) in FIG. 1 is a diagram of a form in which the outward foldable screen is fully unfolded. The outward foldable screen may be folded along a folding edge in directions 101a and 101b shown in (a) in FIG. 1, to form a screen A (namely, a first screen) and a screen B (namely, a second screen) shown in (b) in FIG. 1. The outward foldable screen may continue to be folded along the folding edge in directions 102a and 102b shown in (b) in FIG. 1, to form a valgus foldable screen in a folded state shown in (c) in FIG. 1. As shown in (c) in FIG. 1, after the foldable screen of the electronic device 100 is fully folded, the screen A and the screen B are back to back, and are visible to a user.

It may be understood that, for the electronic device having the outward foldable screen, when the foldable screen is in a folded state, an application window may be displayed on the first screen or the second screen; or when the foldable screen is in an unfolded state, an application window may be displayed on the first screen and the second screen. For descriptions of the unfolded state and the folded state of the foldable screen, refer to descriptions in the following embodiments. Details are not described herein.

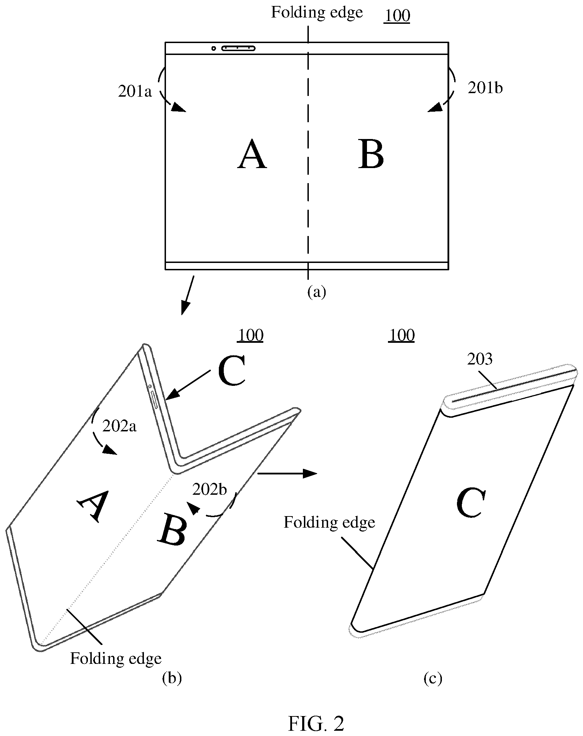

For another example, FIG. 2 is a diagram of a product form of an electronic device 100 including an inward foldable screen according to an embodiment of this application. (a) in FIG. 2 is a diagram of a form in which the inward foldable screen is fully unfolded. The inward foldable screen may be folded along a folding edge in directions 201a and 201b shown in (a) in FIG. 2, to form a screen A (namely, a first screen) and a screen B (namely, a second screen) shown in (b) in FIG. 2. The inward foldable screen may continue to be folded along the folding edge in directions 202a and 202b shown in (b) in FIG. 2, to form a valgus foldable screen in a folded state shown in (c) in FIG. 2. As shown in (c) in FIG. 2, after the foldable screen of the electronic device 100 is fully folded, the screen A and the screen B are face to face, and are invisible to the user. After the inward foldable screen is completely folded, the screen A and the screen B are face to face, and a black line 203 shown in (c) in FIG. 2 is a line on a contact surface between the screen A and the screen B.

It should be noted that, a display may be further disposed on a back of the first screen or the second screen of the inward foldable screen provided in embodiments of this application, and may be referred to as a third screen. For example, as shown in (b) in FIG. 2, a screen C (namely, the third screen) may be disposed on the back of the screen A (namely, the first screen). As shown in (c) in FIG. 2, after the inward foldable screen is completely folded, the screen C and the screen C are back to back, and is visible to the user. It may be understood that, for the electronic device having such an inward foldable screen, when the foldable screen is in a folded state, an application window may be displayed on the third screen; or when the foldable screen is in an unfolded state, an application window may be displayed on the first screen and the second screen.

Generally, a value range of an included angle α between the first screen and the second screen of the foldable screen (including the inward foldable screen and the outward foldable screen) is [0°, 180°]. In embodiments of this application, if α ∈ [0°, P], the electronic device may determine that the foldable screen is in the folded state; or if α ∈ (P, 180°], the electronic device may determine that the foldable screen is in the unfolded state. Alternatively, if α ∈ [0°, P), the electronic device may determine that the foldable screen is in the folded state; or if α ∈ [P, 180°], the electronic device may determine that the foldable screen is in the unfolded state. P is a preset angle threshold. P may be determined based on habits of using foldable screens by a large quantity of users, or P may be set by a user on the electronic device.

In some embodiments, based on usage habits of most users, when the included angle α between the first screen and the second screen is greater than 90°, there is a high possibility that a user wants to use the first screen and the second screen as a whole (that is, as a complete display). Therefore, the preset angle threshold P in embodiments of this application may be greater than 90°. A value range of the preset angle threshold P may be (90°, 180°). For example, the preset angle threshold P may be 100°, 120°, 135°, 140°, 145°, or 150°.

It should be noted that, in embodiments of this application, at least two screens formed by folding the foldable screen (including the inward foldable screen and the outward foldable screen) may be a plurality of screens that exist independently, or may be a complete screen of an integrated structure that is folded to form at least two parts.

For example, the foldable screen may be a flexible foldable screen. The flexible foldable screen includes a folding edge made of a flexible material. Part or all of the flexible foldable screen is made of a flexible material. At least two screens formed by folding the flexible foldable screen are a complete screen of an integrated structure that is folded to form at least two parts.

For another example, the foldable screen may be a multi-screen foldable screen. The multi-screen foldable screen may include a plurality of (two or more) screens. The plurality of screens are a plurality of separate displays. The plurality of screens may be sequentially connected by using a folding shaft. Each screen may rotate around a folding shaft connected to the screen, implementing folding of the multi-screen foldable screen.

In FIG. 1 and FIG. 2, an example in which the foldable screen is the flexible foldable screen is used to describe the foldable screen in embodiments of this application. In addition, in the following embodiments of this application, an example in which the foldable screen is the flexible foldable screen is also used to describe the application window display method provided in embodiments of this application.

A non-foldable electronic device may be an electronic device with a display that is a non-foldable screen. The non-foldable screen may be a non-foldable display, or may be a flat screen, or may be a curved screen.

In embodiments of this application, the non-foldable electronic device may include one display, or may include N independent displays, where N is a positive integer greater than 1. It may be understood that, for the non-foldable electronic device having only one display, an application window may be displayed on the display. For a non-foldable electronic device having N displays, an application window may be displayed on at least one display of the N displays.

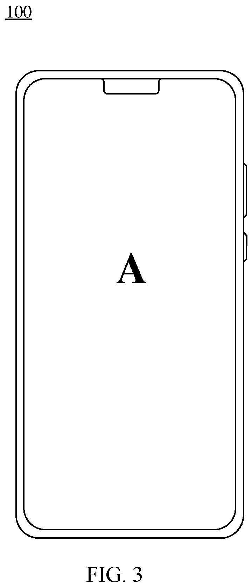

For example, FIG. 3 is a diagram of a product form of a non-foldable electronic device 100 according to an embodiment of this application. As shown in FIG. 3, the non-foldable electronic device 100 includes only one screen A, and the screen A is a non-foldable flat screen. The non-foldable electronic device 100 may display an application window on the screen A.

For example, the electronic device in embodiments of this application may be a mobile phone, a tablet computer, a desktop computer, a laptop computer, a handheld computer, a notebook computer, an ultra-mobile personal computer (ultra-mobile personal computer, UMPC), a netbook, or a device including a display, for example, a cellular phone, a personal digital assistant (personal digital assistant, PDA), or an augmented reality (augmented reality, AR) or virtual reality (virtual reality, VR) device. A specific form of the electronic device is not specifically limited in embodiments of this application.

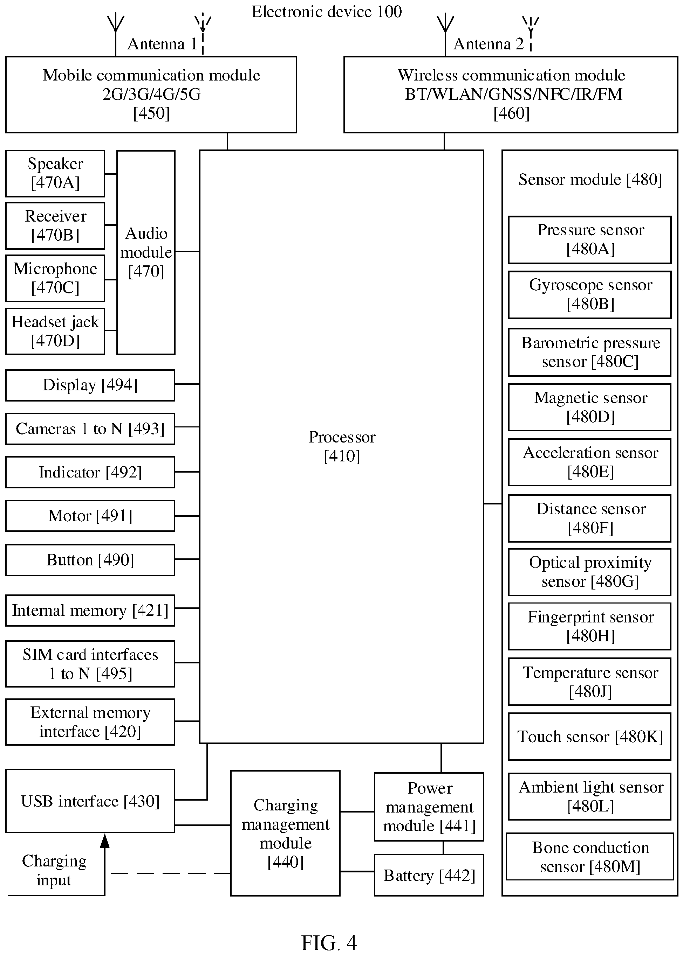

FIG. 4 is a diagram of a structure of an electronic device 100 according to an embodiment of this application. As shown in FIG. 4, the electronic device 100 may include a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a button 490, a motor 491, an indicator 492, cameras 493, a display 494, subscriber identity module (subscriber identity module, SIM) card interfaces 495, and the like. The sensor module 480 may include a pressure sensor 480A, a gyroscope sensor 480B, a barometric pressure sensor 480C, a magnetic sensor 480D, an acceleration sensor 480E, a distance sensor 480F, an optical proximity sensor 480G, a fingerprint sensor 480H, a temperature sensor 480J, a touch sensor 480K, an ambient light sensor 480L, a bone conduction sensor 480M, and the like.

It may be understood that the structure shown in this embodiment constitutes no specific limitation on the electronic device 100. In some other embodiments, the electronic device 100 may include more or fewer components than those shown in the figure, or some components may be combined, or some components may be split, or different component arrangements may be used. The components shown in the figure may be implemented by using hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

The controller may be a nerve center and a command center of the electronic device 100. The controller may generate an operation control signal based on instruction operation code and a time sequence signal, to complete control of instruction fetch and instruction execution.

A memory may be disposed in the processor 410, and is configured to store instructions and data. In some embodiments, the memory in the processor 410 is a cache memory. The memory may store an instruction or data that has just been used or is cyclically used by the processor 410. If the processor 410 needs to use the instruction or the data again, the processor 410 may directly invoke the instruction or the data from the memory. Therefore, repeated access is avoided, a waiting time of the processor 410 is reduced, and system efficiency is improved.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in embodiments is merely used as an example for description, and does not constitute a limitation on a structure of the electronic device 100. In some other embodiments, the electronic device 100 may alternatively use an interface connection manner different from that in the foregoing embodiment, or use a combination of a plurality of interface connection manners.

The charging management module 440 is configured to receive a charging input from a charger. The charger may be a wireless charger or a wired charger. In some embodiments of wired charging, the charging management module 440 may receive a charging input from the wired charger through the USB interface 430. In some wireless charging embodiments, the charging management module 440 may receive wireless charging input through a wireless charging coil of the electronic device 100. When charging the battery 442, the charging management module 440 may further supply power to the electronic device by using the power management module 441.

The power management module 441 is configured to connect the battery 442, the charging management module 440, and the processor 410. The power management module 441 receives an input from the battery 442 and/or the charging management module 440, and supplies power to the processor 410, the internal memory 421, the external memory, the display 494, the camera 493, the wireless communication module 460, and the like. The power management module 441 may be further configured to monitor parameters such as a battery capacity, a battery cycle count, and a battery health status (electric leakage or impedance). In some other embodiments, the power management module 441 may alternatively be disposed in the processor 410. In some other embodiments, the power management module 441 and the charging management module 440 may alternatively be disposed in a same component.

A wireless communication function of the electronic device 100 may be implemented through the antenna 1, the antenna 2, the mobile communication module 450, the wireless communication module 460, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In other embodiments, the antenna may be used in combination with a tuning switch.

The mobile communication module 450 may provide a wireless communication solution that includes 2G/3G/4G/5G or the like and that is applied to the electronic device 100. The mobile communication module 450 may include at least one filter, a switch, a power amplifier, a low noise amplifier (low noise amplifier, LNA), and the like. The mobile communication module 450 may receive an electromagnetic wave through the antenna 1, perform filtering, amplification, and the like on the received electromagnetic wave, and transmit a processed electromagnetic wave to the modem processor for demodulation. The mobile communication module 450 may further amplify a signal obtained through modulation by the modem processor, and convert the signal into an electromagnetic wave through the antenna 1 for radiation. In some embodiments, at least some functional modules of the mobile communication module 450 may be disposed in the processor 410. In some embodiments, at least some functional modules of the mobile communication module 450 and at least some modules of the processor 410 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 470A, the receiver 470B, or the like), or displays an image or a video on the display 494. In some embodiments, the modem processor may be an independent component. In some other embodiments, the modem processor may be independent of the processor 410, and is disposed in a same component with the mobile communication module 450 or another functional module.

The wireless communication module 460 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 460 may be one or more components integrating at least one communication processing module. The wireless communication module 460 receives an electromagnetic wave over the antenna 2, performs frequency modulation and filtering on an electromagnetic wave signal, and sends a processed signal to the processor 410. The wireless communication module 460 may further receive a to-be-sent signal from the processor 410, perform frequency modulation and amplification on the signal, and convert the signal into an electromagnetic wave for radiation over the antenna 2.

In some embodiments, in the electronic device 100, the antenna 1 and the mobile communication module 450 are coupled, and the antenna 2 and the wireless communication module 460 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 494, the application processor, and the like. The GPU is a microprocessor for image processing, and is connected to the display 494 and the application processor. The GPU is configured to: perform mathematical and geometric computation, and render an image. The processor 410 may include one or more GPUs that execute program instructions to generate or change display information.

The display 494 is configured to display an image, a video, and the like. The display 494 is the foregoing outward foldable screen. Alternatively, the display 494 may include an inward foldable screen that can be folded to form a first screen (for example, the screen A shown in (b) in FIG. 2), a second screen (for example, the screen B shown in (b) in FIG. 2), and a third screen (for example, the screen C shown in (c) in FIG. 2). Alternatively, the display 494 is the foregoing non-foldable screen (for example, the screen A shown in FIG. 3). In some embodiments, the electronic device 100 may include one or N displays 494, where N is a positive integer greater than 1. In embodiments of this application, the display 494 may be configured to display an application window in a full-screen state, or may be configured to display an application window in a floating window state, or may be configured to display an application window in a floating bubble state.

The display 494 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flexible light-emitting diode, FLED), a mini LED, a micro LED, a micro-OLED, a quantum dot light emitting diode (quantum dot light emitting diode, QLED), or the like.

The electronic device 100 can implement a shooting function by using the ISP, the camera 493, the video codec, the GPU, the display 494, the application processor, and the like.

The ISP is configured to process data fed back by the camera 493. For example, during shooting, a shutter is pressed, and light is transmitted to a photosensitive element of the camera through a lens. The photosensitive element of the camera converts an optical signal into an electrical signal, and transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 493.

The camera 493 is configured to capture a still image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 493, where N is a positive integer greater than 1.

The digital signal processor is configured to process a digital signal. In addition to the digital image signal, the digital signal processor may further process another digital signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 420 may be configured to connect to an external memory card, for example, a micro SD card, to extend a storage capability of the electronic device 100. The external storage card communicates with the processor 410 through the external memory interface 420, to implement a data storage function. For example, files such as music and videos are stored in the external storage card.

The internal memory 421 may be configured to store computer-executable program code, and the executable program code includes instructions. The processor 410 runs the instructions stored in the internal memory 421, to perform various functional applications of the electronic device 100 and data processing. For example, in embodiments of this application, the processor 410 may execute the instructions stored in the internal memory 421, and display corresponding display content on the display 494 in response to a sliding operation performed by a user on the display 494. The internal memory 421 may include a program storage area and a data storage area. The program storage area may store an operating system, an application required by at least one function (for example, a sound playing function or an image playing function), and the like. The data storage area may store data (for example, audio data or an address book) and the like created when the electronic device 100 is used. In addition, the internal memory 421 may include a high-speed random access memory, and may further include a non-volatile memory, for example, at least one magnetic disk storage device, a flash memory, or a universal flash storage (universal flash storage, UFS).

The electronic device 100 may implement audio functions, for example, music playing and recording, by using the audio module 470, the speaker 470A, the receiver 470B, the microphone 470C, the headset jack 470D, the application processor, and the like.

The audio module 470 is configured to convert digital audio information into an analog audio signal for output, and is also configured to convert an analog audio input into a digital audio signal. The audio module 470 may further be configured to: encode and decode an audio signal. In some embodiments, the audio module 470 may be disposed in the processor 410, or some functional modules of the audio module 470 may be disposed in the processor 410. The speaker 470A, also referred to as a "loudspeaker", is configured to convert an audio electrical signal into a sound signal. The electronic device 100 may listen to music or answer a call in a hands-free mode over the speaker 470A. The receiver 470B, also referred to as an "earpiece", is configured to convert an audio electrical signal into a sound signal. When a call is answered or voice information is listened to by using the electronic device 100, the receiver 470B may be put close to a human ear to listen to a voice. The microphone 470C, also referred to as a "mike" or a "mic", is configured to convert a sound signal into an electrical signal. When making a call or sending voice information or triggering the electronic device 100 by using a voice assistant to perform some functions, the user may make a sound through a mouth by approaching the microphone 470C, and type the sound signal to the microphone 470C. At least one microphone 470C may be disposed in the electronic device 100. In some other embodiments, two microphones 470C may be disposed in the electronic device 100, to collect a sound signal and implement a noise reduction function. In some other embodiments, three, four, or more microphones 470C may alternatively be disposed in the electronic device 100, to collect a sound signal, implement noise reduction, and identify a sound source, so as to implement a directional recording function and the like.

The headset jack 470D is configured to connect to a wired headset. The headset jack 470D may be the USB interface 430, or may be a 3.5 mm open mobile terminal platform (open mobile terminal platform, OMTP) standard interface, or a Cellular Telecommunications Industry Association of the USA (cellular telecommunications industry association of the USA, CTIA) standard interface.

The pressure sensor 480A is configured to sense a pressure signal, and can convert the pressure signal into an electrical signal. In some embodiments, the pressure sensor 480A may be disposed on the display 494. There are a plurality of types of pressure sensors 480A, such as a resistive pressure sensor, an inductive pressure sensor, and a capacitive pressure sensor. The capacitive pressure sensor may include at least two parallel plates made of conductive materials. When force is exerted on the pressure sensor 480A, capacitance between electrodes changes. The electronic device 100 determines pressure intensity based on the change in the capacitance. When a touch operation is performed on the display 494, the electronic device 100 detects intensity of the touch operation by using the pressure sensor 480A. The electronic device 100 may calculate a touch location based on a detection signal of the pressure sensor 480A. In some embodiments, touch operations that are performed at a same touch location but have different touch operation intensity may correspond to different operation instructions. For example, when a touch operation whose touch operation intensity is less than a first pressure threshold is performed on the application window, an instruction for sliding window content is executed. When a touch operation whose touch operation intensity is greater than or equal to the first pressure threshold is performed on the application window, an instruction for moving the application window is executed.

In embodiments of this application, the pressure sensor 480A may be configured to detect an operation performed by the user on the application window in the floating window state, or may be configured to detect an operation performed by the user on the application window in a split-screen state, or may be configured to detect an operation performed by the user on an application window in a multi-task window state, or the like.

The gyroscope sensor 480B may be configured to determine a motion posture of the electronic device 100. In some embodiments, an angular velocity of the electronic device 100 about three axes (namely, x, y, and z axes) may be determined by using the gyroscope sensor 480B. The gyroscope sensor 480B may be used for image stabilization during shooting. For example, when the shutter is pressed, the gyroscope sensor 480B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 480B may be further used in a navigation scenario and a motion-controlled gaming scenario. In some embodiments of this application, the display 494 of the electronic device 100 may be folded to form a plurality of screens. Each screen may include the gyroscope sensor 480B, configured to measure an orientation (namely, a direction vector of the orientation) of a corresponding screen. The electronic device 100 may determine an included angle between adjacent screens based on an angle change of the orientation of each screen that is obtained through measurement.

For example, with reference to FIG. 1, the display 494 of the electronic device 100 may be folded to form a screen A and a screen B. In this case, the screen A and the screen B each include a gyroscope sensor 480B, configured to measure an orientation of the screen A and an orientation of the screen B. The electronic device 100 may determine an included angle between adjacent screens based on an angle change of an orientation of each screen that is obtained through measurement.

In some embodiments, the included angle between adjacent screens may alternatively be measured through cooperation of one or more other sensors. For example, one acceleration sensor may be disposed on each screen of the foldable screen. The electronic device 100 (for example, the processor 410) may measure, by using the acceleration sensor, a motion acceleration in a case in which each screen is rotated; and then calculate, based on the measured motion acceleration, an angle at which one screen rotates relative to another screen, that is, the included angle between adjacent screens.

In some other embodiments, the gyroscope sensor may be a virtual gyroscope sensor formed by a plurality of other sensors. The virtual gyroscope sensor may be configured to calculate an included angle between adjacent screens of the foldable screen.

The acceleration sensor 480E may detect values of accelerations in various directions (usually on three axes) of the electronic device 100. When the electronic device 100 is still, a magnitude and a direction of gravity may be detected. The acceleration sensor 480E may be further configured to identify a posture of the electronic device, and is used in an application, for example, switching between a landscape mode and a portrait mode or a pedometer. In some embodiments of this application, the display 494 of the electronic device 100 may be folded to form a plurality of screens. Each screen may include the acceleration sensor 480E, configured to measure an orientation (namely, a direction vector of the orientation) of a corresponding screen.

The distance sensor 480F is configured to measure a distance. The electronic device 100 may measure the distance in an infrared manner or a laser manner. In some embodiments, in a shooting scenario, the electronic device 100 may measure a distance by using the distance sensor 480F, to implement quick focusing.

The fingerprint sensor 480H is configured to capture a fingerprint. The electronic device 100 may use a feature of the collected fingerprint to implement fingerprint-based unlocking, application lock access, fingerprint-based photographing, fingerprint-based call answering, and the like.

The temperature sensor 480J is configured to detect a temperature. In some embodiments, the electronic device 100 executes a temperature processing policy based on a temperature detected by the temperature sensor 480J. For example, when the temperature reported by the temperature sensor 480J exceeds a threshold, the electronic device 100 lowers performance of a processor located near the temperature sensor 480J, to reduce power consumption to implement thermal protection.

The touch sensor 480K is also referred to as a "touch panel". The touch sensor 480K may be disposed on the display 494. The touch sensor 480K and the display 494 form a touchscreen, which is also referred to as a "touch screen". The touch sensor 480K is configured to detect a touch operation (for example, touching and holding, upward sliding, leftward sliding, tapping, or double-tapping) on or near the touch sensor 480K. The touch sensor may transfer the detected touch operation to the application processor, to determine a type of a touch event. A visual output related to the touch operation may be provided on the display 494. In some other embodiments, the touch sensor 480K may alternatively be disposed on a surface of the electronic device 100 at a location different from a location of the display 494. In embodiments of this application, the touch sensor 480K may be configured to detect a touch operation performed on a drag bar control at the top of the application window.

The button 490 includes a power-on button, a volume button, and the like. The button 490 may be a mechanical button, or may be a touch button. The electronic device 100 may receive a button input, and generate a button signal input related to a user setting and function control of the electronic device 100.

The motor 491 may generate a vibration prompt. The motor 491 may be used for an incoming call vibration prompt, or may be used for touch vibration feedback. For example, touch operations performed on different applications (for example, photo taking and audio playing) may correspond to different vibration feedback effects. The motor 491 may also correspond to different vibration feedback effect for touch operations performed on different areas of the display 494. Different application scenarios (for example, a time reminder, information receiving, an alarm clock, and a game) may also correspond to different vibration feedback effect. Touch vibration feedback effect may be further customized. In embodiments of this application, the motor 491 may generate a vibration prompt when detecting a sliding operation performed on the application window.

The indicator 492 may be an indicator light, and may indicate a charging status or a power change, or may indicate a message, a missed call, a notification, or the like.

The SIM card interface 495 is configured to connect a SIM card. The SIM card may be inserted into the SIM card interface 495 or removed from the SIM card interface 495, to implement contact with or separation from the electronic device 100. The electronic device 100 may support one or N SIM card interfaces, where N is a positive integer greater than 1. The SIM card interface 495 can support a nano-SIM card, a micro-SIM card, a SIM card, and the like. A plurality of cards may be simultaneously inserted into a same SIM card interface 495. Types of the plurality of cards may be the same or may be different. The SIM card interface 495 is compatible with different types of SIM cards. The SIM card interface 495 is also compatible with the external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

All methods in the following embodiments may be implemented on the electronic device 100 having the foregoing hardware structure.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

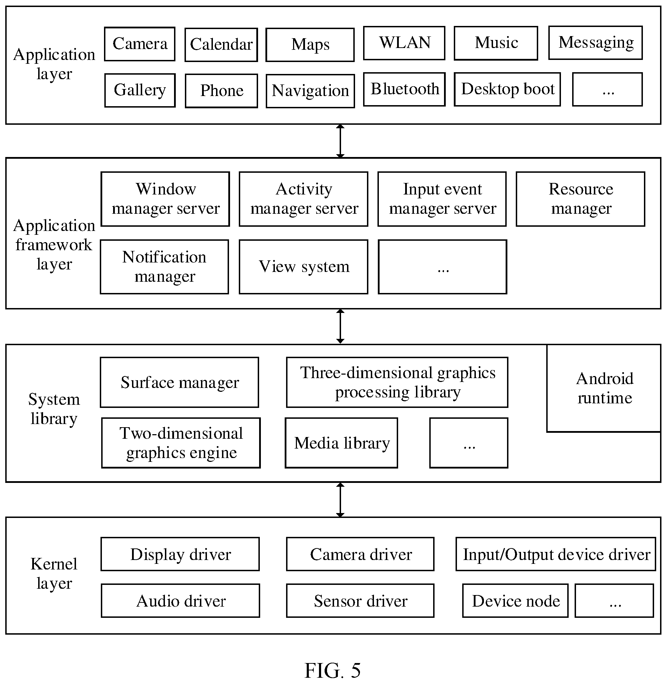

FIG. 5 is a block diagram of the software structure of the electronic device 100 according to an embodiment of this application. A layered architecture can divide software into several layers, and each of the layers has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages, As shown in FIG. 5, the application packages may include applications such as Camera, Gallery, Calendar, Phone, Maps, Navigation, WLAN, Bluetooth, Music, Videos, Messaging, and Launcher (Launcher). For ease of description, an application program is briefly described as an application below. An application on the electronic device may be a native application, or may be a third-party application. This is not limited in embodiments of this application.

The application framework layer provides an application programming interface (application programming interface, API) and a programming framework for an application at the application layer. The application framework layer includes some predefined functions. As shown in FIG. 5, the application framework layer may include a window manager server (window manager service, VMS), an activity manager server (activity manager service, AMS), an input event manager server (input manager service, IMS), a view system, a resource manager, a notification manager, and the like. Optionally, the application framework layer may further include a content provider, a phone manager, and the like (not shown in the accompanying drawings).

The window manager server is configured to manage a window program. The window manager server may obtain a size of the display, determine whether there is a status bar, perform screen locking, take a screenshot, and the like.

The activity manager server (activity manager service, AMS) is configured to manage an activity, and is responsible for work such as startup, switching, and scheduling of each component in a system, and management and scheduling of an application.

The input event manager server (input manager service, IMS) is mainly configured to: perform translation, encapsulation, and the like on an original input event, obtain an input event that includes more information, and send the input event to the window manager server. The window manager server stores a tappable area (for example, a control) of each application, location information of a focus window, and the like. Therefore, the window manager server can correctly distribute the input event to a specified control or focus window.

The view system includes visual controls such as a control for displaying a text and a control for displaying a picture. The view system may be configured to construct an application. A display interface may include one or more views. For example, a display interface including a notification icon of Messaging may include a text display view and an image display view.

The resource manager provides various resources such as a localized character string, an icon, a picture, a layout file, and a video file for an application.

The notification manager enables an application to display notification information in the status bar, and may be configured to convey a notification message. The notification manager may automatically disappear after a short pause without user interaction. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The content provider is configured to: store and obtain data, and enable the data to be accessed by an application. The data may include a video, an image, audio, calls that are made and received, a browsing history, a bookmark, a phone book, and the like.

The phone manager is configured to provide a communication function for the electronic device 100, for example, management of a call status (including answering, declining, or the like).

The Android runtime includes a kernel library and a virtual machine. The Android runtime is responsible for scheduling and management of the Android system. The kernel library includes two parts: a function that needs to be invoked in a Java language and a kernel library of Android. The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of function modules, such as a surface manager (surface manager), a media library (Media Library), a three-dimensional graphics processing library (for example, OpenGL ES), and a 2D graphics engine (for example, SGL). The surface manager is configured to manage a display subsystem and provide fusion of 2D and 3D layers for a plurality of applications. The media library supports playback and recording in a plurality of commonly used audio and video formats, and static image files. The media library may support a plurality of audio and video coding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. The kernel layer may include a display driver, an input/output device driver (for example, a driver for a keyboard, a touchscreen, a headset, a speaker, or a microphone), a camera driver, an audio driver, a sensor driver, and the like.

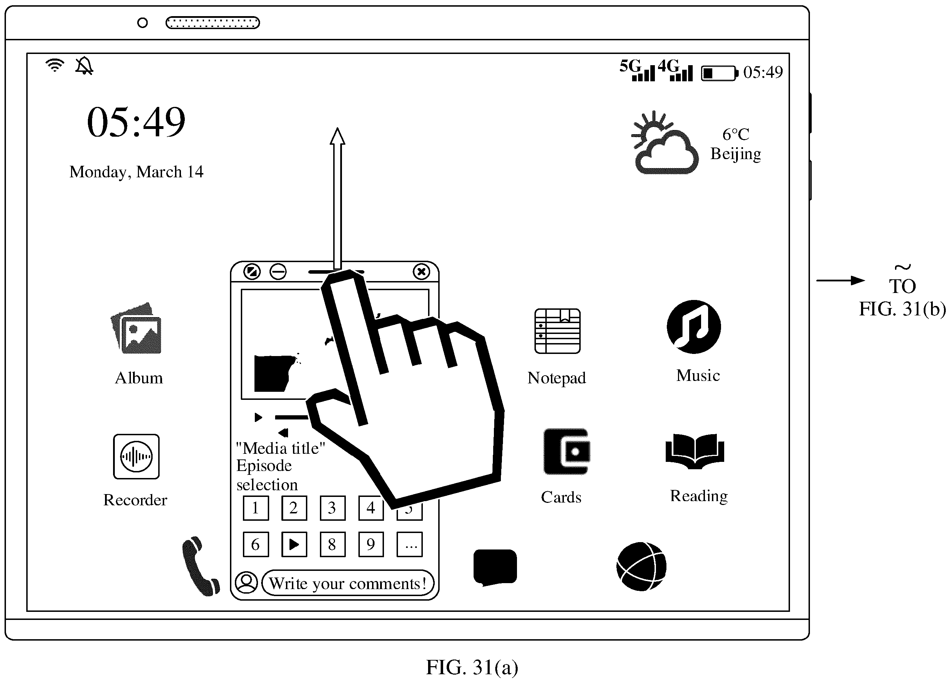

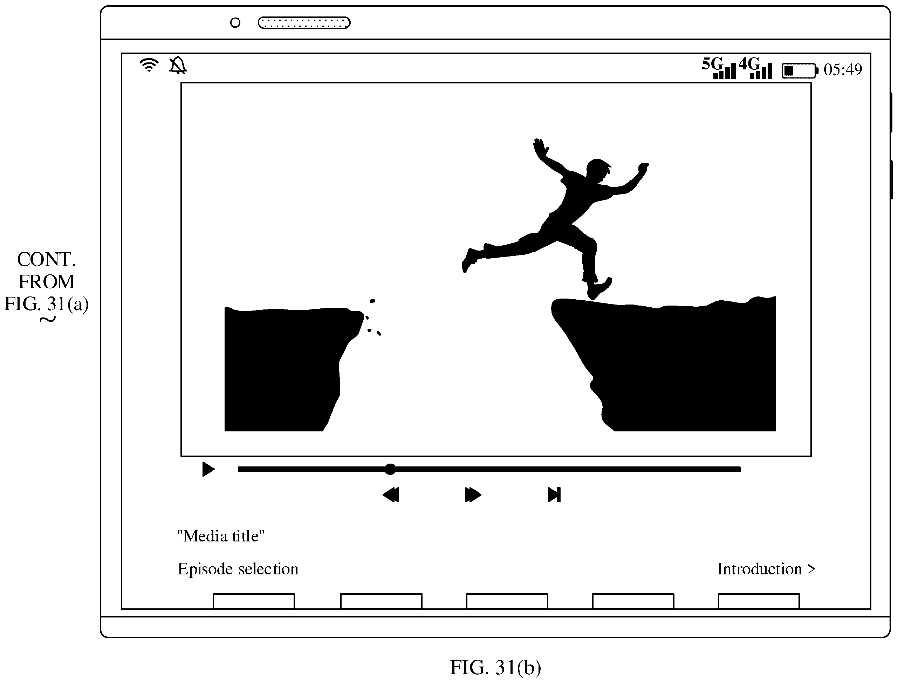

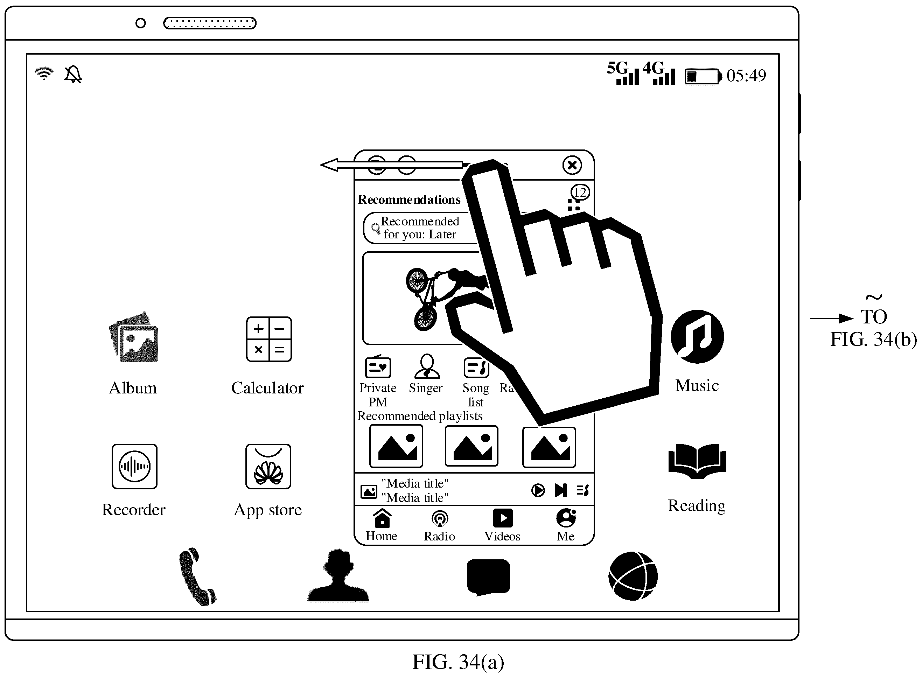

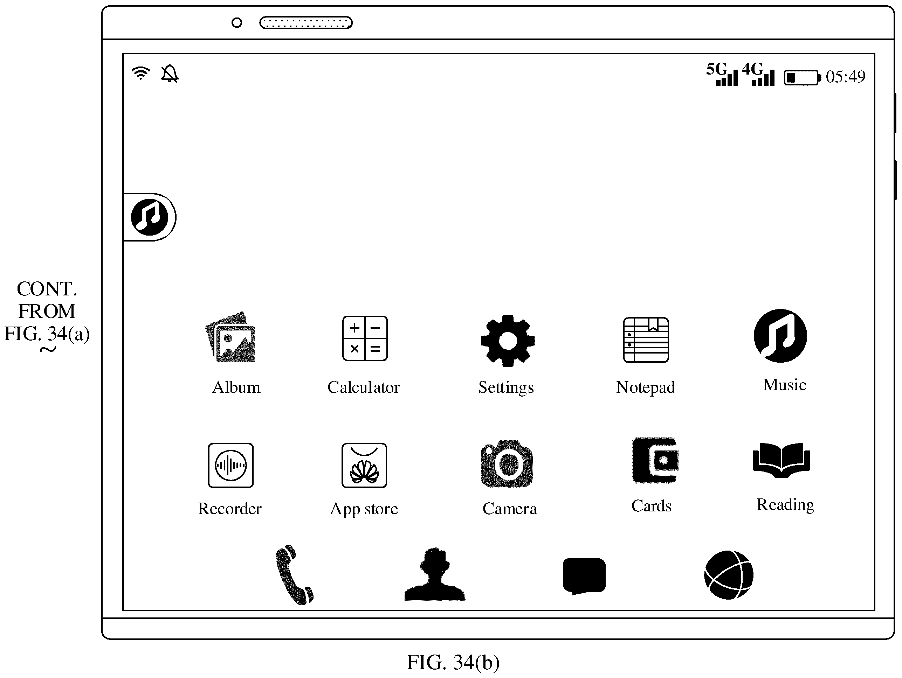

The user performs an input operation on the electronic device 100 (for example, a finger of the user touches a drag bar control at the top of a floating window, and quickly slides upward). The kernel layer may generate a corresponding input event (for example, a quick upward sliding event of the floating window) based on the input operation, and report the event to the application framework layer. The activity manager server AMS at the application framework layer sets a window state (for example, a full-screen state), a window location, and a window size of an application. The window manager server WMS at the application framework layer draws a window based on the settings of the AMS, and then sends window data to the display driver at the kernel layer. The display driver displays a corresponding application window on a display. In an example, when the electronic device 100 displays the application window in a floating window state, if a quick upward sliding operation performed on the application window is detected, the electronic device 100 may display the application window in the full-screen state. For example, as shown in FIG. 31(a) and FIG. 31(b), when the mobile phone displays an application window of a video playing application in a floating window state, if a quick upward sliding operation performed on the application window is detected, the mobile phone displays the application window of the video playing application in a full-screen state. In another example, when the electronic device 100 displays the application window in a floating window state, if a quick leftward sliding operation performed on the application window is detected, the electronic device 100 displays the application window in a floating bubble state. For example, as shown in FIG. 34(a) and FIG. 34(b), when the mobile phone displays an application window of a music playing application in a floating window state, if a quick leftward sliding operation performed on the application window is detected, the mobile phone displays the application window of the music playing application in a floating bubble state.

All methods in the following embodiments may be implemented on the electronic device 100 having the foregoing software structure.

Currently, as a screen of an electronic device continuously increases, a floating window is gradually applied to an application on the electronic device (for example, a device that mainly performs touch interaction, for example, a mobile phone or a tablet) because of features such as convenience and efficiency of the floating window. In addition, it is not difficult to find that, when the user uses an application on the electronic device, in comparison with a conventional case in which an application can be displayed on the screen only in full screen, a feature of the floating window is that the application may be displayed on another application or a home screen (namely, a home screen) of the electronic device in a form of a window in "a floating manner", and the floating window may be dragged to any location on the screen.

In addition to the full-screen display state and the floating window display state, in some application scenarios, the application on the electronic device may further include a minimization floating window (namely, a mini floating window) display state and a minimization floating bubble display state, to meet diversified requirements of the user. It may be understood that a display state type supported by the application on the electronic device is not limited in embodiments of this application. The application on the electronic device may further include another display state, for example, a display state in which the application is closed, a display state in which the application is displayed in split screen, or a display state in which a multi-task management interface is entered.

Generally, manners of triggering a plurality of display states (for example, the full-screen display state, the floating window display state, the floating bubble display state, and the close display state) of the application are usually different on electronic devices of different device vendors. Although most of the manners are completed through gesture interaction, these interaction manners are scattered and separated, and no interaction system is formed. Consequently, interaction efficiency is low, and it is not easy to be learned and remembered by the user.

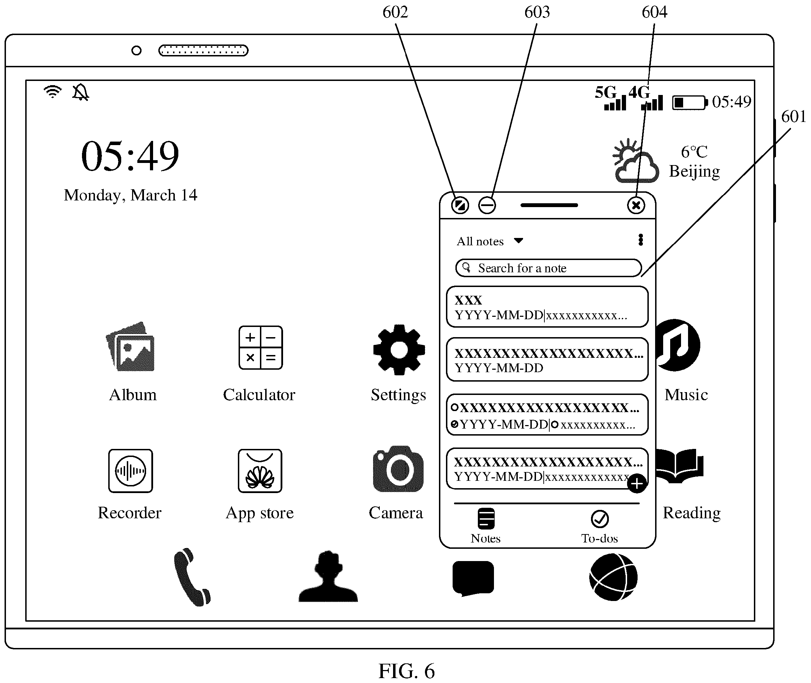

To improve the foregoing problem, in some solutions, the electronic device provides a plurality of buttons in the floating window of the application, to trigger three display states of the application: the full-screen display state, the floating bubble display state, and the close display state. For example, the electronic device may display a floating window 601 of a note application in a display manner shown in FIG. 6. As shown in FIG. 6, a plurality of button controls are disposed at the top of the floating window 601, namely, a full-screen button 602 for triggering a full-screen display state of the note application, a minimization button 603 for triggering a floating bubble display state of the note application, and a close button 604 for triggering a close display state of the note application. In this way, the user may trigger conversion of a corresponding display state of the note application by tapping these button controls in the floating window.

However, when the electronic device displays the floating window of the note application in the display manner shown in FIG. 6, operations of triggering the full-screen display state, the floating bubble display state, and the close display state of the note application (namely, tap gesture operations performed by the user on the full-screen button 602, the minimization button 603, and the close button 604 in the floating window 601 respectively) are all concentrated on the floating window. This avoids scattered and separated interaction manners. However, because a display area of the floating window is small, hot zones corresponding to these button controls in the floating window are also small. This is inconvenient for the user to perform an operation, and consequently, operation accuracy of the user is reduced. In addition, if the button controls are close to each other, an accidental touch is likely to occur. This affects user experience. As shown in FIG. 6, hot zones corresponding to the full-screen button 602, the minimization button 603, and the close button 604 in FIG. 6 are all small. This is inconvenient for the user to perform an operation. In addition, the full-screen button 602 is close to the minimization button 603. When the user taps the two buttons, an accidental touch is likely to occur, and user experience is poor.

To resolve the foregoing problem, an embodiment of this application provides an application window display method. A user may complete, in one step, switching an application from a floating window display state to another different display state by only applying a sliding gesture on a floating window of the application. This avoids scattered and separated gesture interaction. In addition, because a trigger gesture is simple and concentrated on an application window, interaction is more systematic, and learning and memorizing are more convenient for the user. This greatly improves interaction efficiency. In addition, because a hot zone (usually an entire screen) corresponding to the sliding operation is large, a user operation is convenient, and an accidental touch is not likely to occur. This greatly improves operation accuracy of the user.

The following specifically describes the technical solutions provided in embodiments of this application by using an example in which the electronic device is a mobile phone.

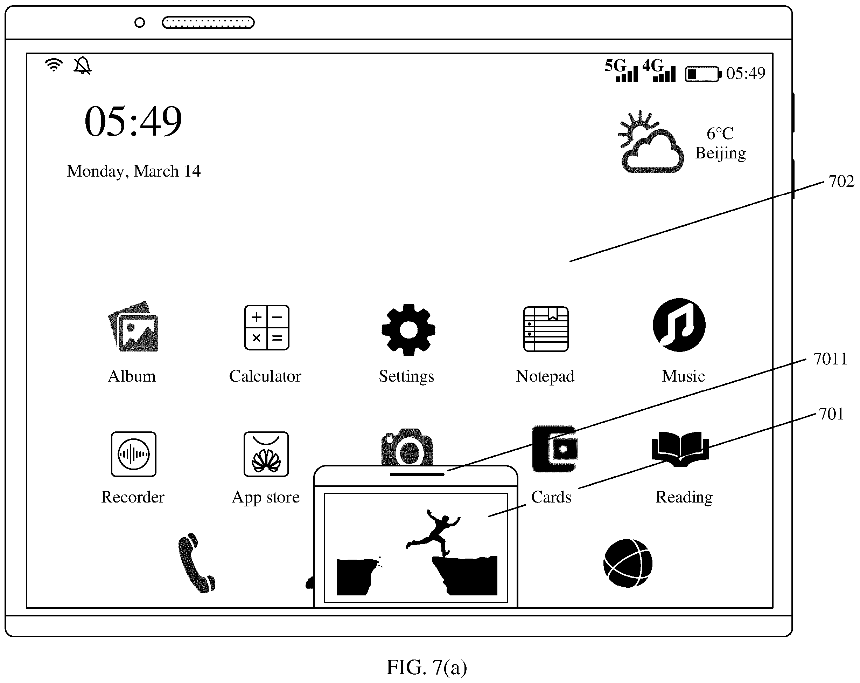

In an example of an implementation solution, FIG. 7(a) to FIG. 7(e) show a case in which the mobile phone switches an application from displaying in a floating window state to displaying in a full-screen state in response to a quick upward sliding operation of a user on a floating window of the application.

FIG. 7(a) shows displaying of a video playing application in a floating window state. As shown in FIG. 7(a), the video playing application 701 is displayed on a home screen 702 of the mobile phone in a form of a window "in a floating manner", and a video playing interface of the video playing application 701 covers a part of the home screen of the mobile phone. The top of the floating window of the video playing application 701 may include a drag button 7011 for moving a window location.

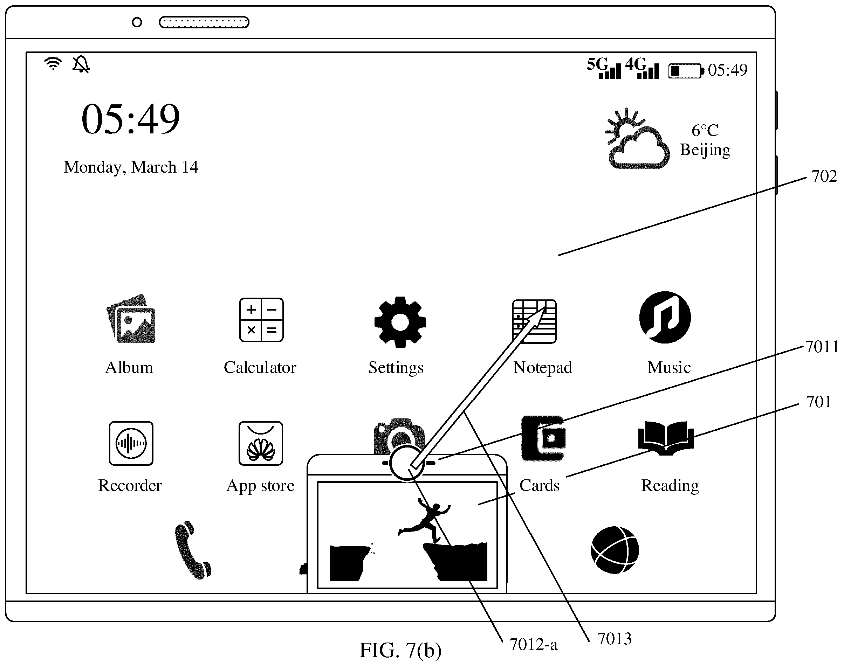

FIG. 7(b) to FIG. 7(e) show a case in which the user performs a quick upward sliding operation through the drag button at the top of the floating window of the application, to trigger the mobile phone to perform, on the application, an operation of switching from displaying in a floating window state to displaying in a full-screen state. That the user performs a quick upward sliding operation on the drag button may include three processes: finger pressing, finger sliding, and finger lifting.

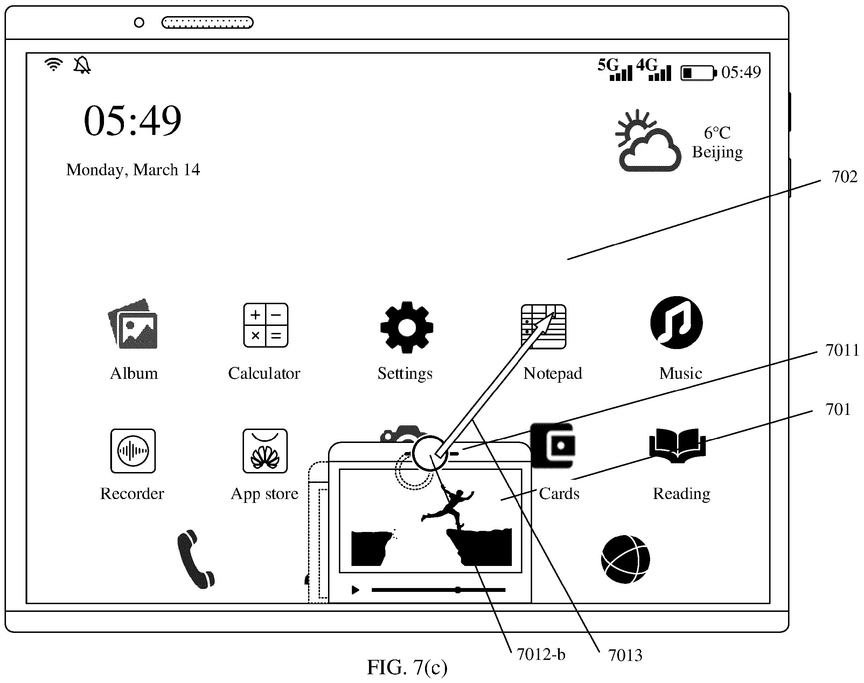

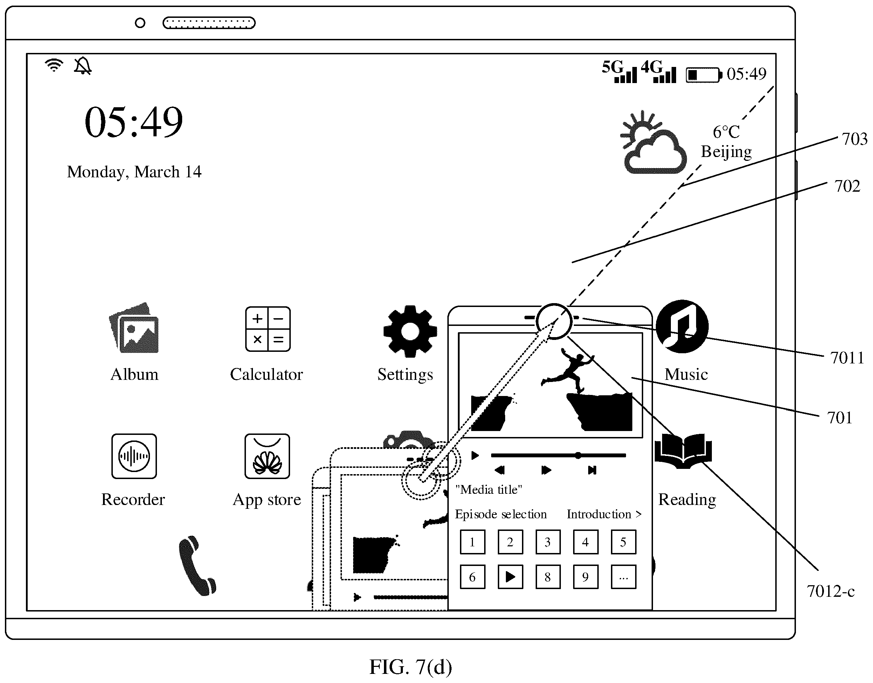

As shown in FIG. 7(b), after the user performs a finger pressing operation (a press location 7012-a) on the drag button 7011 at the top of the floating window of the video playing application 701, the user does not immediately lift a finger, but continues to slide the finger in a direction 7013 from the drag button 7011. In the finger sliding process, the floating window may slide on a screen of the mobile phone along a sliding track of the finger. As shown in FIG. 7(b) to FIG. 7(d), the mobile phone may move a location of the floating window of the video playing application 701 on the screen along a sliding track of the finger of the user from the location 7012-a shown in FIG. 7(b) to a location 7012-b shown in FIG. 7(c), and then to a location 7012-c shown in FIG. 7(d).

Optionally, when the finger of the user touches the drag button 7011 at the top of the floating window of the video playing application 701, the mobile phone may display a touch point prompt in a ball style shown in FIG. 7(b), to prompt the user that the finger successfully acts on the drag button 7011. Certainly, the mobile phone may not display the touch point prompt. This is not limited in embodiments of this application.

As shown in FIG. 7(b), when the finger of the user slides in the direction 7013 from the drag button 7011, the mobile phone may detect a sliding angle (namely, an angle of the direction 7013) of the finger of the user in response to the sliding event, and the mobile phone may identify, based on the sliding angle and preset angle ranges corresponding to an up direction, a down direction, a left direction, and a right direction, that a sliding direction of the finger of the user is upward. In this implementation solution, when detecting that the sliding direction of the finger sliding operation is upward, the mobile phone may identify that a window display state corresponding to upward sliding is a full-screen state.

Further, after it is identified that the window display state corresponding to upward sliding is the full-screen state, whether the mobile phone displays the video playing application 701 in the full-screen state depends on whether a sliding parameter of the quick upward sliding operation of the user meets a preset trigger success condition.

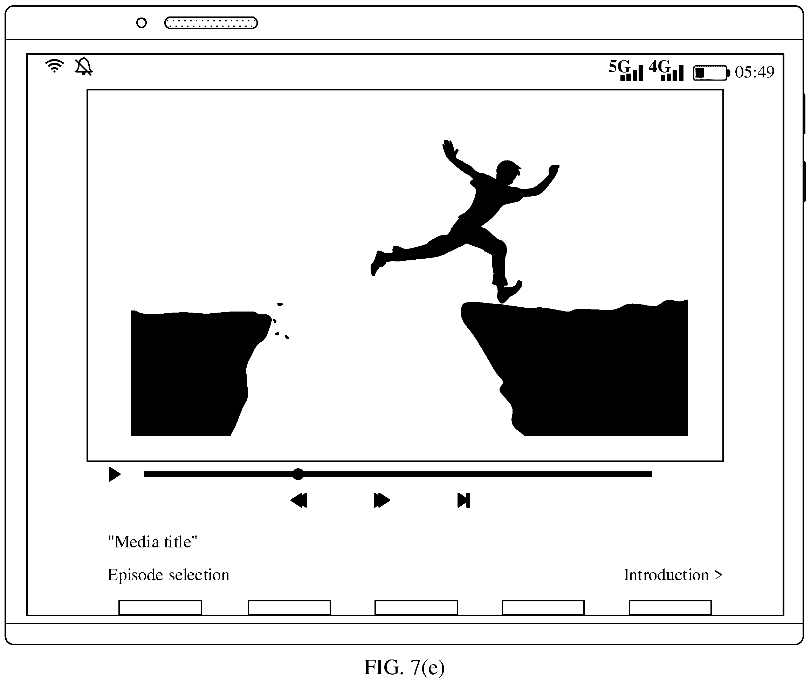

As shown in FIG. 7(b) to FIG. 7(d), after the finger of the user slides for a distance from the location 7012-a shown in FIG. 7(b) in the direction 7013, for example, after the finger of the user slides continuously from the location 7012-b shown in FIG. 7(c) to the location 7012-c shown in FIG. 7(d), if the finger of the user immediately lifts, the mobile phone may detect, in response to the lifting event, whether a sliding speed of the finger of the user is greater than a preset speed threshold and whether a sliding distance is greater than a preset distance threshold, to determine whether the sliding parameter during sliding of the finger of the user meets the preset trigger success condition. When the detected sliding speed is greater than the preset speed threshold and the sliding distance is greater than the preset distance threshold, the mobile phone may determine that the sliding parameter during sliding of the finger of the user meets the trigger success condition. In this case, the mobile phone may perform displaying in the identified full-screen state. As shown in FIG. 7(e), the mobile phone displays the video playing application 701 in full screen, and a video playing interface of the video playing application 701 fills the entire screen of the mobile phone.

Optionally, the sliding parameter used by the mobile phone to determine whether the preset trigger success condition is met may alternatively be another sliding parameter, for example, a sliding acceleration or a sliding time. This is not limited in embodiments of this application.

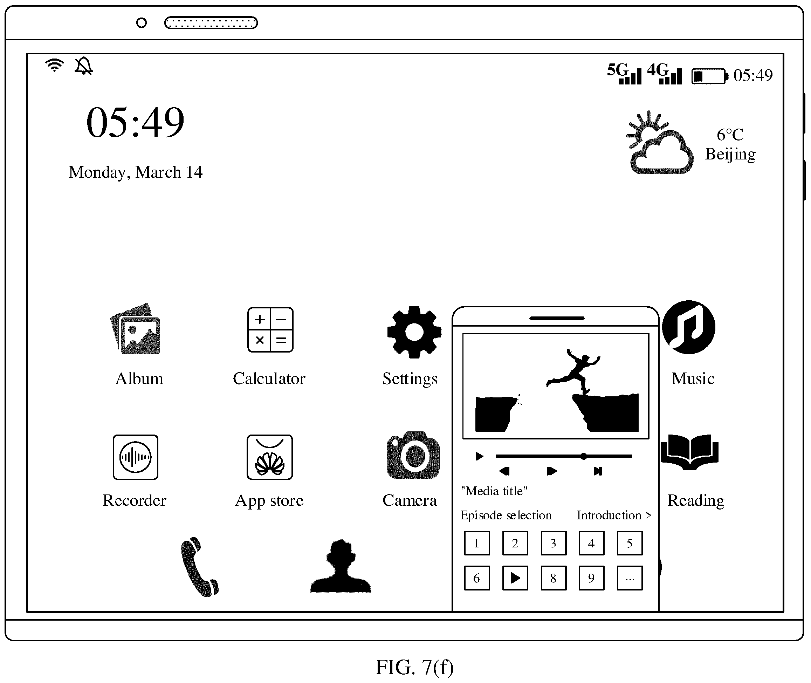

In an example, after the finger of the user slides for a distance from the location 7012-a shown in FIG. 7(b) in the direction 7013, for example, slides continuously from the location 7012-b shown in FIG. 7(c) to the location 7012-c shown in FIG. 7(d), if the finger of the user lifts after the finger pauses at the location 7012-c shown in FIG. 7(d) for a preset time period, the mobile phone may determine that a sliding operation performed by the user on the screen this time is a dragging operation, and the dragging operation is only used to move the location of the floating window of the video playing application 701 on the screen, but is not the quick upward sliding operation for triggering switching to the full-screen state in this application. In this case, the mobile phone may maintain and display the floating window of the video playing application 701 at a current location (as shown in FIG. 7(f)) in response to the dragging operation, and no longer return to the display location shown in FIG. 7(a) for display.

In another example, after the finger of the user slides for a distance from the location 7012-a shown in FIG. 7(b) in the direction 7013, for example, slides continuously from the location 7012-b shown in FIG. 7(c) to the location 7012-c shown in FIG. 7(d), if the finger of the user immediately lifts, the mobile phone may determine that a sliding operation performed by the user on the screen this time is a quick upward sliding operation. However, if the mobile phone detects, in response to the lifting event, that a sliding speed is not greater than a preset speed threshold or a detected sliding distance is not greater than a preset distance threshold (in this case, the sliding operation may be quick upward sliding caused by an accidental touch of the user), the mobile phone may determine that a sliding parameter during sliding of the finger of the user does not meet the trigger success condition. In this case, the mobile phone does not perform displaying in the identified full-screen state, and directly moves the floating window of the video playing application 701 back to the display location shown in FIG. 7(a) for display.

After determining that the sliding parameter during sliding of the finger of the user meets the trigger success condition, and before performing displaying in the identified full-screen state, the mobile phone may display an intermediate transition state through which the application is switched from the floating window state to the full-screen state. Because the sliding direction of the finger of the user identified by the mobile phone is sliding upward, in this implementation solution, the mobile phone may correspondingly move the floating window of the video playing application 701 to an upper edge of the screen, and display, in a moving process, the intermediate transition state through which the application is switched from the floating window state to the full-screen state.

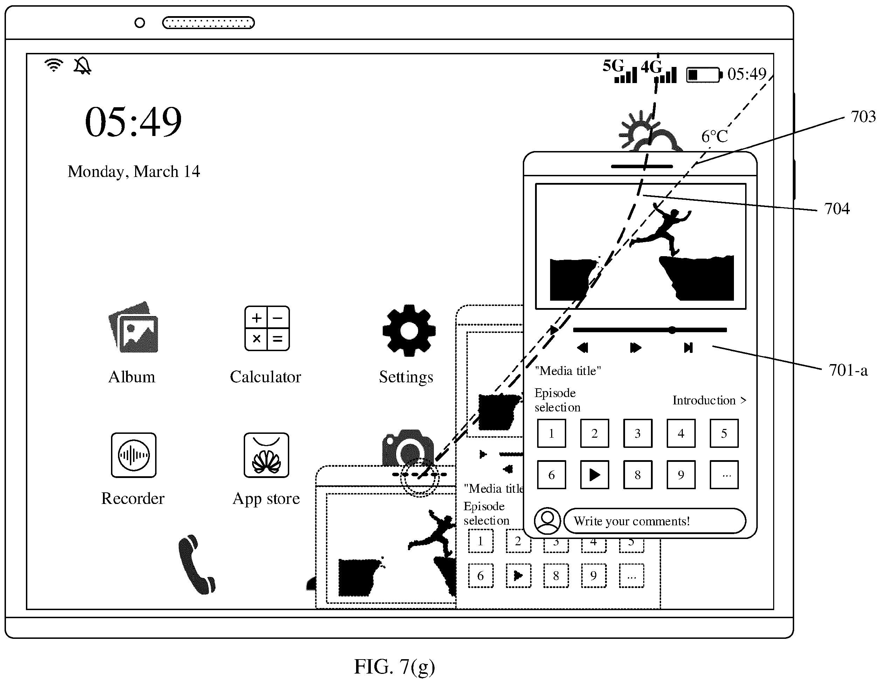

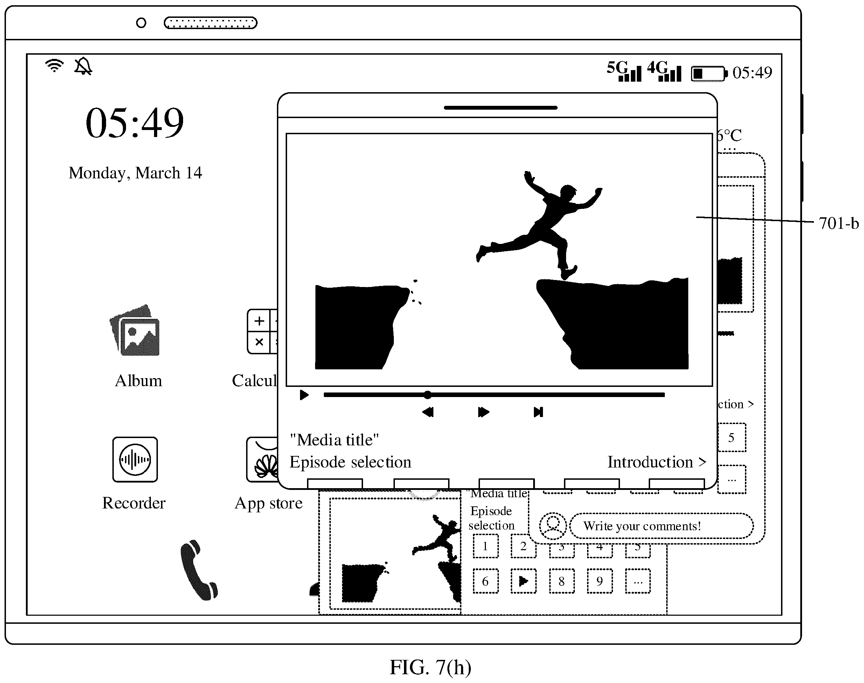

As shown in FIG. 7(g) and FIG. 7(h), when the finger of the user slides from the location 7012-a shown in FIG. 7(b) to the location 7012-c shown in FIG. 7(d) in the direction 7013, when the finger of the user immediately lifts, the mobile phone may continue to move, from the location 7012-c shown in FIG. 7(d) to the upper edge of the screen, the floating window of the video playing application 701 upward along a curve track 704. In addition, in a moving process of the floating window, the intermediate transition state through which the video playing application 701 is switched from the floating window state to the full-screen state is displayed. To be specific, a size of the floating window of the video playing application 701 shown in FIG. 7(g) and FIG. 7(h) increases with an increase of a moving distance, until the entire screen is covered. In this case, the full-screen state shown in FIG. 7(e) is presented.

In an example, when the mobile phone moves, from the location 7012-c shown in FIG. 7(d), the floating window of the video playing application 701 upward for a first distance along the curve track 704, a display location and a window size of the moved floating window may be shown as a video playing application 701-a in FIG. 7(g). When the floating window of the video playing application 701 continues to be moved upward for a second distance (greater than the first distance) along the curve track 704, a display location and a window size of the moved floating window may be shown as a video playing application 701-b in FIG. 7(h). The window size of the video playing application 701-b is greater than the window size of the video playing application 70 1-a.

Optionally, whether the mobile phone moves the floating window of the video playing application 701 upward to the upper edge of the screen along the curve track 704 depends on whether the sliding track of the finger of the user can point to the upper edge of the screen. As shown in FIG. 7(d), an extension line 703 of the sliding track of the finger of the user points to a right edge of the screen. It indicates that the floating window reaches the right edge of the screen and cannot reach the upper edge of the screen when the floating window moves inertially along the extension line 703 of the sliding track of the finger of the user. In this case, the mobile phone may move the floating window of the video playing application 701 upward to the upper edge of the screen along the curve track 704.

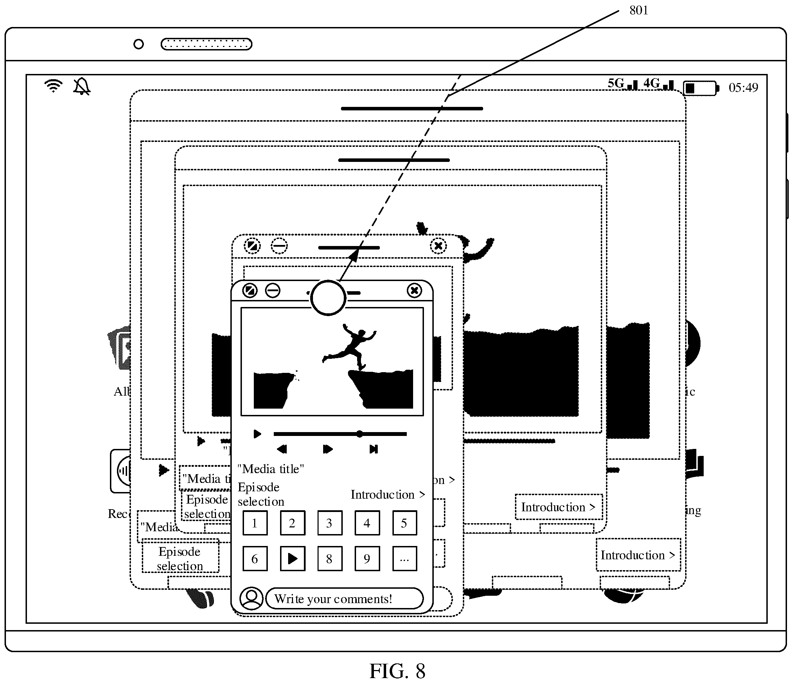

As shown in FIG. 8, an extension line 801 of a sliding track of the finger of the user points to the upper edge of the screen, indicating that the floating window can reach the upper edge of the screen when the floating window moves inertially along the extension line 801 of the sliding track of the finger of the user. In this case, the mobile phone may directly move the floating window of the video playing application upward along the extension line 801 of the sliding track (not the curve track) to the upper edge of the screen, and display the intermediate transition state through which the video playing application is switched from the floating window state to the full-screen state. In other words, a size of the floating window of the video playing application shown in FIG. 8 increases with an increase of a moving distance until the entire screen is covered. In this case, displaying in the full-screen state shown in FIG. 7(e) is presented.

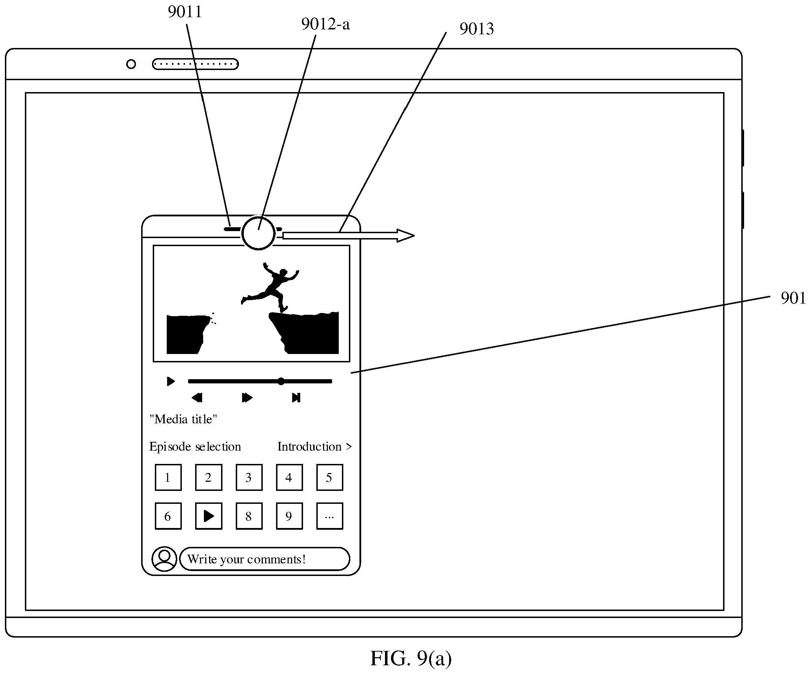

In another example of an implementation solution, FIG. 9(a) to FIG. 9(c) show a case in which the mobile phone switches an application from displaying in a floating window state to displaying in a floating bubble state in response to a quick rightward sliding operation of a user on a floating window of the application.

FIG. 9(a) shows displaying of a video playing application in a floating window state. As shown in FIG. 9(a), a video playing application 901 is displayed on the home screen of the mobile phone in a form of a window "in a floating manner". The top of the floating window of the video playing application 901 may include a drag button 9011 for moving a window location. FIG. 9(a) to FIG. 9(c) show a case in which the user performs a quick rightward sliding operation through the drag button at the top of the floating window of the application, to trigger the mobile phone to perform, on the application, an operation of switching from displaying in a floating window state to displaying in a floating bubble state. That the user performs a quick rightward sliding operation on the drag button may include three processes: finger pressing, finger sliding, and finger lifting.

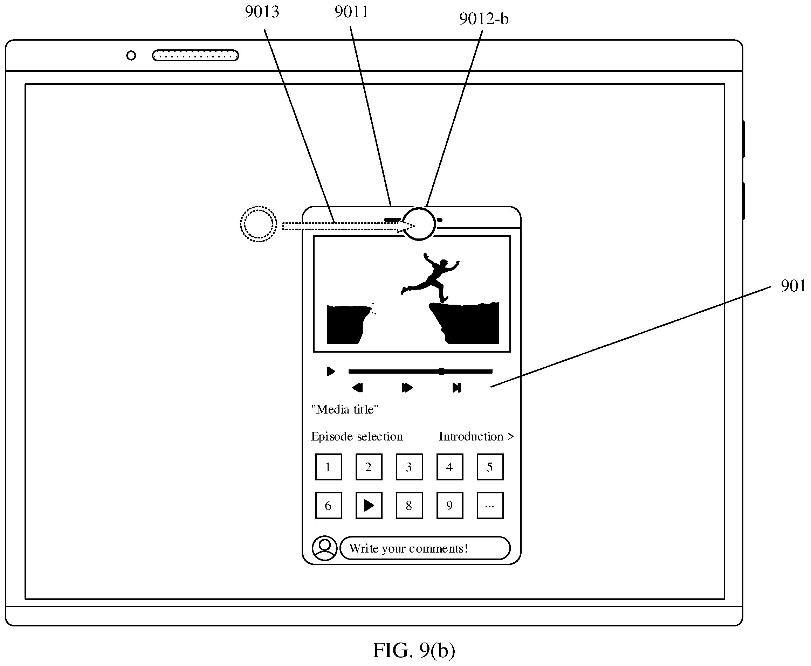

As shown in FIG. 9(a), after the user performs a finger pressing operation (a press location 9012-a) on the drag button 9011 at the top of the floating window of the video playing application 901, the user does not immediately lift the finger, but continues to slide a finger in a direction 9013 from the drag button 9011. In a finger sliding process, the floating window may slide on the screen of the mobile phone along a sliding track of the finger. As shown in FIG. 9(a) and FIG. 9(b), the mobile phone may move a location of the floating window of the video playing application 901 on the screen along a sliding track of the finger of the user from the location 9012-a shown in FIG. 9(a) to a location 9012-b shown in FIG. 9(b).

As shown in FIG. 9(a), when the finger of the user slides in the direction 9013 from the drag button 9011, the mobile phone may detect a sliding angle (namely, an angle of the direction 9013) of the finger of the user in response to the sliding event, and identify, based on the sliding angle and preset angle ranges corresponding to an up direction, a down direction, a left direction, and a right direction, that a sliding direction of the finger of the user is rightward. In this implementation solution, when detecting that the sliding direction of the finger sliding operation is rightward, the mobile phone may identify that a window display state corresponding to rightward sliding is a floating bubble state. Optionally, the window display state corresponding to rightward sliding may alternatively be another minimization state, for example, a mini floating window or a floating icon.

Further, after it is identified that the window display state corresponding to rightward sliding is the floating bubble state, whether the mobile phone displays the video playing application 901 in the floating bubble state depends on whether a sliding parameter of the quick rightward sliding operation of the user meets a preset trigger success condition.

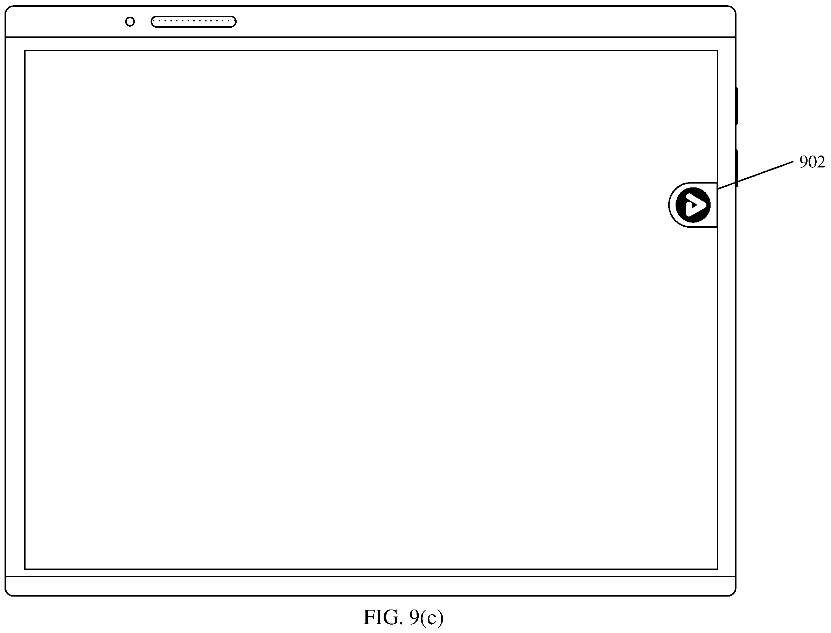

As shown in FIG. 9(a) and FIG. 9(b), after the finger of the user slides for a distance from the location 9012-a shown in FIG. 9(a) in the direction 9013, for example, after the finger of the user slides to the location 9012-b shown in FIG. 9(b), if the finger of the user immediately lifts, the mobile phone may detect, in response to the lifting event, whether a sliding speed of the finger of the user is greater than a preset speed threshold and whether a sliding distance is greater than a preset distance threshold, to determine whether the sliding parameter during sliding of the finger of the user meets the preset trigger success condition. When the detected sliding speed is greater than the preset speed threshold and the sliding distance is greater than the preset distance threshold, the mobile phone may determine that the sliding parameter during sliding of the finger of the user meets the preset trigger success condition. In this case, the mobile phone may perform displaying in the identified floating bubble state. As shown in FIG. 9(c), the mobile phone displays the video playing application in a floating bubble 902 state, that is, the video playing application is displayed on the home screen of the mobile phone in a form of a small bubble "in a floating manner".

Optionally, the sliding parameter used by the mobile phone to determine whether the preset trigger success condition is met may alternatively be another sliding parameter, for example, a sliding acceleration or a sliding time. This is not limited in embodiments of this application.

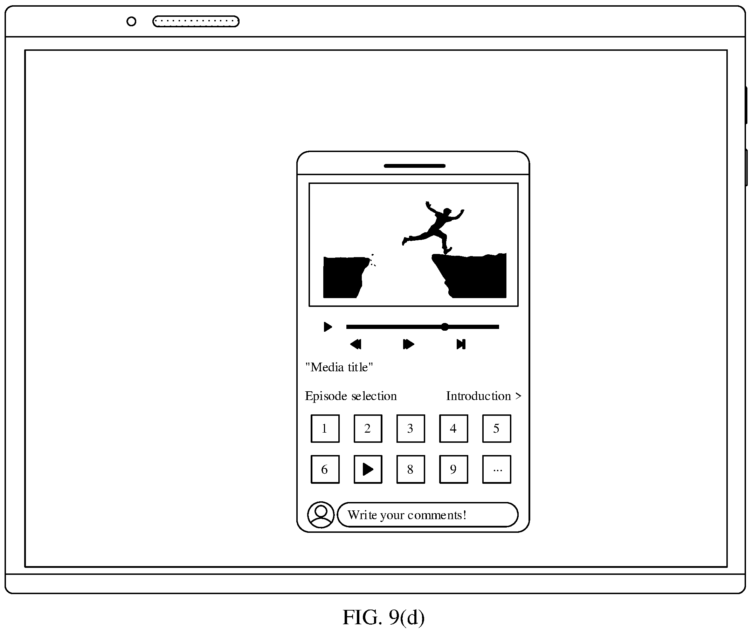

In an example, after the finger of the user slides for a distance from the location 9012-a shown in FIG. 9(a) in the direction 9013, for example, after the finger of the user slides to the location 9012-b shown in FIG. 9(b), if the finger of the user lifts after the finger pauses at the location 9012-b shown in FIG. 9(b) for a preset time period, the mobile phone may determine that a sliding operation performed by the user on the screen this time is a dragging operation, and the dragging operation is only used to move the location of the floating window of the video playing application 901 on the screen, but is not the quick rightward sliding operation for triggering switching to the floating bubble state in this application. In this case, the mobile phone may maintain and display the floating window of the video playing application 901 at a current location (as shown in FIG. 9(d)) in response to the dragging operation, and no longer return to the display location shown in FIG. 9(a) for display.

In another example, after the finger of the user slides for a distance from the location 9012-a shown in FIG. 9(a) in the direction 9013, for example, after the finger of the user slides to the location 9012-b shown in FIG. 9(b), if the finger of the user immediately lifts, the mobile phone may determine that a sliding operation performed by the user on the screen this time is a quick rightward sliding operation. However, if the mobile phone detects, in response to the lifting event, that a sliding speed is not greater than a preset speed threshold or a detected sliding distance is not greater than a preset distance threshold (in this case, the sliding operation may be quick rightward sliding caused by an accidental touch of the user), the mobile phone may determine that a sliding parameter during sliding of the finger of the user does not meet the preset trigger success condition. In this case, the mobile phone does not perform displaying in the identified floating bubble state, and directly moves the floating window of the video playing application 901 back to the display location shown in FIG. 9(a) for display.

After determining that the sliding parameter during sliding of the finger of the user meets the trigger success condition, and before performing displaying in the identified floating bubble state, the mobile phone may display an intermediate transition state through which the application is switched from the floating window state to the floating bubble state. Because the sliding direction of the finger of the user identified by the mobile phone is sliding rightward, in this implementation solution, the mobile phone may correspondingly move the floating window of the video playing application 901 to a right screen edge, and display, in a moving process, the intermediate transition state through which the application is switched from the floating window state to the floating bubble state.

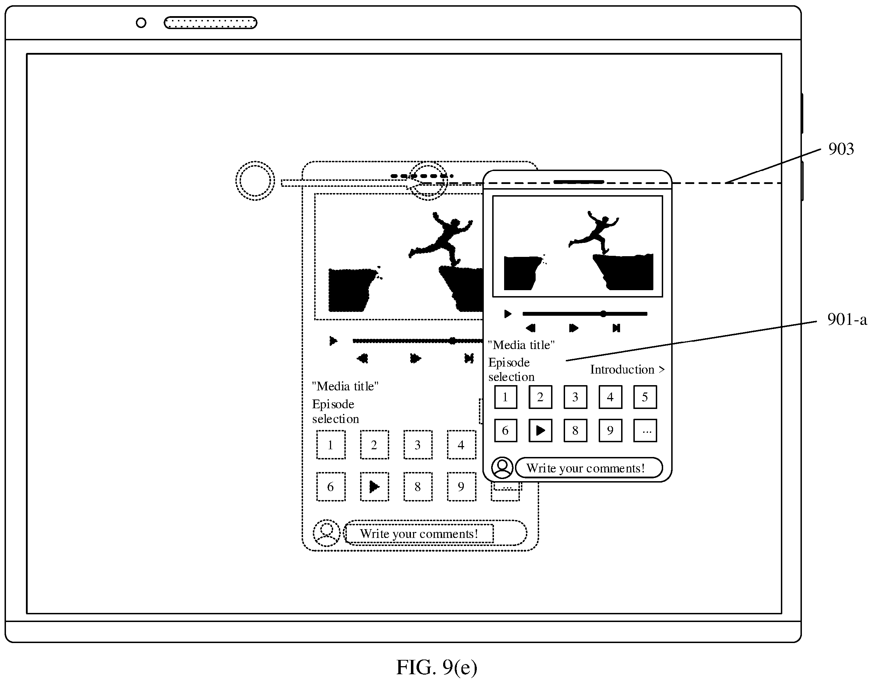

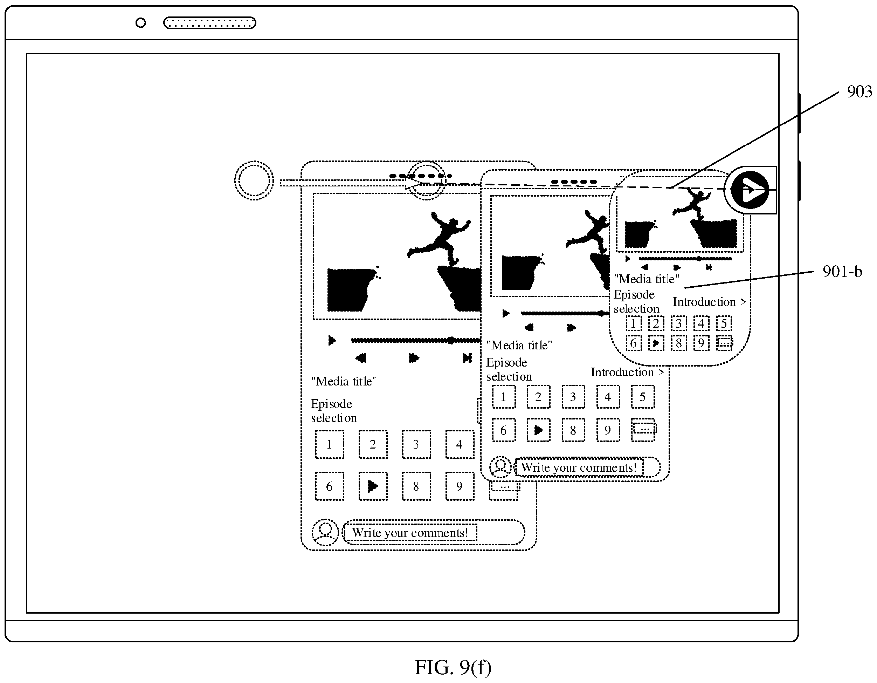

As shown in FIG. 9(e) and FIG. 9(f), after the finger of the user slides for a distance from the location 9012-a shown in FIG. 9(a) in the direction 9013, for example, after the finger of the user slides to the location 9012-b shown in FIG. 9(b), when the finger of the user immediately lifts, the mobile phone may move, from the location 9012-b shown in FIG. 9(b) to the right edge of the screen, the floating window of the video playing application 901 rightward along an extension line 903 of a sliding track of the finger of the user. In addition, in a moving process of the floating window, the intermediate transition state through which the video playing application 901 is switched from the floating window state to the floating bubble state is displayed, that is, a size of the floating window of the video playing application 901 shown in FIG. 9(e) and FIG. 9(f) decreases with an increase of a moving distance, until the floating bubble is adsorbed to the right edge of the screen. In this case, displaying in the floating bubble state shown in FIG. 9(c) is presented.

In an example, when the mobile phone moves, from the location 9012-b shown in FIG. 9(b), the floating window of the video playing application 901 rightward along the extension line 903 of the sliding track of the finger for a third distance, a display location and a window size of the moved floating window may be shown as a video playing application 901-a in FIG. 9(e). When the floating window of the video playing application 901 continues to be moved rightward along the extension line 903 of the sliding track of the finger for a fourth distance (greater than the third distance), a display location and a window size of the moved floating window may be shown as a video playing application 901-b in FIG. 9(f). The window size of the video playing application 901-b is less than the window size of the video playing application 901-a, and a window form of the video playing application 901-b is closer to a spherical shape.

Similarly, the mobile phone may also switch the application from the floating window state to the floating bubble state in response to a quick leftward sliding operation performed by the user on the floating window of the application. The floating bubble of the application may be correspondingly adsorbed to a left edge of the screen.

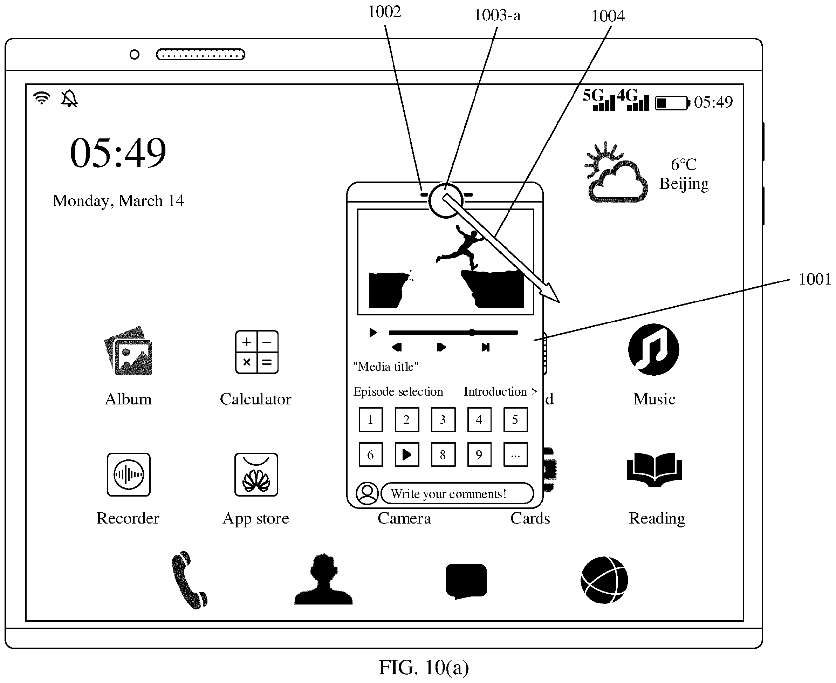

In still another example of an implementation solution, FIG. 10(a) to FIG. 10(c) show a case in which the mobile phone switches an application from displaying in a floating window state to displaying in an application closing state in response to a quick downward sliding operation of a user on a floating window of the application.

FIG. 10(a) shows displaying of a video playing application in a floating window state. As shown in FIG. 10(a), a video playing application 1001 is displayed on the home screen of the mobile phone in a form of a window "in a floating manner", and the top of the floating window of the video playing application 1001 may include a drag button 1002 for moving a window location. FIG. 10(a) to FIG. 10(c) show a case in which the user performs a quick downward sliding operation through the drag button at the top of the floating window of the application, to trigger the mobile phone to perform, on the application, an operation of switching from displaying in a floating window state to displaying in an application closing state. That the user performs a quick downward sliding operation on the drag button may include three processes: finger pressing, finger sliding, and finger lifting.

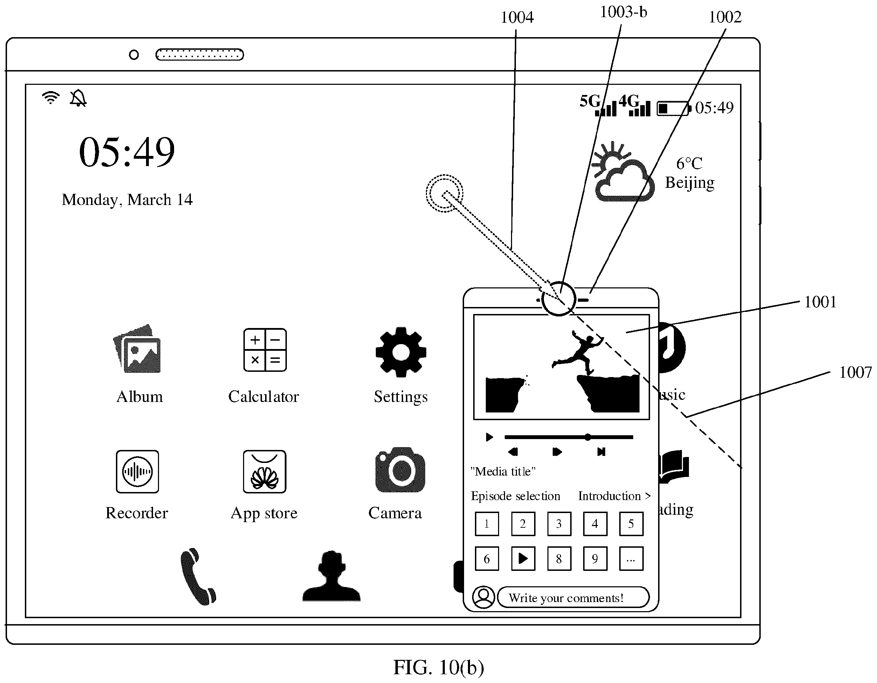

As shown in FIG. 10(a), after the user performs a finger pressing operation (a press location 1003-a) on the drag button 1002 at the top of the floating window of the video playing application 1001, the user does not immediately lift the finger, but continues to slide a finger in a direction 1004 from the drag button 1002. In a finger sliding process, the floating window may slide on the screen of the mobile phone along a sliding track of the finger. As shown in FIG. 10(a) and FIG. 10(b), the mobile phone may move a location of the floating window of the video playing application 1001 on the screen along a sliding track of the finger of the user from the location 1003-a shown in FIG. 10(a) to a location 1003-b shown in FIG. 10(b).

As shown in FIG. 10(a), when the finger of the user slides in the direction 1004 from the drag button 1002, the mobile phone may detect a sliding angle (namely, an angle of the direction 1004) of the finger of the user in response to the sliding event, and identify, based on the sliding angle and preset angle ranges corresponding to an up direction, a down direction, a left direction, and a right direction, that a sliding direction of the finger of the user is downward. In this implementation solution, when detecting that the sliding direction of the finger sliding operation is downward, the mobile phone may identify that a window display state corresponding to downward sliding is an application closing state.

Further, after it is identified that the window display state corresponding to downward sliding is the application closing state, whether the mobile phone displays the video playing application 1001 in the application closing state depends on whether a sliding parameter of the quick downward sliding operation of the user meets a preset trigger success condition.

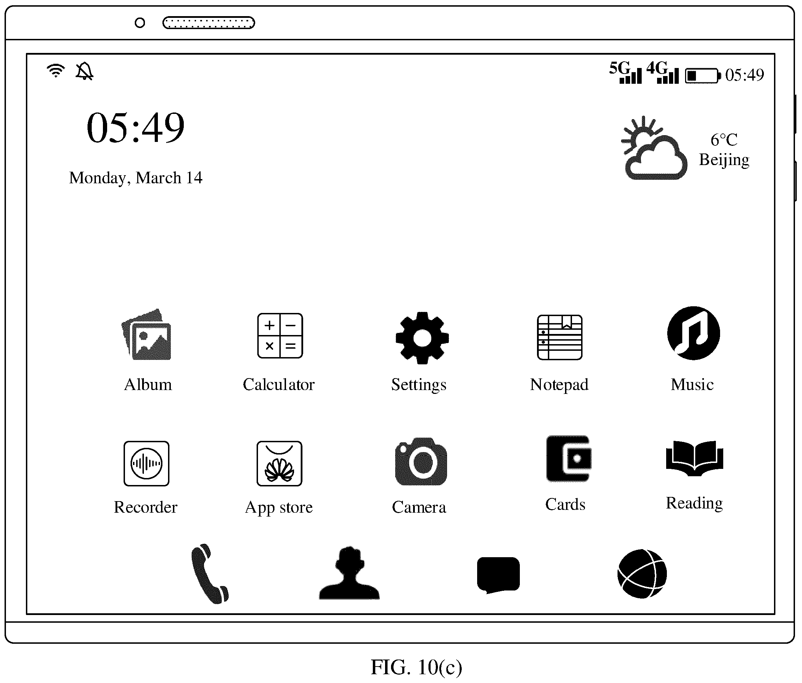

As shown in FIG. 10(a) and FIG. 10(b), after the finger of the user slides for a distance from the location 1003-a shown in FIG. 10(a) in the direction 1004, for example, after the finger of the user slides to the location 1003-b shown in FIG. 10(b), if the finger of the user immediately lifts, the mobile phone may detect, in response to the lifting event, whether a sliding speed of the finger of the user is greater than a preset speed threshold and whether a sliding distance is greater than a preset distance threshold, to determine whether the sliding parameter during sliding of the finger of the user meets the preset trigger success condition. When the detected sliding speed is greater than the preset speed threshold and the sliding distance is greater than the preset distance threshold, the mobile phone may determine that the sliding parameter during sliding of the finger of the user meets the preset trigger success condition. In this case, the mobile phone may perform displaying in the identified application closing state. As shown in FIG. 10(c), the mobile phone stops displaying or does not display the video playing application on the screen.

Optionally, the sliding parameter used by the mobile phone to determine whether the preset trigger success condition is met may alternatively be another sliding parameter, for example, a sliding acceleration or a sliding time. This is not limited in embodiments of this application.

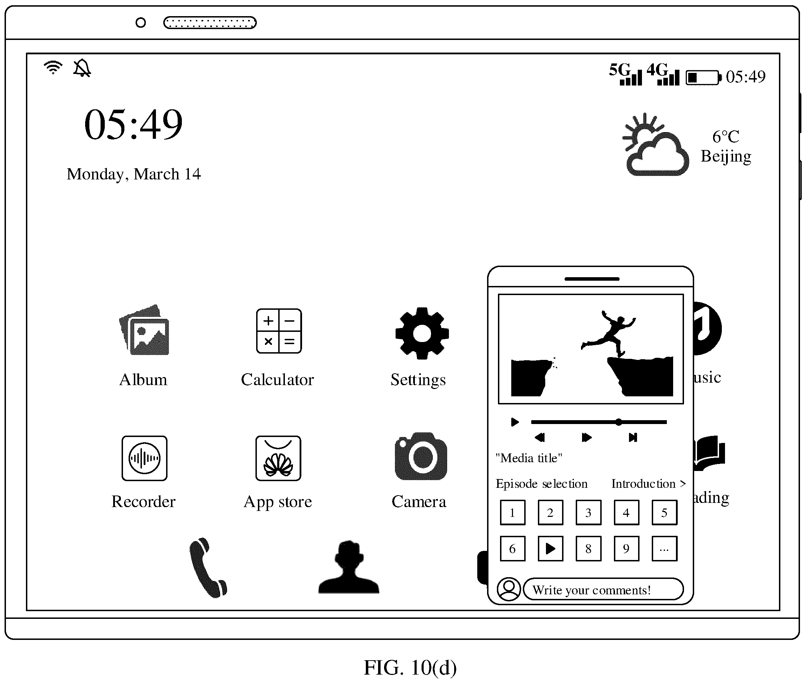

In an example, after the finger of the user slides for a distance from the location 1003-a shown in FIG. 10(a) in the direction 1004, for example, after the finger of the user slides to the location 1003-b shown in FIG. 10(b), if the finger of the user lifts after the finger pauses at the location 1003-b shown in FIG. 10(b) for a preset time period, the mobile phone may determine that a sliding operation performed by the user on the screen this time is a dragging operation, and the dragging operation is only used to move the location of the floating window of the video playing application 1001 on the screen, but is not the quick downward sliding operation for triggering switching to the application closing state in this application. In this case, the mobile phone may maintain and display the floating window of the video playing application 1001 at a current location (as shown in FIG. 10(d)) in response to the dragging operation, and no longer return to the display location shown in FIG. 10(a) for display.

In another example, after the finger of the user slides for a distance from the location 1003-a shown in FIG. 10(a) in the direction 1004, for example, after the finger of the user slides to the location 1003-b shown in FIG. 10(b), if the finger of the user immediately lifts, the mobile phone may determine that a sliding operation performed by the user on the screen this time is a quick downward sliding operation. However, if the mobile phone detects, in response to the lifting event, that a sliding speed is not greater than a preset speed threshold or a detected sliding distance is not greater than a preset distance threshold (in this case, the sliding operation may be quick downward sliding caused by an accidental touch of the user), the mobile phone may determine that a sliding parameter during sliding of the finger of the user does not meet the trigger success condition. In this case, the mobile phone does not perform displaying in the identified application closing state, and directly moves the floating window of the video playing application 1001 back to the display location shown in FIG. 10(a) for display.

After determining that the sliding parameter during sliding of the finger of the user meets the trigger success condition, and before performing displaying in the identified application closing state, the mobile phone may display an intermediate transition state through which the application is switched from the floating window state to the application closing state. Because the sliding direction of the finger of the user identified by the mobile phone is sliding downward, in this implementation solution, the mobile phone may correspondingly display a close icon at a lower edge of the screen, move the floating window of the video playing application 1001 to the close icon, and display, in a moving process, the intermediate transition state through which the application is switched from the floating window state to the application closing state, to reflect effect that the application window is absorbed to the close icon. Optionally, when the mobile phone starts to display the close icon, the close icon may be blurry. Blurriness of the close icon may decrease with an increase of a moving distance of the floating window, that is, the close icon displayed by the mobile phone can gradually focus to be clear as the floating window approaches.

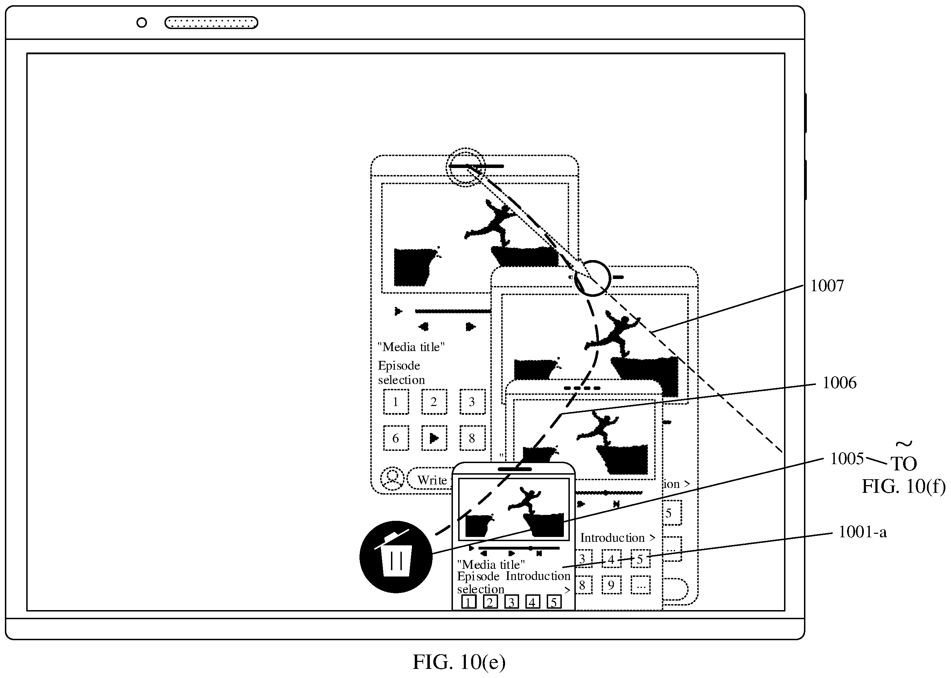

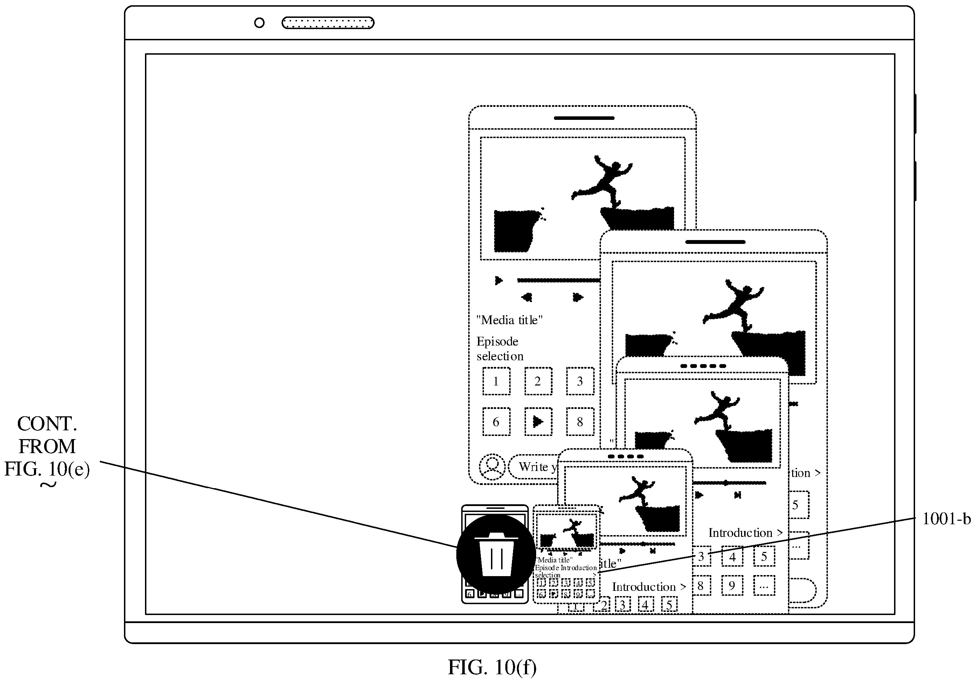

As shown in FIG. 10(e) and FIG. 10(f), after the finger of the user slides for a distance from the location 1003-a shown in FIG. 10(a) in the direction 1004, for example, after the finger of the user slides to the location 1003-b shown in FIG. 10(b), if the finger of the user immediately lifts, the mobile phone may display, in response to the lifting event, a trash can icon 1005 in the middle of the lower edge of the screen of the mobile phone, and may continue to move, from the location 1003-b shown in FIG. 10(b) to the trash can icon 1005, the floating window of the video playing application 1001 downward along a curve track 1006. In addition, in a moving process of the floating window, the intermediate transition state through which the video playing application 1001 is switched from the floating window state to the application closing state is displayed, that is, a size of the floating window of the video playing application 1001 shown in FIG. 10(e) and FIG. 10(f) decreases with an increase of a moving distance, until the entire floating window moves to a central location of the trash can icon 1005, and the screen of the mobile phone no longer displays the application window.

In an example, when the mobile phone moves, from the location 1003-b shown in FIG. 10(b), the floating window of the video playing application 1001 downward along the curve track 1006 for a fifth distance, a display location and a window size of the moved floating window may be shown as a video playing application 1001-a in FIG. 10(e). When the floating window of the video playing application 1001 continues to be moved downward along the curve track 1006 for a sixth distance (greater than the fifth distance), a display location and a window size of the moved floating window may be shown as a video playing application 1001-b in FIG. 10(f). The window size of the video playing application 1001-b is less than the window size of the video playing application 1001-a.

Optionally, whether the mobile phone moves the floating window of the video playing application 1001 downward to the trash can icon 1005 along the curve track 1006 depends on whether the sliding track of the finger of the user can point to the trash can icon 1005. As shown in FIG. 10(b) and FIG. 10(e), an extension line 1007 of the sliding track of the finger of the user points to a right edge of the screen, indicating that the floating window reaches the right edge of the screen and cannot reach the trash can icon 1005 when the floating window moves inertially along the extension line 1007 of the sliding track of the finger of the user. In this case, the mobile phone may move the floating window of the video playing application 701 downward to the trash can icon 1005 along the curve track 1006.

It may be understood that, if the extension line of the sliding track of the finger of the user can point to the trash can icon, the mobile phone may directly move the floating window of the video playing application to the trash can icon along the extension line of the sliding track (not the curve track), and display the intermediate transition state through which the video playing application is switched from the floating window state to the application closing state. Optionally, when responding to the lifting event, the mobile phone may directly display the trash can icon at the lower edge of the screen to which the extension line of the sliding track reaches, so that the mobile phone may directly move the floating window of the video playing application along the extension line of the sliding track to the trash can icon.

Therefore, the user may directly switch the window display state of the application from the floating window state to the full-screen state, the floating bubble state, and the application closing state by performing only quick sliding operations in different directions on the floating window of the application. An operation is convenient, and an accidental touch is not likely to occur. This improves user experience.

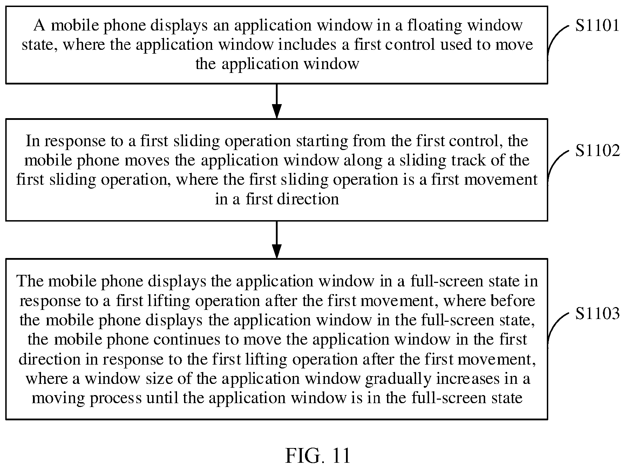

With reference to the accompanying drawings, the following describes an application window display method according to an embodiment of this application. As shown in FIG. 11, the application window display method may include S1101 to S 1103.

S 1101: A mobile phone displays an application window in a floating window state, where the application window includes a first control used to move the application window.

The application window may be a window of any application installed on the mobile phone. The application may be a system application, or may be a third-party application. A specific application type is not limited in embodiments of this application.

In embodiments of this application, the application window may include at least two display states. The display state may be understood as a window state in a case in which the mobile phone displays the application window.

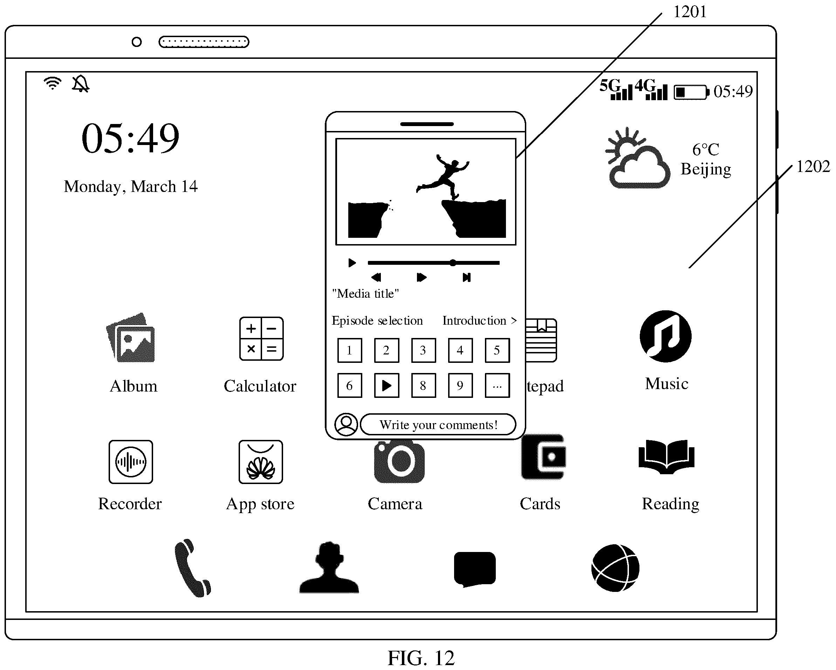

Optionally, the display state may be a floating window state. The floating window state is also referred to as a floating window mode, and may be a state in which an application is displayed on another user interface (for example, an interface of another application or a home screen (namely, a home screen) of the mobile phone) in a form of a window "in a floating manner". The window displayed in the floating manner may be dragged to any location on a screen of the mobile phone, and when a user does not perform an operation on the window displayed in the floating manner, the window displayed in the floating manner remains at a fixed location and does not change with a change of the another user interface. In embodiments of this application, when an application window is displayed in a form of a window in a floating manner, for example, the application window floats, in a form of a window, on an application window displayed in full screen or the application window floats, in a form of a window, on an application window displayed in split screen, a display state of the application window may be defined as a floating window state. For example, refer to FIG. 12. FIG. 12 shows an application window display form in a case in which the mobile phone displays an application window of a video playing application in a floating window state. As shown in FIG. 12, the video playing application 1201 is displayed on a home screen 1202 of the mobile phone in a form of a window "in a floating manner", and a video playing interface of the video playing application 1202 covers a part of the home screen of the mobile phone.

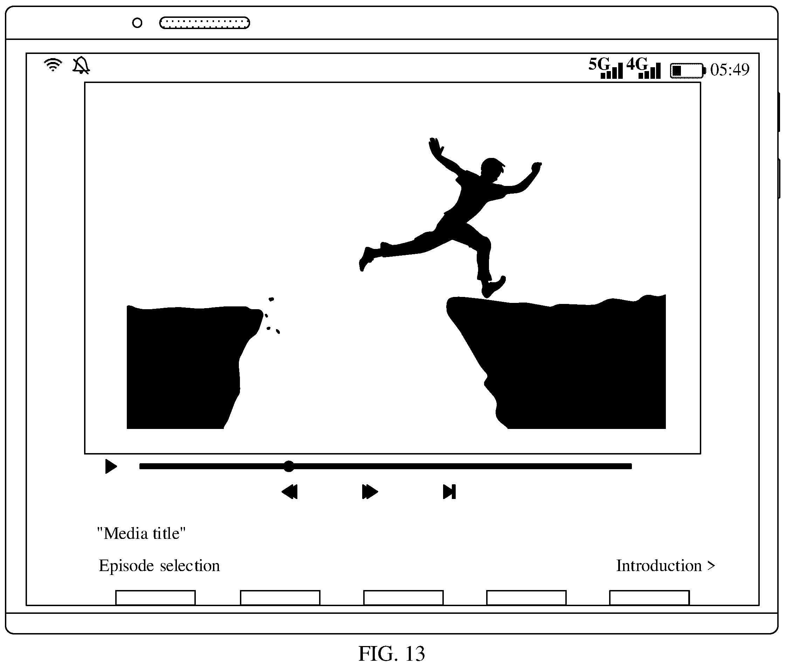

Optionally, the display state may alternatively be a full-screen state. The full-screen state is also referred to as a full-screen mode, and may be a state in which only one application window is displayed on a screen of the mobile phone, and an interface of the application fills the entire screen. In embodiments of this application, when an application window is displayed in full screen, a display state of the application window may be defined as a full-screen state. For example, refer to FIG. 13. FIG. 13 shows an application window display form in a case in which the mobile phone displays an application window of a video playing application in a full-screen state. As shown in FIG. 13, only an application window of one video playing application is displayed on the screen of the mobile phone, and a video playing interface of the video playing application fills the entire screen.

In embodiments of this application, when the mobile phone displays the application window in the floating window state, the application window may include the first control. The first control may indicate the user to move a location of the application window on the screen of the mobile phone. In an implementation, the first control may be a control in an icon form, for example, a drag bar or a drag button. In another implementation, the first control may alternatively be a control in a form of a blank area. When a finger of the user touches the blank area, a moving function of the application window may be activated.

Optionally, when the mobile phone displays the application window in the floating window state, the application window may include a window operation area and a window content area. The window operation area is used to control the window of the application, and the window content area is used to display the interface of the application. The window operation area and the window content area do not overlap. In embodiments of this application, the first control may be disposed in the window operation area. The window operation area may be hidden, and the mobile phone may display only the first control.

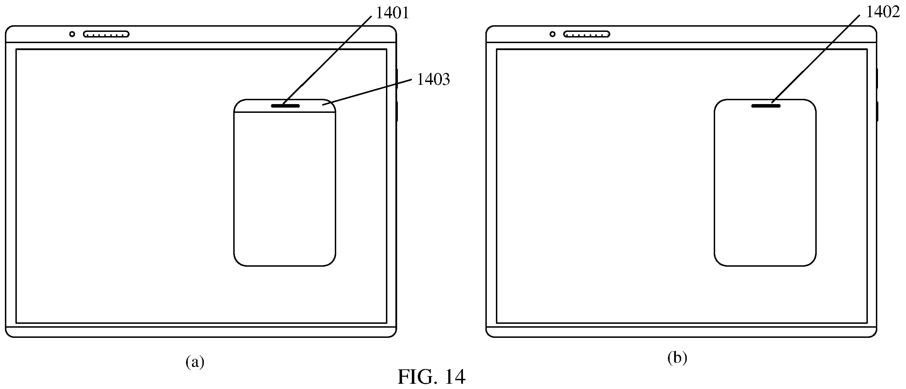

For example, refer to FIG. 14. (a) in FIG. 14 shows an application window display form in a case in which the mobile phone displays the application window in the floating window state. As shown in (a) in FIG. 14, a drag bar control 1401 is disposed in a window operation area 1403 located at the top of the application window, and the mobile phone does not hide the window operation area 1403. (b) in FIG. 14 shows another application window display form in a case in which the mobile phone displays the application window in the floating window state. As shown in (b) in FIG. 14, a drag bar control 1402 is disposed in a window operation area located at the top of the application window, the mobile phone hides the window operation area, and the window operation area is invisible to the user.

Optionally, the window operation area may be located at the top of the application window, or may be located at another location of the application window. An area shape of the window operation area may be a conventional shape (for example, a rectangle) or an unconventional shape (for example, a circle) that fits the application window. This is not limited in embodiments of this application.

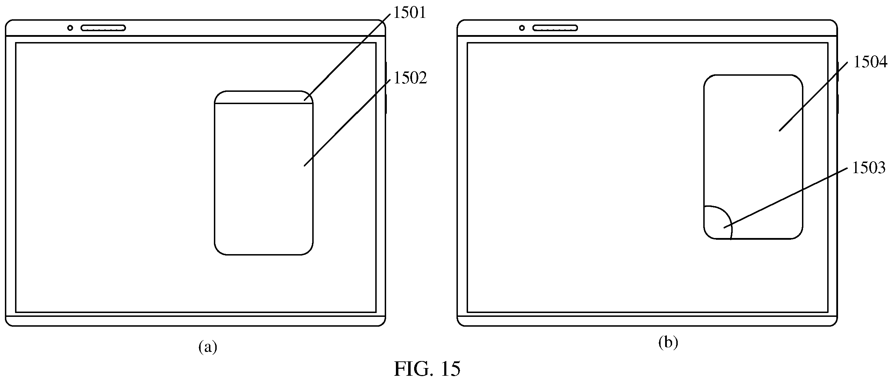

For example, refer to FIG. 15. FIG. 15 shows an application window display form in a case in which the mobile phone displays the application window in the floating window state. As shown in (a) in FIG. 15, the application window includes a window content area 1502 and a window operation area 1501 located at the top of the application window, where an area shape of the window operation area 1501 is a rectangle that fits the application window. (b) in FIG. 15 shows another application window display form in a case in which the mobile phone displays the application window in the floating window state. As shown in (b) in FIG. 15, the application window includes a window content area 1504 and a window operation area 1503 located at a lower left corner of the application window, where an area shape of the window operation area 1503 is a semicircle that fits the application window.

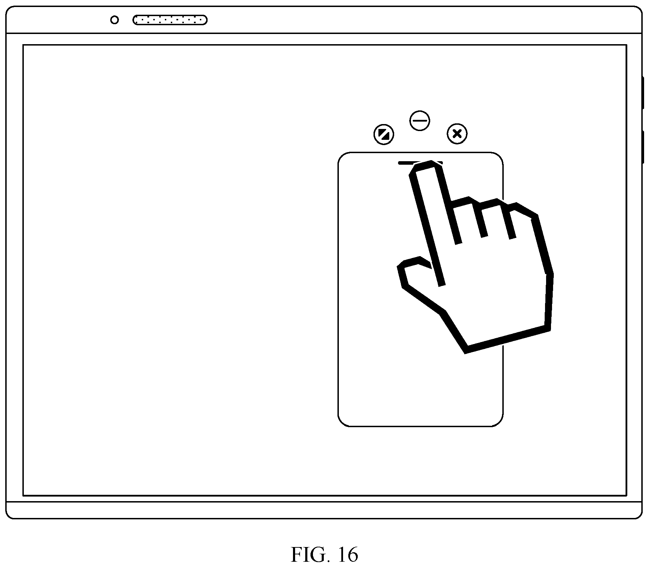

Optionally, the window operation area may further include another operation control. In an implementation, the another operation control may be the full-screen button 602, the minimization button 603, and the close button 604 shown in FIG. 6. In some embodiments, the first control may be a control at an upper level of another operation control. To be specific, the mobile phone may not display the another operation control initially, and displays the another operation control only in response to a touch operation of the user on the first control. The touch operation may be a tap operation, a touch and hold operation, or the like. For example, refer to FIG. 16. When the mobile phone displays the application window in the floating window state, a drag bar control is disposed at the top of the application window. The mobile phone displays another operation control, for example, a full-screen button, a minimization button, or a close button, in response to a touch and hold operation performed by the user on the drag bar control.

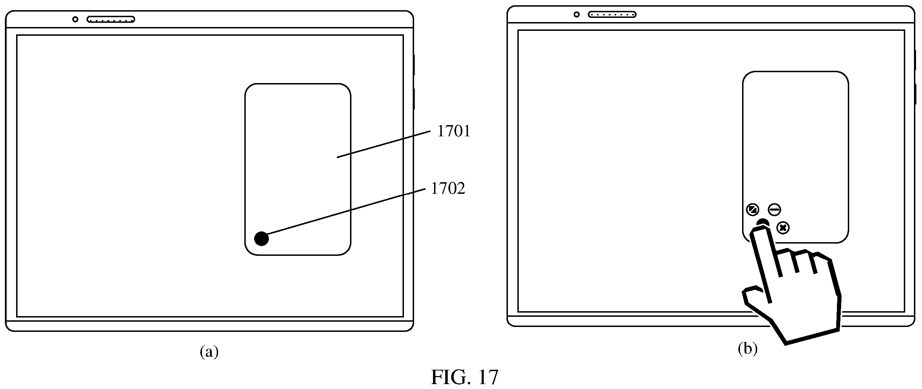

Optionally, the first control may alternatively be a floating control that floats on the application interface, for example, a floating control 1702 shown in (a) in FIG. 17 displayed in a floating manner at a lower left corner of an application window 1701. The entire window area of the application window may be used to display the application interface. The user may move the location of the application window on the screen of the mobile phone through a sliding operation performed on the floating control. In some embodiments, the floating control may alternatively be a control at an upper level of another operation control. For example, as shown in (b) in FIG. 17, the mobile phone displays the another operation control, for example, a full-screen button, a minimization button, or a close button, in response to a touch and hold operation performed by the user on the floating control.

Optionally, when the mobile phone displays the application window in the floating window state, the application window may not include the first control. The user may directly activate the moving function of the application window by performing a preset operation, for example, touching and holding the application window or pressing the application window with a plurality of fingers. It may be understood that a specific manner of moving the application window may not be limited in this application.

In embodiments of this application, when the application window is displayed in the floating window state, the location of the floating window may be any location. The location of the floating window for executing the technical solution is not limited in this application. For example, the floating window may be located at an upper right corner of the screen, and when a first sliding operation (for example, dragging to the top of the screen) is detected, switching to the full-screen state may also be implemented.

S 1102: In response to the first sliding operation starting from the first control, the mobile phone moves the application window along a sliding track of the first sliding operation, where the first sliding operation is a first movement in a first direction.

Optionally, when the mobile phone displays the application window in the floating window state, the mobile phone may receive a user operation in real time. When receiving the user operation, the mobile phone may further determine whether the user operation is a sliding operation performed on the floating window. Therefore, when detecting the sliding operation performed on the floating window, the mobile phone may move the floating window along a sliding track of the sliding operation. The sliding operation may be a quick sliding operation.

It may be understood that the user operation received by the mobile phone in real time may be a sliding operation performed on the floating window, or may be a sliding operation performed on the application interface in the floating window, for example, a sliding operation performed by the user on the application interface to browse interface content of the application, or may be a quick sliding operation performed on another user interface (for example, another application interface or the home screen of the mobile phone), for example, a sliding operation performed by the user on the home screen of the mobile phone to browse an application icon on the home screen. Therefore, when receiving the user operation, the mobile phone needs to determine whether the user operation is a sliding operation performed on the floating window, to determine whether the user intends to switch the display state of the application window through a sliding gesture.

If the mobile phone detects that the user operation is a sliding operation performed on the floating window, the mobile phone may determine that the user intends to change the display state of the application window through a sliding gesture. In this case, the mobile phone may optimize a subsequent application window display method in embodiments of this application. On the contrary, if the mobile phone detects that the user operation is not a sliding operation performed on the floating window, the mobile phone may determine that the user does not intend to switch the display state of the application window through a sliding gesture. In this case, the mobile phone may not optimize a subsequent application window display method in embodiments of this application.

In embodiments of this application, if the user operation detected by the mobile phone is the first sliding operation starting from the first control, the mobile phone may determine that the user operation is a sliding operation performed on the floating window, so that the mobile phone may move the application window along the sliding track of the first sliding operation in response to the first sliding operation. In this way, in a finger sliding process, the floating window may slide on the screen of the mobile phone along a sliding track of a finger.

The first sliding operation is the first movement in the first direction. It may be understood that, after the finger of the user presses and holds the first control, the user does not immediately lift the finger, but continues to slide the finger in the first direction from the first control. Optionally, the first direction may be any one of an up direction, a down direction, a left direction, and a right direction, or may be another direction. In embodiments of this application, an example in which the first direction is upward may be used to describe the technical solutions provided in this application.

For example, as shown in FIG. 7(b), after the user performs a finger pressing operation (the press location 7012-a) on the drag button 7011 at the top of the floating window of the video playing application 701, the user does not immediately lift the finger, but continues to slide the finger in the direction 7013 from the drag button 7011. In a finger sliding process, the floating window may slide on the screen of the mobile phone along the sliding track of the finger. As shown in FIG. 7(b) to FIG. 7(d), the mobile phone may move the location of the floating window of the video playing application 701 on the screen along the sliding track of the finger of the user from the location 7012-a shown in FIG. 7(b) to the location 7012-b shown in FIG. 7(c), and then to the location 7012-c shown in FIG. 7(d).

Optionally, when the finger of the user touches the first control on the application window, the mobile phone may display a touch point prompt, for example, the touch point prompt in the bubble style shown in FIG. 7(b), to prompt the user that the finger successfully acts on the first control. Certainly, the mobile phone may not display the touch point prompt. This is not limited in embodiments of this application.

Optionally, the mobile phone may determine, based on a sliding angle of the sliding operation, whether a sliding direction of the sliding operation is the first direction. In a manner, the mobile phone may preset an angle range corresponding to the first direction. When the mobile phone detects the sliding operation starting from the first control, if the sliding angle of the sliding operation is within the angle range corresponding to the first direction, the mobile phone may determine that the sliding direction of the sliding operation is the first direction.

Optionally, when the first direction is any one of the up direction, the down direction, the left direction, and the right direction, the mobile phone may preset angle ranges corresponding to the up direction, the down direction, the left direction, and the right direction. When detecting the sliding operation starting from the first control, the mobile phone may correspondingly determine the sliding direction of the sliding operation by determining an angle range corresponding to a direction that is in the up direction, the down direction, the left direction, and the right direction and within which the sliding angle of the sliding operation falls.

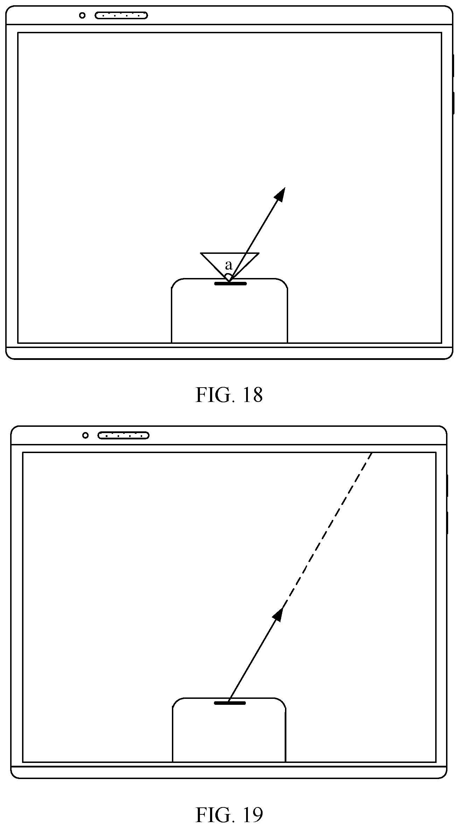

For example, refer to FIG. 18. FIG. 18 shows an angle range a corresponding to the up direction, and an arrow in FIG. 18 is a direction of the sliding track of the sliding operation of the finger of the user. As shown in FIG. 18, the sliding angle of the sliding operation is within the angle range corresponding to the up direction, and the mobile phone determines that the sliding direction of the sliding operation of the finger of the user is upward.

Optionally, the mobile phone may alternatively determine the sliding direction of the sliding operation based on a screen edge that intersects the sliding track of the sliding operation. When the sliding track of the sliding operation does not reach the screen edge, the mobile phone may alternatively determine the sliding direction of the sliding operation based on a screen edge that intersects an extension line of the sliding track.

For example, refer to FIG. 19. An arrow in FIG. 19 is a direction of the sliding track of the sliding operation of the finger of the user. As shown in FIG. 19, a screen edge that intersects an extension line of the sliding track is an upper edge of the screen, and the mobile phone determines that the sliding direction of the sliding operation is upward.

Optionally, when the application window is moved through the foregoing floating control, by touching and holding the application window, or the like, the mobile phone may alternatively perform the application window display method in embodiments of this application when detecting the first sliding operation starting from the floating control, or detecting the first sliding operation starting from touching and holding the application window.

S1 103: The mobile phone displays the application window in the full-screen state in response to a first lifting operation after the first movement, where before the mobile phone displays the application window in the full-screen state, the mobile phone continues to move the application window in the first direction in response to the first lifting operation after the first movement, where a window size of the application window gradually increases in a moving process until the application window is in the full-screen state.

In embodiments of this application, the first lifting operation may be understood as that a lifting operation detected after the first sliding operation ends occurs in a first time period. The first time period may be a time interval whose time length is less than a preset value, and may indicate that the finger of the user stays at a sliding end point location for a very short time period.

In embodiments of this application, movement of the mobile phone in the first direction may be movement approaching the first direction, or may be movement not strictly at a fixed direction angle.

In embodiments of this application, the first sliding operation used to trigger switching to the full-screen state of the window may be a quick sliding operation in the first direction. The quick sliding operation may be understood as a gesture operation in which the finger immediately leaves the screen of the mobile phone after the finger of the user touches the screen of the mobile phone and quickly slides for a distance. In embodiments of this application, when the quick sliding operation is performed on the first control on the application window, the application window may quickly slide along with the finger of the user, and after the finger of the user leaves the screen of the mobile phone, the application window still slides for a distance.

In embodiments of this application, when the first sliding operation starting from the first control ends, that is, when the finger of the user performs the first movement in the first direction from the first control, if the first lifting operation that occurs in the first time period is detected, it may be considered that the finger of the user immediately leaves the screen of the mobile phone after sliding for a distance, and the mobile phone may determine that the detected first sliding operation is a quick sliding operation in the first direction, to trigger switching to the full-screen state of the window, that is, the mobile phone may display the application window in the full-screen state.

For example, the first direction is upward. As shown in FIG. 7(b) to FIG. 7(d), when the mobile phone detects that the finger of the user presses the drag button 7011 at the top of the floating window and slides from the location 7012-a shown in FIG. 7(b) to the location 7012-c shown in FIG. 7(d) (namely, the first movement) in the direction 7013 (the mobile phone identifies that the sliding direction is upward), if the mobile phone detects a finger lifting operation and that the finger lifting operation occurs in the first time period, the mobile phone may display the video playing application 701 in the full-screen state in response to the lifting operation. As shown in FIG. 7(e), the mobile phone displays the video playing application 701 in full screen, and the video playing interface of the video playing application 701 fills the entire screen of the mobile phone.

Optionally, when the first sliding operation starting from the first control ends, that is, when the finger of the user performs the first movement in the first direction from the first control, if a second lifting operation that occurs in a second time period is detected, it may be considered that the finger of the user leaves the screen of the mobile phone after sliding for a distance and staying for a period of time, and the mobile phone may determine that the detected first sliding operation is a dragging and sliding operation, and the dragging and sliding operation is only used to move the location of the application window. In this way, the mobile phone may not trigger switching to the full-screen state of the window, and maintain display of the application window at a location after the movement.

In embodiments of this application, the first lifting operation may be understood as that a lifting operation detected after the first sliding operation ends occurs in the second time period. The second time period is greater than the first time period, indicating that the finger of the user stays for a specific time period at a sliding end point location.

It may be understood that, the dragging and sliding operation is a gesture operation in which the finger leaves, after the finger of the user touches the screen of the mobile phone and slides from one location to another location, the screen of the mobile phone after the finger stays at the another location for a preset time period. In embodiments of this application, when the dragging and sliding operation is performed on the first control, the application window may slide along with the finger of the user until the finger of the user leaves the screen of the mobile phone. In addition, after the finger of the user leaves the screen, the application window does not slide anymore.

Optionally, the mobile phone may associate the full-screen state of the application window with the quick sliding operation in the first direction in advance by using a correspondence table, so that when detecting the first sliding operation starting from the first control on the floating window, the mobile phone may determine, based on the first direction of the first sliding operation and a preset table of a correspondence between a sliding direction and a display state, that the window display state triggered by the first sliding operation is the full-screen state. In this way, the electronic device can quickly and accurately identify a real operation intention of the user based on the first direction of the sliding operation, to quickly switch the application window from the floating window state to the full-screen state required by the user. This avoids a problem of an accidental touch easily caused by a plurality of function buttons, ensures convenience of a user operation, and reduces an accidental touch rate of the user operation.

Optionally, the preset table of the correspondence between a sliding direction and a display state may be preconfigured in the mobile phone, or may be set by the user in the mobile phone. In this way, a correspondence table suitable for a current user may be set based on an operation habit and an operation scenario of the user, so that the user can operate the electronic device conveniently.

In embodiments of this application, because the first sliding operation on the mobile phone is the first movement in the first direction, before the mobile phone displays the application window in the full-screen state, the mobile phone may continue to move the application window in the first direction in response to the first lifting operation. In this way, when the finger of the user ends sliding, that is, the finger leaves the screen, the application window may continue to move in the first direction intended by the user. This reflects inertial movement effect of the application window under control of a user operation, and improves operation flexibility and object simulation effect of the application window. In addition, the user may alternatively determine, by observing whether the movement direction of the application window is a direction actually intended by the user, whether the electronic device is ready to identify the sliding direction of the sliding operation. Therefore, when subsequently observing that the application window does not move toward the direction actually intended by the user, the user can optimize the sliding operation of the user or optimize a method for identifying the sliding direction by the electronic device.

Optionally, the mobile phone may continue to move, in response to the first lifting operation, the application window along an extension line of the sliding track of the first sliding operation until the screen edge is reached, to reflect inertial movement effect of the application window.

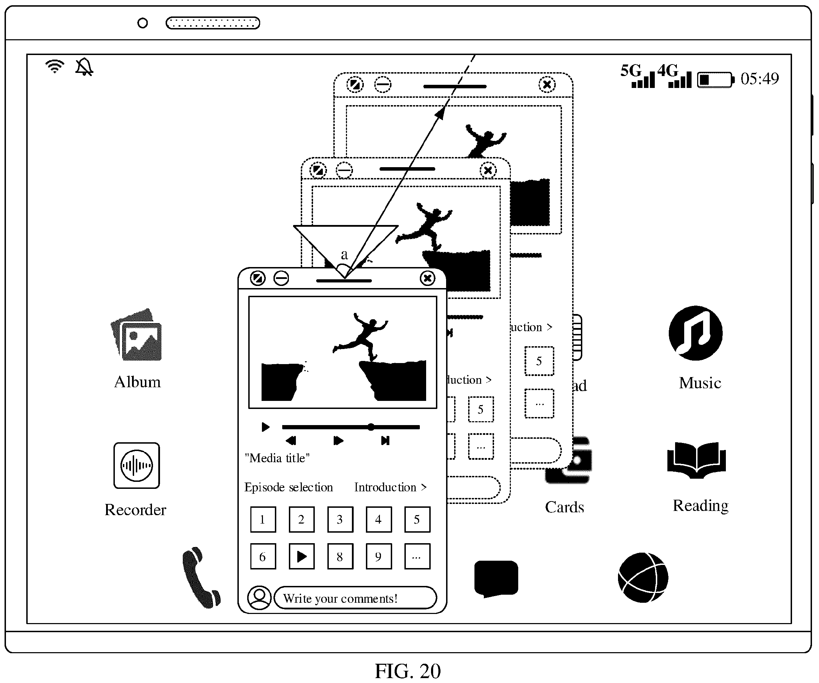

For example, the first direction is upward. Refer to FIG. 20. An arrow in FIG. 20 is the sliding track of the first sliding operation. As shown in FIG. 20, although the first sliding operation does not reach the screen edge, the mobile phone may still inertially move the floating window of the video playing application to an upper edge of the screen along the extension line of the sliding track of the first sliding operation.

In some embodiments, the screen edge to which the application window is moved along the extension line of the sliding track of the first sliding operation may not correspond to the first direction. In other words, the application window may fail to be moved, along the extension line of the sliding track of the first sliding operation, to a screen edge corresponding to the first direction.

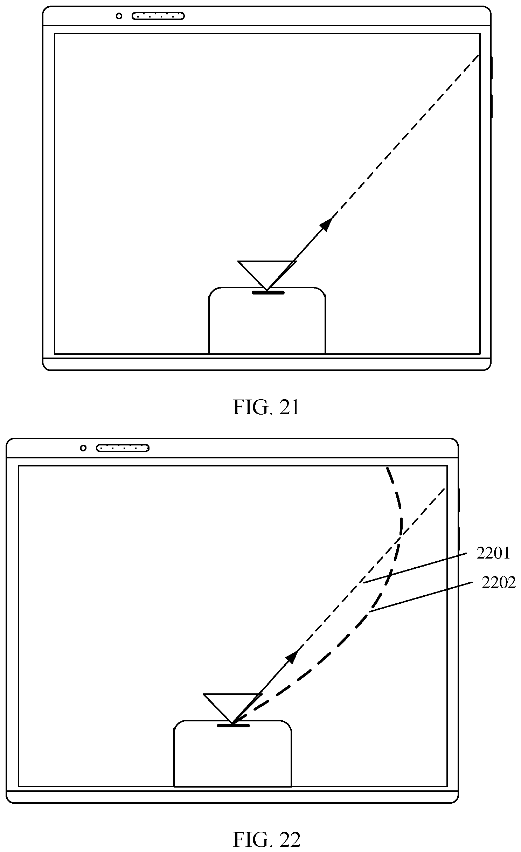

For example, the first direction is upward. Refer to FIG. 21. An arrow in FIG. 21 is the sliding track of the first sliding operation. Because the sliding angle of the first sliding operation is within the angle range of the up direction, the mobile phone may identify that the sliding direction of the first sliding operation is upward. However, as shown in FIG. 21, when the mobile phone moves the application window along the extension line of the sliding track of the first sliding operation, the screen edge to which the application window reaches is a right edge of the screen, which is different from the sliding direction that is upward and that is determined by the mobile phone. The application window cannot reach the upper edge of the screen.

Optionally, when the application window cannot move, along the sliding track of the first sliding operation, to the screen edge corresponding to the first direction, the mobile phone may move the application window along a specified route in response to the first lifting operation. The specified route points to the first direction. The specified route may be a curve. In this way, when the application window cannot move in the first direction intended by the user along the sliding track of the finger of the user, the electronic device may set the specified route along which the application window can move in the first direction intended by the user, so that the application window can move along the specified route, and the user can observe effect of an adsorption movement of the application window in the first direction intended by the user. This improves operation flexibility and object simulation effect of the application window.

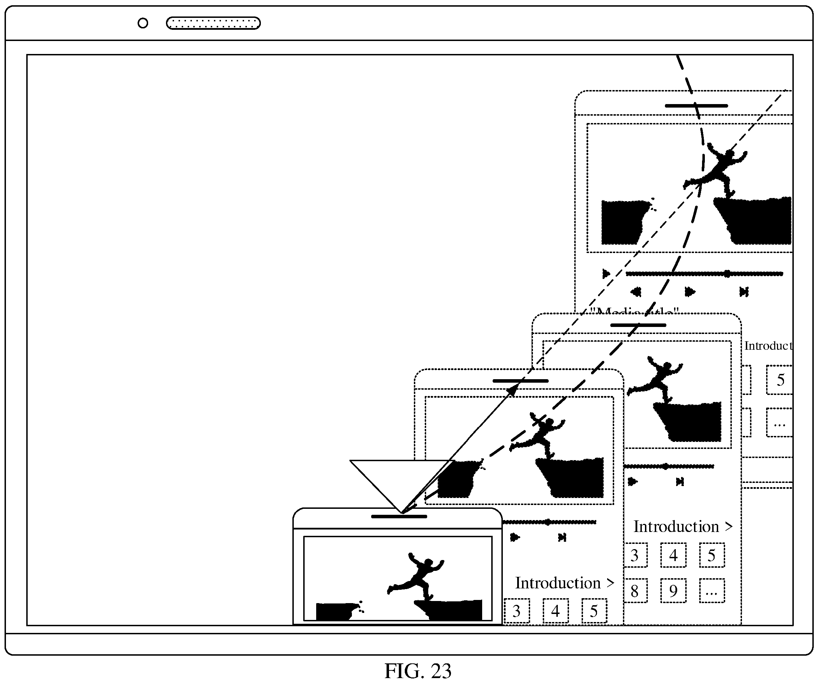

For example, the first direction is upward. As shown in FIG. 22, although an extension line 2201 of the sliding track of the first sliding operation intersects a right edge of the screen, because the first sliding operation is upward sliding, the mobile phone moves the application window to the upper edge of the screen along a curve track 2202 shown in FIG. 22. For example, refer to FIG. 23. FIG. 23 shows a process in which the floating window may move, when the floating window cannot move to the screen edge (namely, the upper edge of the screen) corresponding to the first direction along the sliding track of the first sliding operation, to the upper edge of the screen along a curve track after the finger of the user leaves the screen.

In embodiments of this application, the mobile phone may gradually increase, in response to the first lifting operation, the window size of the application window in a process of continuing to move the application window in the first direction, until the application window is in the full-screen state. In this way, in the process of continuing to move the application window in the first direction, the mobile phone may display an intermediate transition state through which the application is switched from the floating window state to the full-screen state, to reflect dynamic switching of the window form.

For example, the first direction is upward. As shown in FIG. 7(g) and FIG. 7(h), when the mobile phone detects that the finger of the user presses the drag button 7011 at the top of the floating window and slides from the location 7012-a shown in FIG. 7(b) to the location 7012-c shown in FIG. 7(d) (namely, the first movement) in the direction 7013 (the mobile phone identifies that the sliding direction is upward), if the mobile phone detects a finger lifting operation and that the finger lifting operation occurs in the first time period, the mobile phone may continue to move the floating window of the video playing application 701 upward to the upper edge of the screen along the curve track 704 in response to the lifting operation. In addition, in a moving process of the floating window, the intermediate transition state through which the video playing application 701 is switched from the floating window state to the full-screen state is displayed. In other words, a size of the floating window of the video playing application 701 shown in FIG. 7(g) and FIG. 7(h) increases with an increase of a moving distance, until the entire screen is covered. In this case, the full-screen state shown in FIG. 7(e) is presented.

In some embodiments, to improve triggering accuracy of the technical solutions in embodiments of this application, the mobile phone may determine, by presetting a target condition for successful triggering, whether the first sliding operation is successfully triggered, to determine whether the mobile phone switches the application window to the full-screen state.

Optionally, when detecting that a sliding parameter of the first sliding operation meets the target condition, the mobile phone may determine that the first sliding operation successfully triggers switching to the full-screen state of the window, so that the mobile phone may display the application window in the full-screen state in response to the first lifting operation after the first movement. The sliding parameter may include a parameter of at least one of a plurality of dimensions such as a sliding speed, a sliding acceleration, a sliding distance (namely, the first movement), and a sliding time. On the contrary, when detecting that the sliding parameter of the first sliding operation does not meet the target condition, the mobile phone may determine that the first sliding operation is not successfully triggered. In this case, the mobile phone may not perform the application window display method in embodiments of this application, to avoid accidental triggering.

The target condition may be a numerical condition that needs to be met by the sliding parameter of the quick sliding operation. Optionally, the numerical condition may be a parameter threshold, and the target condition may be a parameter threshold set corresponding to a parameter in at least one of the plurality of dimensions such as the sliding speed, the sliding acceleration, the sliding distance, and the sliding time. In other words, the target condition may be a parameter set including parameter thresholds in one or more dimensions. For example, the mobile phone detects that the sliding speed, the sliding acceleration, the sliding distance, and the sliding time of the first sliding operation all need to meet the target condition. The target condition may be a threshold set including a sliding speed threshold, a sliding acceleration threshold, a sliding distance threshold, and a sliding time threshold.

Optionally, the mobile phone may sequentially determine, based on a corresponding dimension, whether the sliding parameter of the first sliding operation meets the target condition. For example, the mobile phone may detect whether a sliding speed of the first sliding operation meets the sliding speed threshold in the target condition, the mobile phone may detect whether a sliding acceleration of the first sliding operation meets the sliding acceleration threshold in the target condition, the mobile phone may detect whether a sliding distance (namely, the first movement) of the first sliding operation meets the sliding distance threshold in the target condition, and the mobile phone may detect whether a sliding time of the first sliding operation meets the sliding time threshold in the target condition.

Optionally, when detecting the first sliding operation starting from the first control, the mobile phone may obtain coordinates of an initial touch point and an end touch point of the first sliding operation in a case in which the first movement is performed on the screen, and the sliding time of the sliding operation. Then, the mobile phone may determine sliding parameters of the sliding operation in the plurality of dimensions such as the sliding speed, the sliding acceleration, and the sliding distance based on the coordinates of the initial touch point and the end touch point and the sliding time of the sliding operation.

Optionally, the target condition may also include an angle determining condition of the sliding direction. Therefore, after detecting the sliding operation starting from the first control, the mobile phone may identify, based on the angle determining condition, whether the sliding direction of the sliding operation is the first direction. In an example, the angle determining condition may be an angle parameter set including a sliding angle range of quick upward sliding, a sliding angle range of quick downward sliding, a sliding angle range of quick leftward sliding, and a sliding angle range of quick rightward sliding.

An embodiment of this application provides an application window display method. When an electronic device displays an application window in a floating window state, a user performs a quick sliding operation in a first direction on a first control of a floating window of an application, to trigger the mobile phone to perform, on the application, an operation of switching from displaying in the floating window state to displaying in a full-screen state. An operation is convenient, and an accidental touch is not likely to occur. This improves user experience.

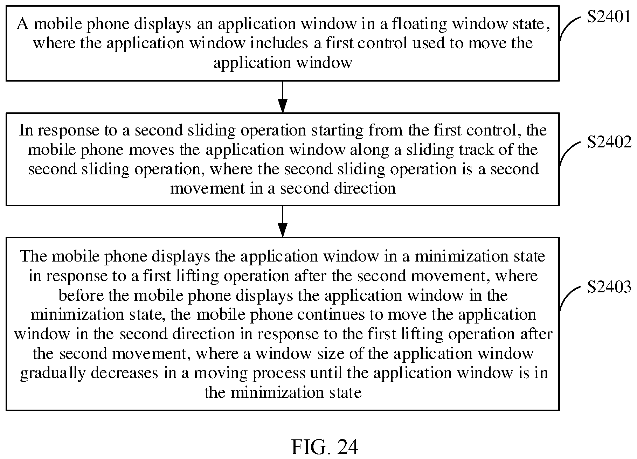

With reference to the accompanying drawings, the following describes another application window display method according to an embodiment of this application. As shown in FIG. 24, the application window display method may include S2401 to S2403.

S2401: A mobile phone displays an application window in a floating window state, where the application window includes a first control used to move the application window.

In embodiments of this application, the application window may include at least two display states. Optionally, the display state may be a floating window state.

Optionally, the display state may alternatively be a minimization state. The minimization state is also referred to as a minimization mode, and may be a state in which the application is displayed on another user interface (for example, an interface of another application or a home screen (namely, a home screen) of the mobile phone) in a small form "in a floating manner". The small form displayed in the floating manner may be attached to an edge location of a screen of the mobile phone, or may be dragged to any location of a screen of the mobile phone. When the user does not perform an operation on the smaller small displayed in the floating manner, the small form displayed in the floating manner remains at a fixed location and does not change with a change of the another user interface. It may be understood that a screen display area occupied when the application window is displayed in the minimization state should be less than a screen display area occupied when the application window is displayed in the floating window state. In embodiments of this application, when an application window is displayed in a small form in a floating manner, for example, the application window floats, in a small form, on an application window displayed in full screen or the application window floats, in a small form, on an application window displayed in split screen, a display state of the application window may be defined as a minimization state.

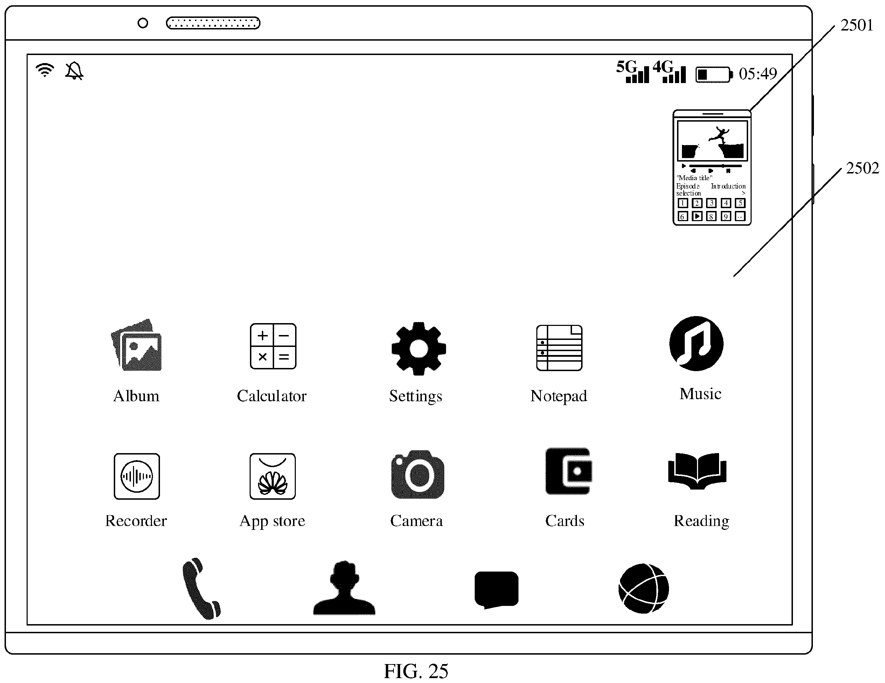

Optionally, the minimization state may include a mini floating window state. The mini floating window state is also referred to as a minimization floating window state, that is, the foregoing small form may be a small window form. For example, refer to FIG. 25. FIG. 25 shows an application window display form in a case in which the mobile phone displays an application window of a video playing application in a mini floating window state. As shown in FIG. 25, a video playing application 2501 is displayed on a home screen 2502 of the mobile phone in a small window form "in a floating manner", and a video playing interface of the video playing application 2501 covers only a small part of the home screen of the mobile phone. It can be seen from FIG. 12 and FIG. 25 that, the screen display area occupied when the video playing application 2501 is displayed in the minimization state is far less than the screen display area occupied when the video playing application 1201 is displayed in the floating window state.

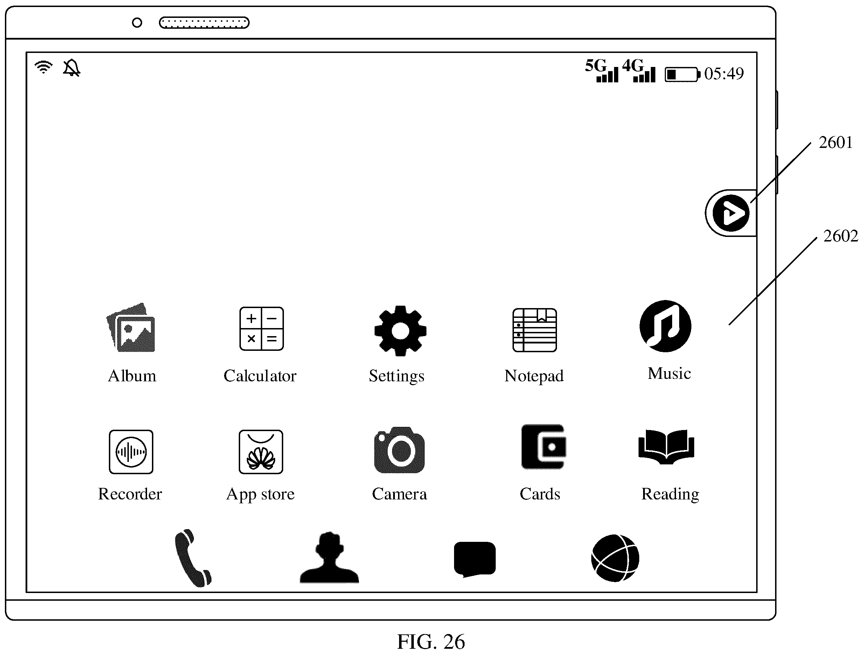

It may be understood that the foregoing small form may alternatively be a small non-window form. In an example, the foregoing small form may alternatively be a small bubble form, that is, the minimization state may include a floating bubble state. The floating bubble state is also referred to as a minimization floating bubble mode. For example, refer to FIG. 26. FIG. 26 shows an application window display form in a case in which the mobile phone displays an application window of a video playing application in a floating bubble state. As shown in FIG. 26, a video playing application 2601 is displayed on a home screen 2602 of the mobile phone in a small bubble form "in a floating manner", and a floating bubble of the video playing application 2601 covers only a small part of the home screen of the mobile phone.

In another example, the foregoing small form may alternatively be a small icon form, that is, the minimization state may further include a floating icon state. The floating icon state is also referred to as a minimization floating icon mode. A specific type of the minimization state is not limited in embodiments of this application, and may be appropriately set according to an actual requirement. For example, the small form may be a small card form, that is, the minimization state may further include a floating card state, and the floating card state is also referred to as a minimization floating card mode.

S2402: In response to a second sliding operation starting from the first control, the mobile phone moves the application window along a sliding track of the second sliding operation, where the second sliding operation is a second movement in a second direction.

In embodiments of this application, if the user operation detected by the mobile phone is the second sliding operation starting from the first control, the mobile phone may determine that the user operation is a sliding operation performed on the floating window, so that the mobile phone may move the application window along the sliding track of the second sliding operation in response to the second sliding operation. In this way, in a finger sliding process, the floating window may slide on the screen of the mobile phone along a sliding track of a finger.

The second sliding operation is the second movement in the second direction. It may be understood that, after the finger of the user presses and holds the first control, the user does not immediately lift the finger, but continues to slide the finger in the second direction from the first control. Optionally, the second direction may be any one of an up direction, a down direction, a left direction, and a right direction, or may be another direction. In embodiments of this application, an example in which the second direction is rightward may be used to describe the technical solutions provided in this application.

Optionally, the mobile phone may determine, based on a sliding angle of the sliding operation, whether a sliding direction of the sliding operation is the second direction. In a manner, the mobile phone may preset an angle range corresponding to the second direction. When the mobile phone detects the sliding operation starting from the first control, if the sliding angle of the sliding operation is within the angle range corresponding to the second direction, the mobile phone may determine that the sliding direction of the sliding operation is the second direction.

S2403: The mobile phone displays the application window in the minimization state in response to a first lifting operation after the second movement, where before the mobile phone displays the application window in the minimization state, the mobile phone continues to move the application window in the second direction in response to the first lifting operation after the second movement, where a window size of the application window gradually decreases in a moving process until the application window is in the minimization state.

In embodiments of this application, the second sliding operation used to trigger switching to the full-screen state of the window may be a quick sliding operation in the second direction.

In embodiments of this application, when the second sliding operation starting from the first control ends, that is, when the finger of the user performs the second movement in the second direction from the first control, if the first lifting operation that occurs in the first time period is detected, it may be considered that the finger of the user immediately leaves the screen of the mobile phone after sliding for a distance, and the mobile phone may determine that the detected second sliding operation is a quick sliding operation in the second direction, to trigger switching to the minimization state of the window, that is, the mobile phone may display the application window in the minimization state.

The minimization state may be a floating bubble state, a mini floating window state, or the like. In embodiments of this application, the floating bubble state is used as an example to end the application window display method provided in embodiments of this application.

For example, the second direction is rightward. As shown in FIG. 9(a) and FIG. 9(b), when the mobile phone detects that the finger of the user presses the drag button 9011 at the top of the floating window and slides from the location 9012-a shown in FIG. 9(a) to the location 9012-b shown in FIG. 9(b) (namely, the second movement) in the direction 9013 (the mobile phone identifies that the sliding direction is rightward), if the mobile phone detects a finger lifting operation and that the finger lifting operation occurs in the first time period, the mobile phone may display the video playing application 901 in the floating bubble state in response to the lifting operation. As shown in FIG. 9(c), the mobile phone displays the video playing application in the floating bubble 902 state, that is, the video playing application is displayed on the home screen of the mobile phone in a form of a small bubble "in a floating manner".

Optionally, when the second sliding operation starting from the first control ends, that is, when the finger of the user performs the second movement in the second direction from the first control, if a second lifting operation that occurs in a second time period is detected, it may be considered that the finger of the user leaves the screen of the mobile phone after sliding for a distance and staying for a period of time, and the mobile phone may determine that the detected second sliding operation is a dragging and sliding operation. In this way, the mobile phone may not trigger switching to the full-screen state of the window, and maintain display of the application window at a location after the movement. The second time period is greater than the first time period.

Optionally, the mobile phone may associate the minimization state of the application window with the quick sliding operation in the second direction in advance by using a correspondence table, so that when detecting the second sliding operation starting from the first control on the floating window, the mobile phone may determine, based on the second direction of the second sliding operation and a preset table of a correspondence between a sliding direction and a display state, that the window display state triggered by the second sliding operation is the minimization state.

In embodiments of this application, because the second sliding operation on the mobile phone is the second movement in the second direction, before the mobile phone displays the application window in the minimization state, the mobile phone may continue to move the application window in the second direction in response to the first lifting operation.

Optionally, the mobile phone may continue to move, in response to the first lifting operation, the application window along an extension line of the sliding track of the second sliding operation until the screen edge is reached, to reflect inertial movement effect of the application window.

In embodiments of this application, the mobile phone may gradually decrease, in response to the first lifting operation, the window size of the application window in a process of continuing to move the application window in the second direction, until the application window is in the minimization state. In this way, in the process of continuing to move the application window in the second direction, the mobile phone may display an intermediate transition state through which the application is switched from the floating window state to the minimization state, to reflect dynamic switching of the window form.

For example, the second direction is rightward. As shown in FIG. 9(e) and FIG. 9(f), after the mobile phone detects that the finger of the user presses the drag button 9011 at the top of the floating window and slides from the location 9012-a shown in FIG. 9(a) to the location 9012-b shown in FIG. 9(b) (namely, the second movement) in the direction 9013 (the mobile phone identifies that the sliding direction is rightward), if the mobile phone detects a finger lifting operation and that the finger lifting operation occurs in the first time period, the mobile phone may move, from the location 9012-b shown in FIG. 9(b) in response to the lifting operation, the floating window of the video playing application 901 rightward along the extension line 903 of the sliding track of the finger of the user to the right edge of the screen. In addition, in a moving process of the floating window, the intermediate transition state through which the video playing application 901 is switched from the floating window state to the floating bubble state is displayed, that is, a size of the floating window of the video playing application 901 shown in FIG. 9(e) and FIG. 9(f) decreases with an increase of a moving distance, until the floating bubble is adsorbed to the right edge of the screen. In this case, displaying in the floating bubble state shown in FIG. 9(c) is presented.

In some embodiments, to improve triggering accuracy of the technical solutions in embodiments of this application, the mobile phone may determine, by presetting a target condition for successful triggering, whether to switch the application window to the minimization state.

Optionally, when detecting that a sliding parameter of the second sliding operation meets the target condition, the mobile phone may determine that the second sliding operation successfully triggers switching to the minimization state of the window, so that the mobile phone may display the application window in the minimization state in response to the first lifting operation in the first time period after the second movement. The sliding parameter may include a parameter of at least one of a plurality of dimensions such as a sliding speed, a sliding acceleration, a sliding distance (namely, the second movement), and a sliding time. On the contrary, when detecting that the sliding parameter of the first sliding operation does not meet the target condition, the mobile phone may determine that the first sliding operation is not successfully triggered. In this case, the mobile phone may not perform the application window display method in embodiments of this application, to avoid accidental triggering.

Optionally, the target condition may also include an angle determining condition of the sliding direction. Therefore, after detecting the sliding operation starting from the first control, the mobile phone may identify, based on the angle determining condition, whether the sliding direction of the sliding operation is the second direction.

An embodiment of this application provides an application window display method. When an electronic device displays an application window in a floating window state, a user performs a quick sliding operation in a second direction on a first control of a floating window of an application, to trigger the mobile phone to perform, on the application, an operation of switching from displaying in the floating window state to displaying in a minimization state. An operation is convenient, and an accidental touch is not likely to occur. This improves user experience.

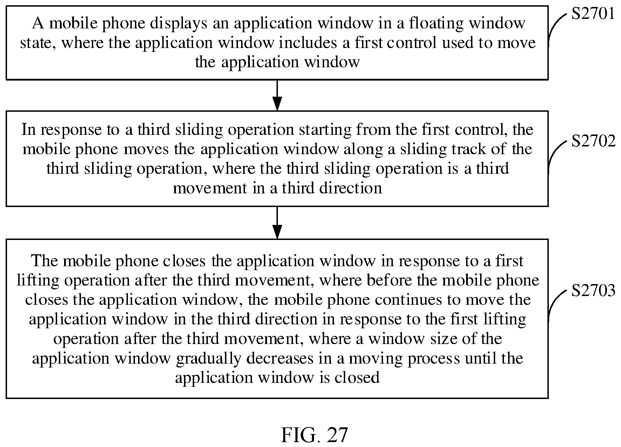

With reference to the accompanying drawings, the following describes another application window display method according to an embodiment of this application. As shown in FIG. 27, the application window display method may include S2701 to S2703.

S2701: A mobile phone displays an application window in a floating window state, where the application window includes a first control used to move the application window.

In embodiments of this application, the application window may include at least two display states. Optionally, the display state may be a floating window state.

Optionally, the display state may be an application closing state. The application closing state is also referred to as an application closing mode, and may be a state in which the application exits a running state or runs only in a background. In this case, the mobile phone stops displaying or does not display one application window of the application on a screen. In embodiments of this application, when an application window is closed or deleted, a display state of the application window may be defined as an application closing state.

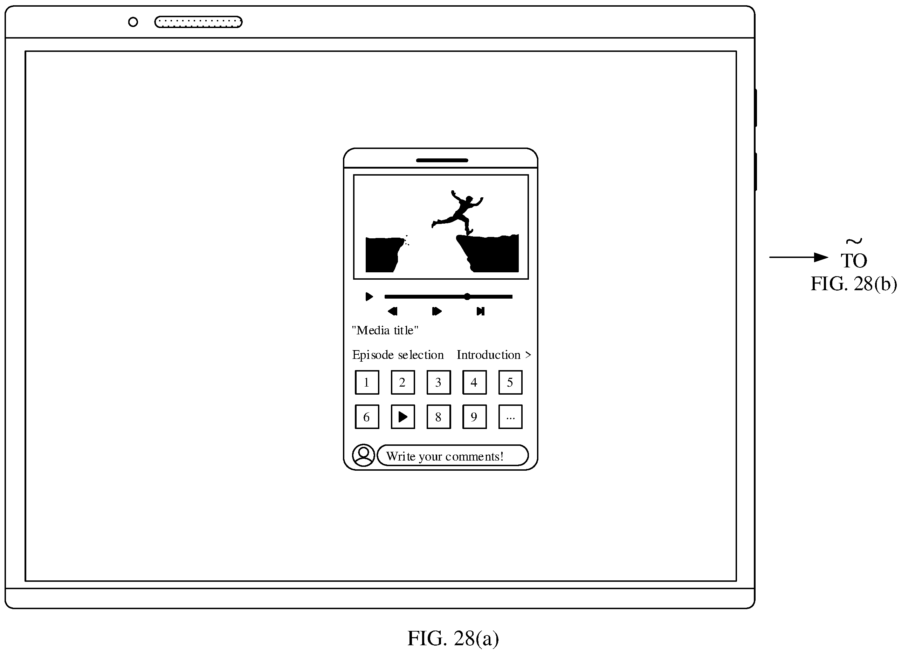

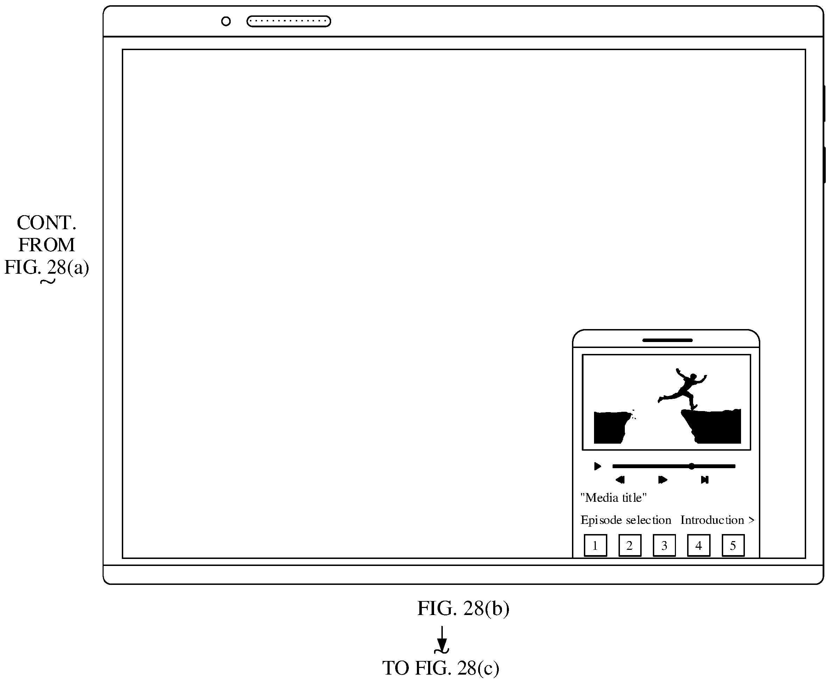

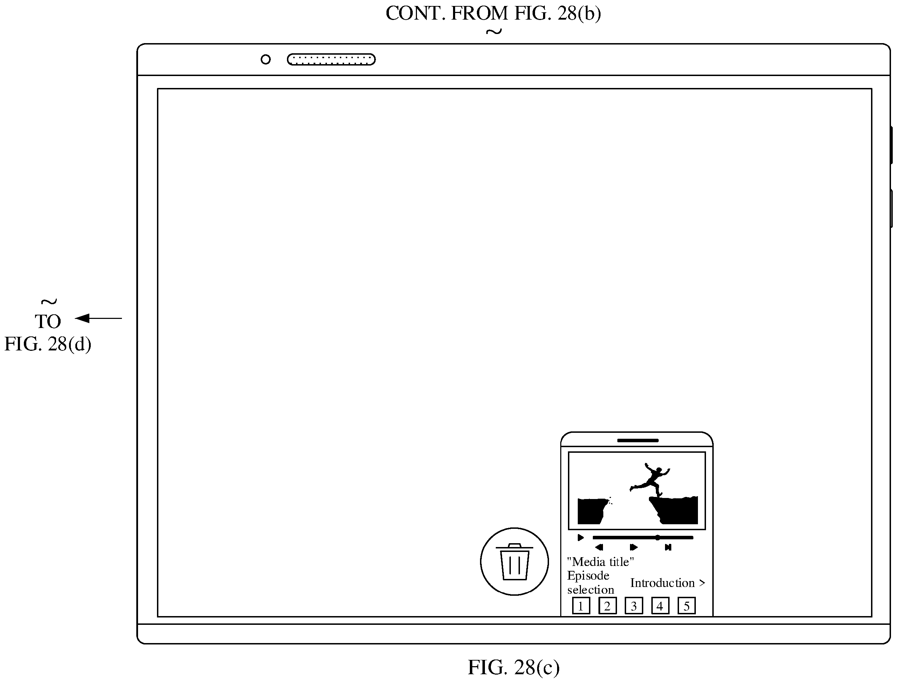

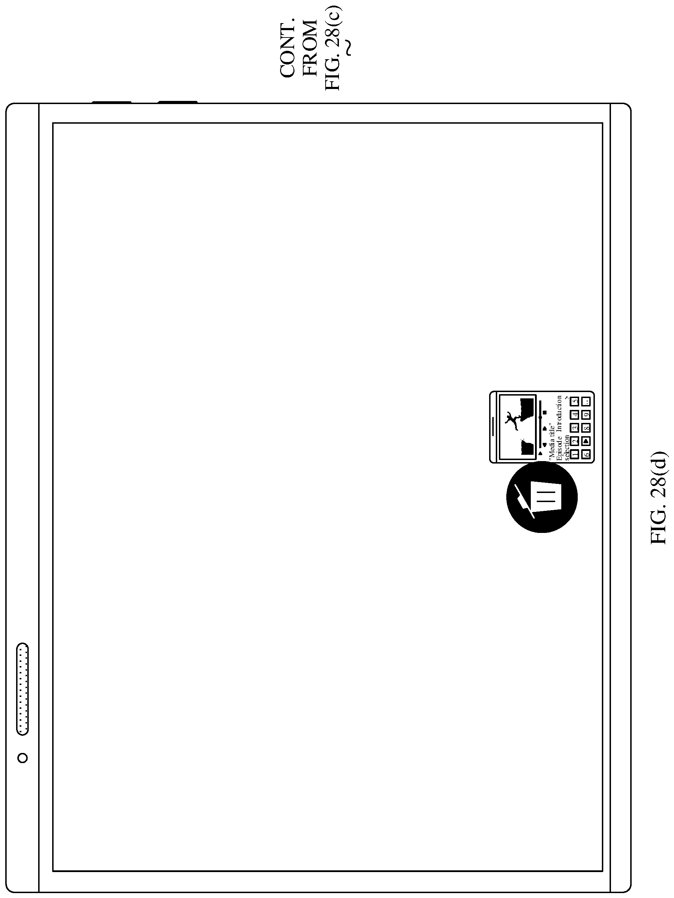

In some embodiments, to improve a visual perception, the application closing state may also be a dynamic process of closing an application window. For example, refer to FIG. 28(a) to FIG. 28(d). FIG. 28(a) to FIG. 28(d) show an application window display form in a case in which the mobile phone displays an application window of a video playing application in an application closing state. FIG. 28(a), FIG. 28(b), FIG. 28(c), and FIG. 28(d) show a dynamic closing process of the application window of the video playing application, that is, the application window of the video playing application moves along a preset track to a central location of a trash can, and the application window gradually shrinks.

S2702: In response to a third sliding operation starting from the first control, the mobile phone moves the application window along a sliding track of the third sliding operation, where the third sliding operation is a third movement in a third direction.

In embodiments of this application, if the user operation detected by the mobile phone is the third sliding operation starting from the first control, the mobile phone may determine that the user operation is a sliding operation performed on the floating window, so that the mobile phone may move the application window along the sliding track of the third sliding operation in response to the third sliding operation. In this way, in a finger sliding process, the floating window may slide on the screen of the mobile phone along a sliding track of a finger.

The third sliding operation is the third movement in the third direction. It may be understood that, after the finger of the user presses and holds the first control, the user does not immediately lift the finger, but continues to slide the finger in the third direction from the first control. Optionally, the third direction may be any one of an up direction, a down direction, a left direction, and a right direction, or may be another direction. In embodiments of this application, an example in which the third direction is downward may be used to describe the technical solutions provided in this application.

Optionally, the mobile phone may preset an angle range corresponding to the third direction. When the mobile phone detects the sliding operation starting from the first control, if the sliding angle of the sliding operation is within the angle range corresponding to the third direction, the mobile phone may determine that the sliding direction of the sliding operation is the third direction.

S2703: The mobile phone closes the application window in response to a first lifting operation after the third movement, where before the mobile phone closes the application window, the mobile phone continues to move the application window in the third direction in response to the first lifting operation after the third movement, where a window size of the application window gradually decreases in a moving process until the application window is closed.

In embodiments of this application, the third sliding operation used to trigger switching to a full-screen state of the window may be a quick sliding operation in the third direction.

In embodiments of this application, when the third sliding operation starting from the first control ends, that is, when the finger of the user performs the third movement in the third direction from the first control, if the first lifting operation that occurs in a first time period is detected, it may be considered that the finger of the user immediately leaves the screen of the mobile phone after sliding for a distance, and the mobile phone may determine that the detected third sliding operation is a quick sliding operation in the third direction, to trigger switching to the application closing state of the window.

For example, the third direction is downward. As shown in FIG. 10(a) and FIG. 10(b), when the mobile phone detects that the finger of the user presses the drag button 1002 at the top of the floating window and slides from the location 1003-a shown in FIG. 10(a) to the location 1003-b shown in FIG. 10(b) (namely, the third movement) in the direction 1004 (the mobile phone identifies that the sliding direction is downward), if the mobile phone detects a finger lifting operation and that the finger lifting operation occurs in the first time period, the mobile phone may display the video playing application 1001 in the application closing state in response to the lifting operation. As shown in FIG. 10(c), the mobile phone stops displaying or does not display the video playing application on the screen.

Optionally, when the third sliding operation starting from the first control ends, that is, when the finger of the user performs the third movement in the third direction from the first control, if a second lifting operation that occurs in a second time period is detected, it may be considered that the finger of the user leaves the screen of the mobile phone after sliding for a distance and staying for a period of time, and the mobile phone may determine that the detected third sliding operation is a dragging and sliding operation. In this way, the mobile phone may not trigger switching to the full-screen state of the window, and maintain display of the application window at a location after the movement. The second time period is greater than the first time period.

Optionally, the mobile phone may associate the application closing state of the application window with the quick sliding operation in the third direction in advance by using a correspondence table, so that when detecting the third sliding operation starting from the first control on the floating window, the mobile phone may determine, based on the third direction of the third sliding operation and a preset table of a correspondence between a sliding direction and a display state, that the window display state triggered by the third sliding operation is the application closing state.

In embodiments of this application, because the third sliding operation on the mobile phone is the third movement in the third direction, before the mobile phone closes the application window, the mobile phone may continue to move the application window in the third direction in response to the first lifting operation.

Optionally, the mobile phone may continue to move, in response to the first lifting operation, the application window along an extension line of the sliding track of the third sliding operation until the entire floating window slides out of a screen edge.

In some embodiments, the screen edge to which the application window is moved along the extension line of the sliding track of the third sliding operation may not correspond to the third direction. In other words, the application window may fail to be moved, along the extension line of the sliding track of the third sliding operation, to a screen edge corresponding to the third direction.

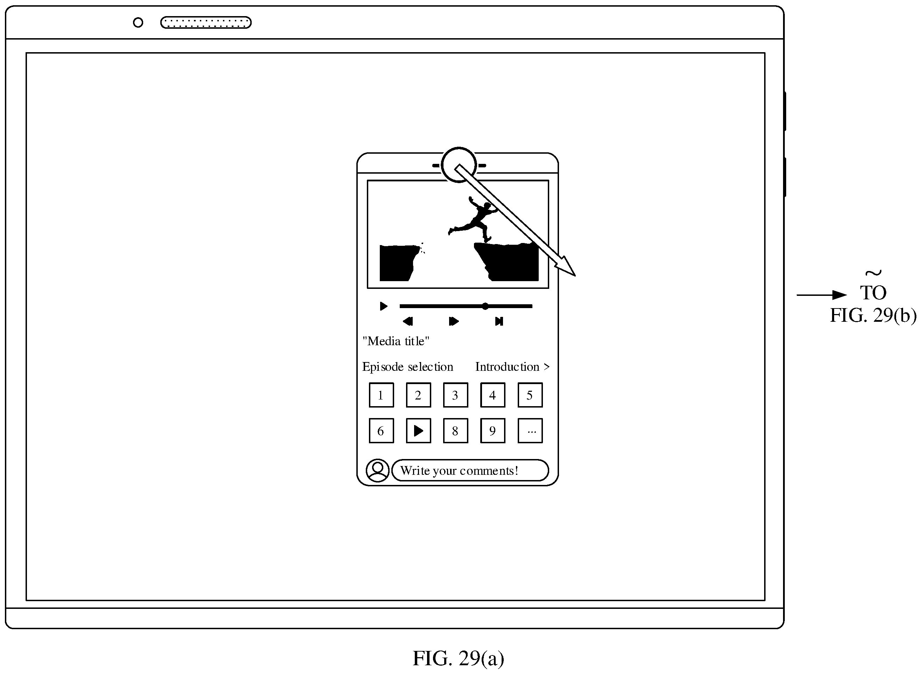

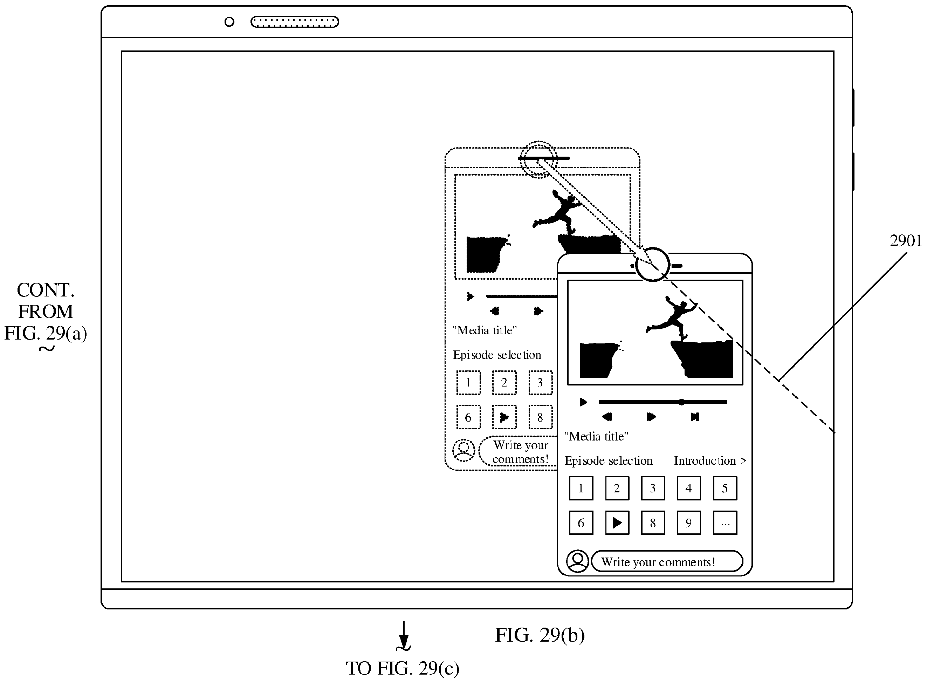

For example, the third direction is downward. Refer to FIG. 29(a) to FIG. 29(d). Arrows shown in FIG. 29(a) and FIG. 29(b) are sliding tracks of the third sliding operation. Because a sliding angle of the third sliding operation is within an angle range of the down direction, the mobile phone may identify that the sliding direction of the third sliding operation is downward. However, as shown in FIG. 29(b), when the mobile phone moves the application window along an extension line 2901 of the sliding track of the first sliding operation, the screen edge that the application window reaches is a right edge of the screen, which is different from the sliding direction that is downward and that is determined by the mobile phone. The application window cannot reach a lower edge of the screen.

Optionally, when the application window cannot move, along the sliding track of the third sliding operation, to the screen edge corresponding to the third direction, the mobile phone may move the application window along a specified route in response to the first lifting operation. The specified route points to the third direction.

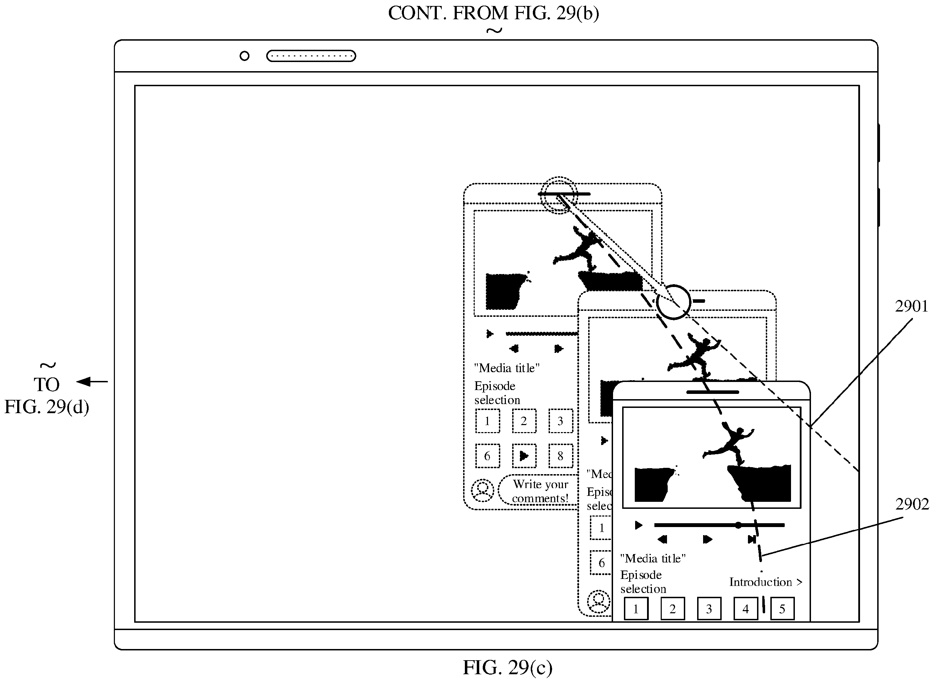

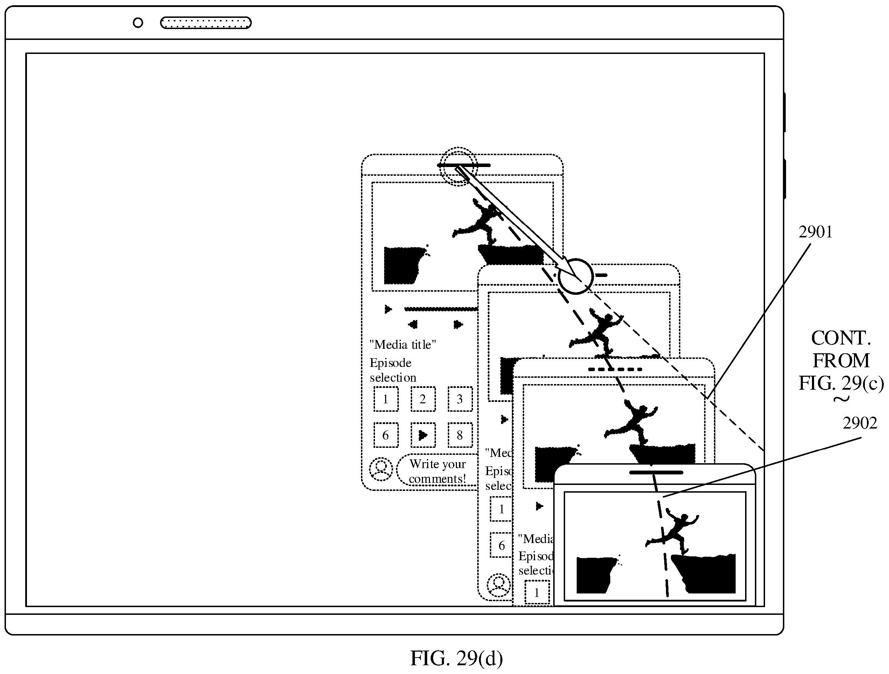

For example, the third direction is downward. As shown in FIG. 29(c), although the extension line 2901 of the sliding track of the third sliding operation intersects the right edge of the screen, because the third sliding operation is downward sliding, the mobile phone moves the application window to the lower edge of the screen along a curve track 2902 shown in FIG. 29(c) and FIG. 29(d) until the entire floating window slides out of the lower edge of the screen.

Optionally, that the mobile phone continues to move the application window in the third direction may be: first displaying a close icon at the screen edge corresponding to the third direction, and then moving the application window to the close icon. The mobile phone may display, in a moving process, an intermediate transition state through which the application is switched from the floating window state to the application closing state, to reflect effect that the application window is absorbed to the close icon. Optionally, when the mobile phone starts to display the close icon, the close icon may be blurry. Blurriness of the close icon may decrease with an increase of a moving distance of the application window, that is, the close icon displayed by the mobile phone can gradually focus to be clear as the floating window approaches.

In embodiments of this application, the mobile phone may gradually decrease, in response to the first lifting operation, the window size of the application window in a process of continuing to move the application window in the third direction, until the application window is closed. In this way, in the process of continuing to move the application window in the third direction, the mobile phone may display the intermediate transition state through which the application is switched from the floating window state to the application closing state, to reflect dynamic switching of the window form.

For example, the third direction is downward. As shown in FIG. 10(e) and FIG. 10(f), after the mobile phone detects that the finger of the user presses the drag button 1002 at the top of the floating window and slides from the location 1003-a shown in FIG. 10(a) to the location 1003-b shown in FIG. 10(b) (namely, the third movement) in the direction 1004 (the mobile phone identifies that the sliding direction is downward), if the mobile phone detects a finger lifting operation and that the finger lifting operation occurs in the first time period, in response to the lifting operation, the mobile phone may display the trash can icon 1005 in the middle of the lower edge of the screen of the mobile phone, and move, from the location 1003-b shown in FIG. 10(b), the floating window of the video playing application 1001 downward along the extension line 1006 of the sliding track of the finger of the user to the trash can icon 1005. In addition, in the moving process of the floating window, the intermediate transition state through which the video playing application 1001 is switched from the floating window state to the application closing state is displayed, that is, a size of the floating window of the video playing application 1001 shown in FIG. 10(e) and FIG. 10(f) decreases with an increase of the moving distance, until the entire floating window moves to a central location of the trash can icon 1005, and the screen of the mobile phone no longer displays the application window. In some embodiments, to improve triggering accuracy of the technical solutions in embodiments of this application, the mobile phone may determine, by presetting a target condition for successful triggering, whether to switch the application window to the application closing state.

Optionally, when detecting that a sliding parameter of the third sliding operation meets the target condition, the mobile phone may determine that the third sliding operation successfully triggers switching to the closing state of the window, so that the mobile phone may close the application window in response to the first lifting operation in the first time period after the third movement. The sliding parameter may include a parameter of at least one of a plurality of dimensions such as a sliding speed, a sliding acceleration, a sliding distance (namely, the third movement), and a sliding time. On the contrary, when detecting that the sliding parameter of the third sliding operation does not meet the target condition, the mobile phone may determine that the third sliding operation is not successfully triggered. In this case, the mobile phone may not perform the application window display method in embodiments of this application, to avoid accidental triggering.

Optionally, the target condition may also include an angle determining condition of the sliding direction. Therefore, after detecting the sliding operation starting from the third control, the mobile phone may identify, based on the angle determining condition, whether the sliding direction of the sliding operation is the third direction.

An embodiment of this application provides an application window display method. When an electronic device displays an application window in a floating window state, a user performs a quick sliding operation in a third direction on a first control of a floating window of an application, to trigger the mobile phone to perform, on the application, an operation of switching from displaying in the floating window state to displaying in an application closing state. An operation is convenient, and an accidental touch is not likely to occur. This improves user experience.

It may be understood that, the user can complete, in one step by sliding the application window in a form of the floating window, switching of the application from the floating window to different display states such as a full-screen state, a minimization state, and an application closing state. This not avoids scattered and separated gesture interaction, makes interaction more systematic because a triggering gesture is simple and concentrated in the floating window, facilitates learning and remembering by the user, and greatly improves interaction efficiency. In addition, because a hot zone (usually an entire screen) corresponding to the sliding operation is large, a user operation is convenient, and an accidental touch is not likely to occur. This greatly improves operation accuracy of the user.

In embodiments of this application, the mobile phone may associate, in advance by using a correspondence table, a sliding direction of the sliding operation performed on the first control with another display state. Therefore, when detecting the sliding operation starting from the first control, the mobile phone may determine, based on the sliding direction of the sliding operation and a preset table of a correspondence between a sliding direction and a display state, a corresponding display state to be switched to by the sliding operation.

For example, the mobile phone may associate, in advance with other different display states of the application, sliding operations that are performed on the first control on the floating window in four sliding directions such as upward sliding, downward sliding, leftward sliding, and rightward sliding.

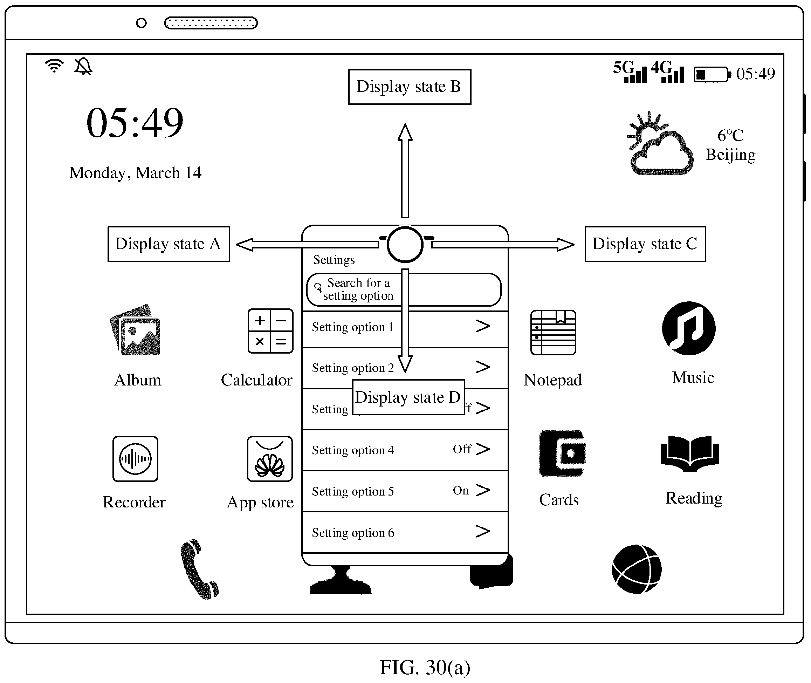

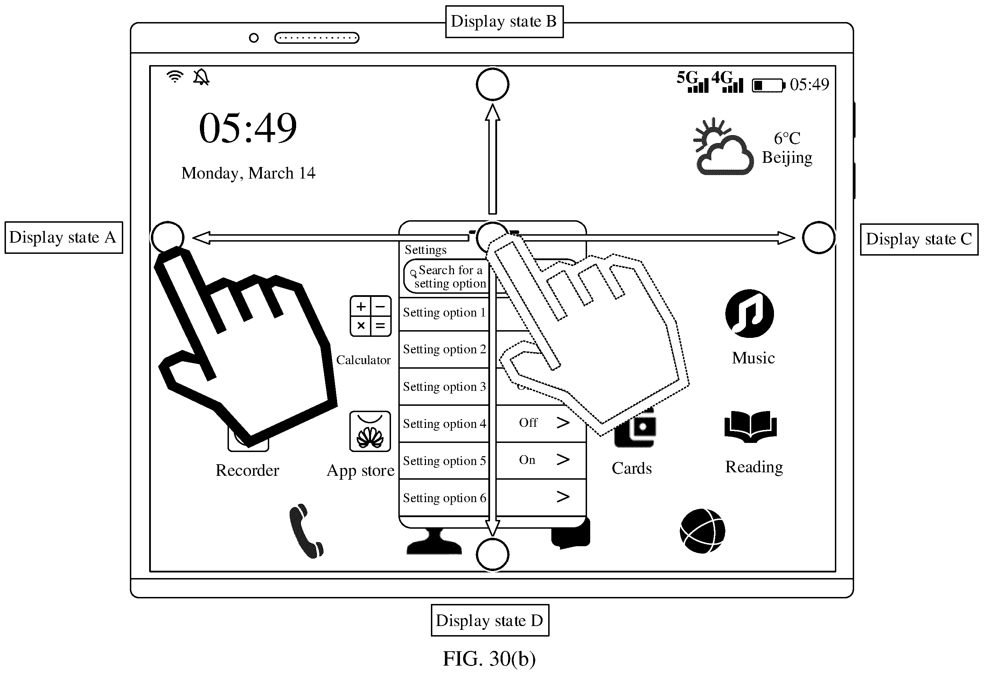

For example, refer to FIG. 30(a) and FIG. 30(b). FIG. 30(a) and FIG. 30(b) are diagrams of corresponding display states to be switched to by different sliding directions of the floating window. FIG. 30(a) shows a leftward sliding operation for setting the floating window of the application, which may correspondingly trigger setting of a display state A of the application. FIG. 30(a) shows an upward sliding operation for setting the floating window of the application, which may correspondingly trigger setting of a display state B of the application. FIG. 30(a) shows a rightward sliding operation for setting the floating window of the application, which may correspondingly trigger setting of a display state C of the application. FIG. 30(a) shows a downward sliding operation for setting the floating window of the application, which may correspondingly trigger setting a display state D of the application. The display state A, the display state B, the display state C, and the display state D may be any other state other than the floating window state. The display state A, the display state B, the display state C, and the display state D may be the same or different.

In some embodiments, a correspondence between a sliding direction of a sliding operation performed on the first control and a display state of the application window may be a one-to-one relationship. In other words, sliding operations in different sliding directions correspondingly trigger different display states of the application window.

For example, refer to FIG. 31(a) and FIG. 31(b). FIG. 31(a) and FIG. 31(b) show displaying of a video playing application in a full-screen state triggered when a finger of the user touches a drag button at the top of a floating window of the video playing application and performs a sliding gesture operation of quick upward sliding.

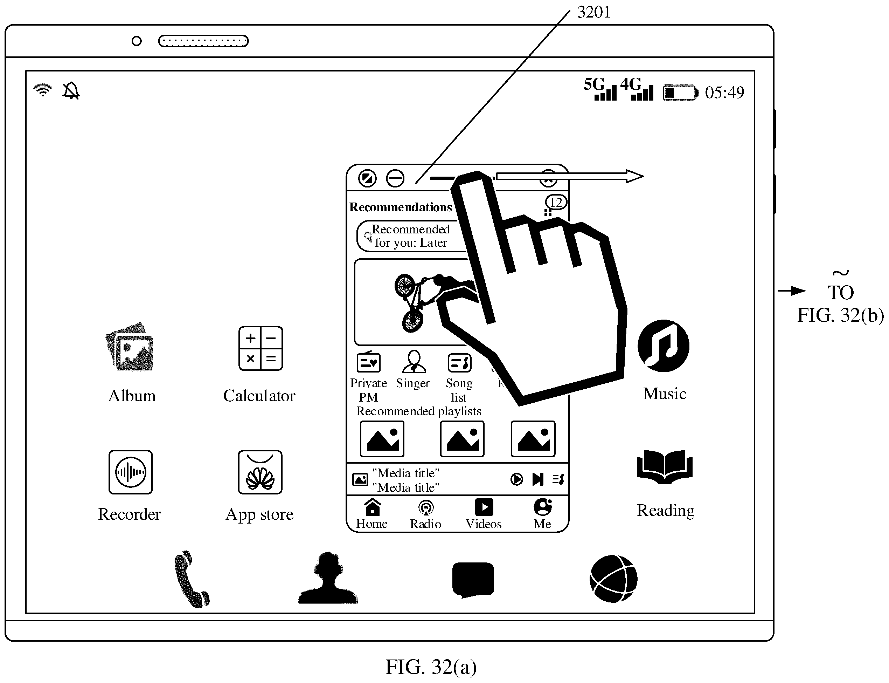

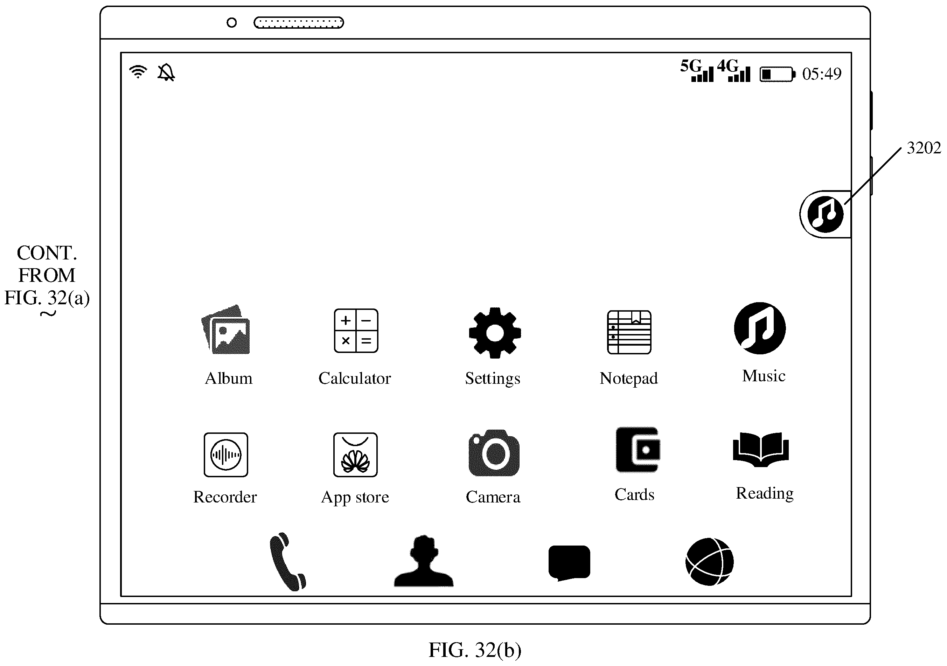

For example, refer to FIG. 32(a) and FIG. 32(b). FIG. 32(a) shows displaying of a music playing application in a floating bubble 3202 state triggered when a finger of the user touches a drag button at the top of a floating window 3201 of the music playing application and performs a sliding gesture operation of quick rightward sliding.

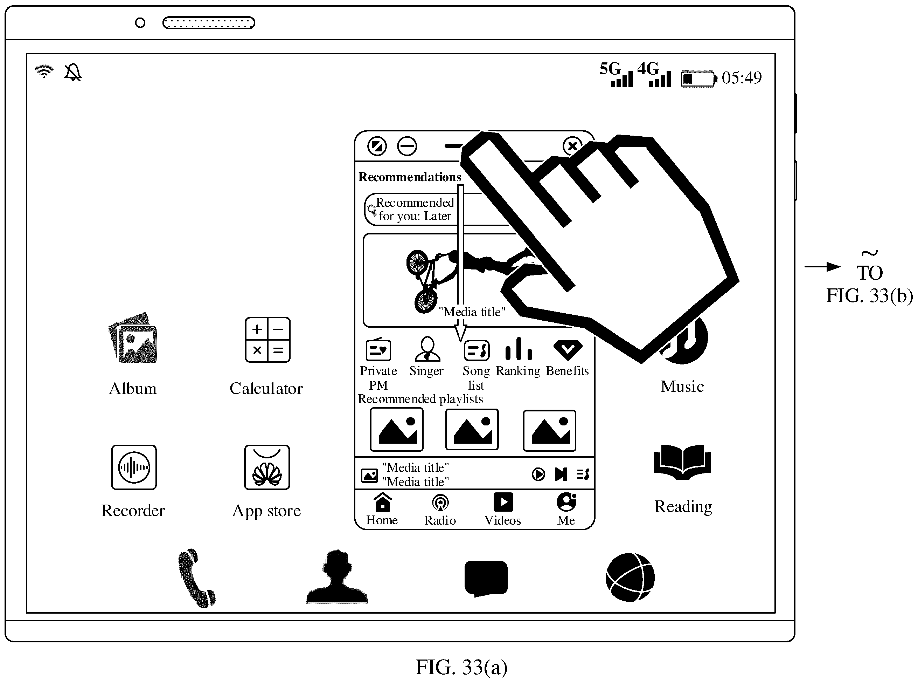

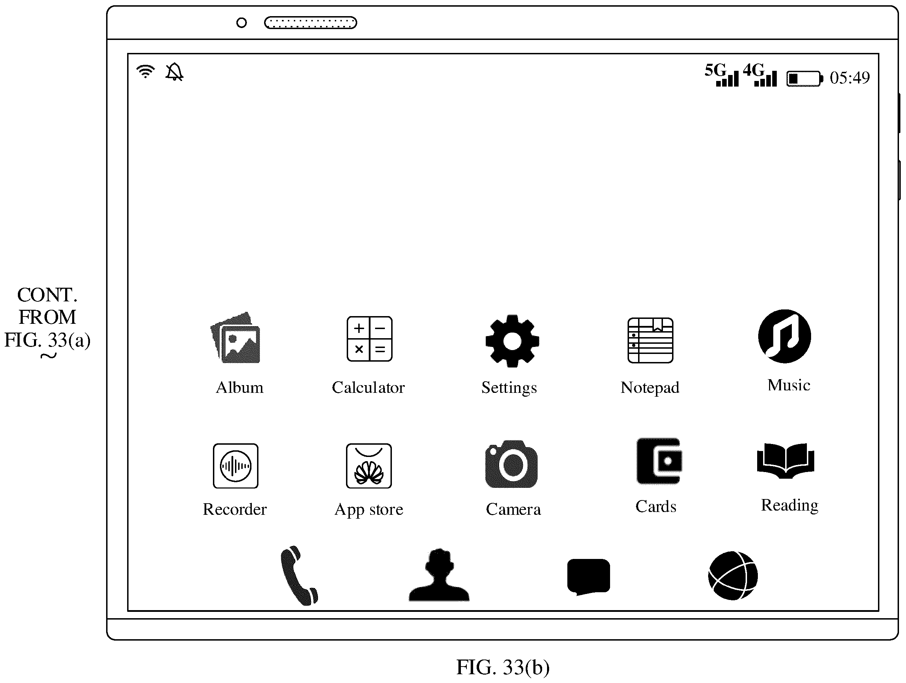

For example, refer to FIG. 33(a) and FIG. 33(b). FIG. 33(a) shows displaying of a music playing application in an application closing state triggered when a finger of the user touches a drag button at the top of a floating window of the music playing application and performs a sliding gesture operation of quick downward sliding. It can be learned from FIG. 33(b) that the screen of the mobile phone no longer displays an application window of the music playing application.

In some other embodiments, a correspondence between a sliding direction of a sliding operation performed on the first control and a display state of the application window may alternatively be a many-to-one relationship. In other words, sliding operations in different sliding directions performed on the first control may correspondingly trigger a same display state of the application window.

For example, refer to FIG. 32(a) and FIG. 32(b). When detecting that the user performs a quick rightward sliding operation on the drag button at the top of the floating window of the music playing application, the mobile phone may determine that a corresponding display state to be switched to by the quick rightward sliding operation is the floating bubble state, as shown in FIG. 32(a) and FIG. 32(b). Refer to FIG. 34(a) and FIG. 34(b). When detecting that the user performs a quick leftward sliding operation on the drag button at the top of the floating window of the music playing application, the mobile phone may still determine that a corresponding display state to be switched to by the quick leftward sliding operation is the floating bubble state. It can be learned from FIG. 32(b) and FIG. 34(b) that the music playing application is displayed on a home screen of the mobile phone in a floating manner in the floating bubble state under quick sliding operations in different directions.

Further, in some embodiments, when the sliding operations in different sliding directions performed on the first control correspondingly trigger the same display state of the application window, the mobile phone may adjust a display location of the application window in the same display state based on the sliding direction of the sliding operation.

For example, when corresponding display states to be switched to by both a quick sliding operation in a rightward direction and a quick sliding operation in a leftward direction are the floating bubble state, the mobile phone may adjust the display location of the floating bubble based on the sliding direction of the sliding operation.

For example, when detecting a quick rightward sliding operation performed on the drag button at the top of the floating window, the mobile phone may determine that a corresponding display state to be switched to by the quick rightward sliding operation is the floating bubble state, and may determine that a display location of the floating bubble on the screen of the mobile phone may be a right edge of the screen, as shown in FIG. 32(a) and FIG. 32(b). Alternatively, when detecting a quick leftward sliding operation performed on the drag button at the top of the floating window, the mobile phone may determine that a corresponding display state to be switched to by the quick leftward sliding operation is the floating bubble state, and may determine that a display location of the floating bubble on the screen of the mobile phone may be a left edge of the screen, as shown in FIG. 34(a) and FIG. 34(b).

Optionally, when a sliding operation used to trigger switching of the display state of the window may alternatively be a dragging and sliding operation starting from the first control to a screen edge, the mobile phone may alternatively determine, based on the screen edge to which the application window is dragged, a corresponding display state to be switched to by the dragging and sliding operation.

In some embodiments, if the mobile phone detects that a user operation is a dragging and sliding operation performed on the application window, the mobile phone needs to determine whether the application window is dragged to the screen edge, to determine whether the user intends to switch the display state of the application window through the dragging and sliding operation. If the mobile phone detects that the application window is dragged to the screen edge, the mobile phone may determine that the user intends to switch the display state of the application window through the dragging and sliding operation. In this way, the mobile phone may determine a corresponding triggered second display state based on the dragging and sliding operation. On the contrary, if the mobile phone detects that the application window is not dragged to the screen edge, the mobile phone may determine that the user does not intend to switch the display state of the application window through the dragging and sliding gesture, and only moves the location of the application window on the screen. In this case, the mobile phone may not optimize the subsequent application window display method in embodiments of this application.

Optionally, when detecting that at least one edge of the application window overlaps the screen edge, the mobile phone may determine that the application window is dragged to the screen edge. Optionally, when detecting that an end point of a dragging track of the dragging and sliding operation is close to the screen edge, the mobile phone may also determine that the application window is dragged to the screen edge.

In an implementation, the mobile phone may associate edges of the screen on different sides with other display states of the application window in advance by using a correspondence table, so that when detecting the dragging and sliding operation starting from the first control, the mobile phone may determine, based on a screen edge to which the dragging and sliding operation reaches and a preset table of a correspondence between a screen edge and a display state, the second display state corresponding to the dragging and sliding operation. Optionally, the preset table of the correspondence between a screen edge and a display state may be preconfigured in the mobile phone, or may be set by the user in the mobile phone.

For example, refer to FIG. 30(b). FIG. 30(b) is a diagram of corresponding display states to be switched to when the floating window is dragged to the edges of the screen on different sides. As shown in FIG. 30(b). FIG. 30(b) shows a dragging and sliding operation of dragging the floating window to a left edge of the screen, which may correspondingly trigger setting of the display state A of the application. FIG. 30(b) shows a dragging and sliding operation of dragging the floating window to an upper edge of the screen, which may correspondingly trigger setting of the display state B of the application. FIG. 30(b) shows a dragging and sliding operation of dragging the floating window to a right edge of the screen, which may correspondingly trigger setting of the display state C of the application. FIG. 30(b) shows a dragging and sliding operation of dragging the floating window to a lower edge of the screen, which may correspondingly trigger setting of the display state D of the application. The display state A, the display state B, the display state C, and the display state D may be any other state other than the floating window state. The display state A, the display state B, the display state C, and the display state D may be the same or different. In an example, the display state A may be the minimization state, the display state B may be the full-screen state, the display state C may be the minimization state, and the display state D may be the application closing state.

In some embodiments, a correspondence between a screen edge and a display state of the application window may be a one-to-one relationship. In other words, dragging and sliding operations for dragging to the edges of the screen on different sides may correspondingly trigger different display states of the application window. The correspondence may alternatively be a many-to-one relationship.

It may be understood that, the foregoing technical solutions of switching from the floating window state to another display state are also applicable to scenarios of a split-screen state and a multi-task window state. This implements technical effect of switching from the split-screen state to another display state, and implements technical effect of switching from the multi-task window state to another display state.

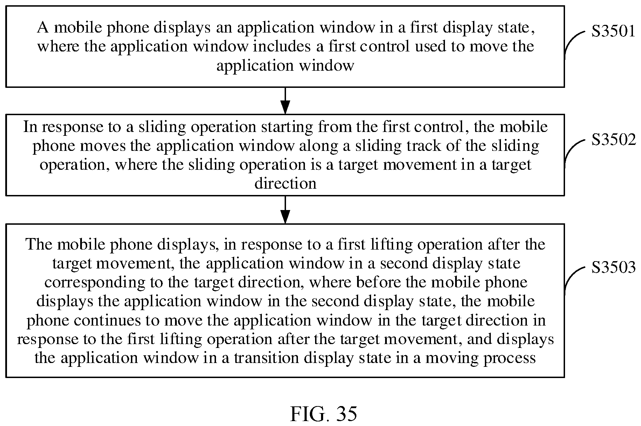

With reference to the accompanying drawings, the following describes another application window display method according to an embodiment of this application. As shown in FIG. 35, the application window display method may include S3501 to S3503.

S3501: A mobile phone displays an application window in a first display state, where the application window includes a first control used to move the application window.

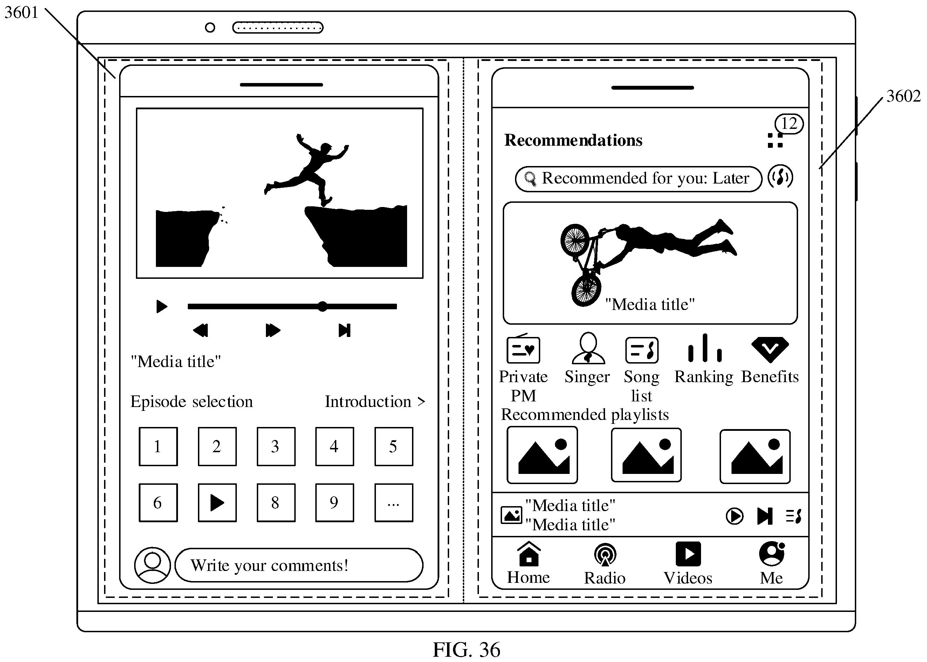

Optionally, the first display state may be a split-screen state. The split-screen state is also referred to as a split-screen mode, and may be a state in which two or more application windows separately occupy a part of a screen of the mobile phone, and any two application windows do not overlap. Each application window may be changed in size, and a location of the application window is unmovable, or may be dragged to any location on the screen of the mobile phone. In embodiments of this application, when an application window is displayed in split screen, a display state of the application window may be defined as a split-screen state. For example, refer to FIG. 36. FIG. 36 shows display forms of application windows of a video playing application and a music playing application in a case in which the mobile phone displays the application windows of the video playing application and the music playing application in the split-screen state. As shown in FIG. 36, application windows of a video playing application 3601 and a music playing application 3602 each occupy a half of the screen of the mobile phone, and the two application windows do not overlap.

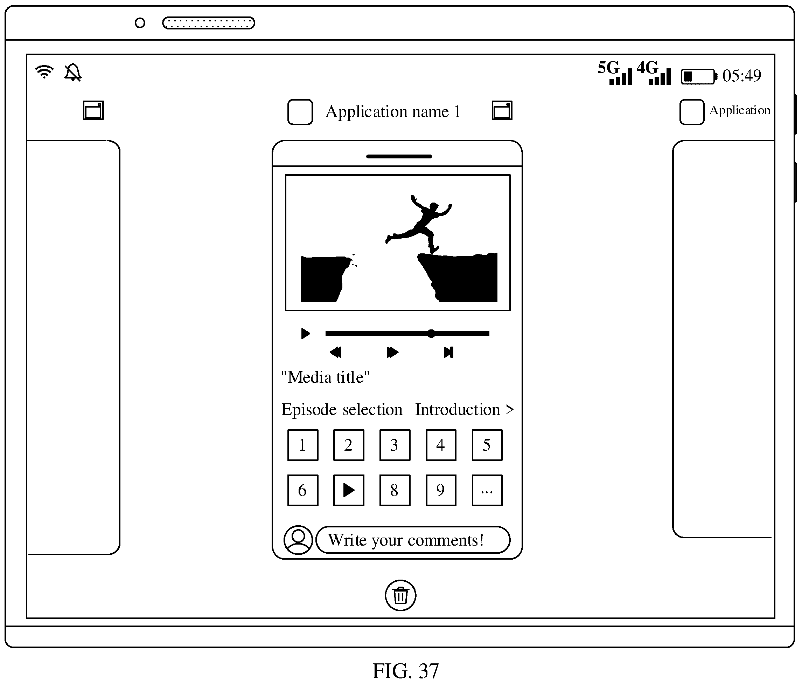

Optionally, the first display state may be a multi-task window state. The multi-task window state is also referred to as a multi-task window mode, and may be a state in which at least one application window is displayed on a home screen (namely, a home screen) of the mobile phone in a form of a window "in a floating manner" when an application enters a multi-task management interface. Each application window displayed in the floating manner may be dragged to any location on the screen of the mobile phone. The multi-task management interface may be an interface used to manage and display an application window of an application that is in a running state. When there are a plurality of application windows on the multi-task management interface, a user may randomly switch to open one application window. The application in the running state may include but is not limited to an application running in a foreground and an application running in a background. In embodiments of this application, when an application window enters a multi-task management interface, a display state of the application window may be defined as a multi-task window state. For example, refer FIG. 37. FIG. 37 shows a display form of an application window of a video playing application in a case in which the mobile phone displays the application window of the video playing application in a multi-task window state. As shown in FIG. 37, the application window of the video playing application is displayed on a home screen of the mobile phone in a form of a window "in a floating manner", and an adjacent application window of another application is also displayed on the home screen of the mobile phone in a form of a window "in a floating manner" on each of the left side and the right side.

It may be understood that the display state of the application window is merely an example, and a specific display state type is not limited in embodiments of this application.

S3502: In response to a sliding operation starting from the first control, the mobile phone moves the application window along a sliding track of the sliding operation, where the sliding operation is a target movement in a target direction.

S3 503: The mobile phone displays, in response to a first lifting operation after the target movement, the application window in a second display state corresponding to the target direction, where before the mobile phone displays the application window in the second display state, the mobile phone continues to move the application window in the target direction in response to the first lifting operation after the target movement, and displays the application window in a transition display state in a moving process.

The transition display state may be a changing state in which the first display state is switched to the second display state. Optionally, the second display state may be any state, that is mentioned above, other than the first display state.

For example, the first display state is a split-screen state. The mobile phone displays the application window in the split-screen state. A second application window is displayed in a first area, a third application window is displayed in a second area, and the second application window includes a second control. The mobile phone moves the second application window along a sliding track of a sliding operation in response to the sliding operation starting from the second control, where the sliding operation is a target movement in the target direction. The mobile phone displays, in response to the first lifting operation after the target movement, the second application window in the second display state corresponding to the target direction. Before the mobile phone displays the second application window in the second display state, the mobile phone continues to move the second application window in the target direction in response to the first lifting operation after the target movement, and displays the second application window in a transition display state in a moving process.

For example, the first display state is a split-screen state. The mobile phone may associate sliding operations on a split-screen window of the application in four sliding directions such as upward sliding, downward sliding, leftward sliding, and rightward sliding with other different display states of the application in advance.

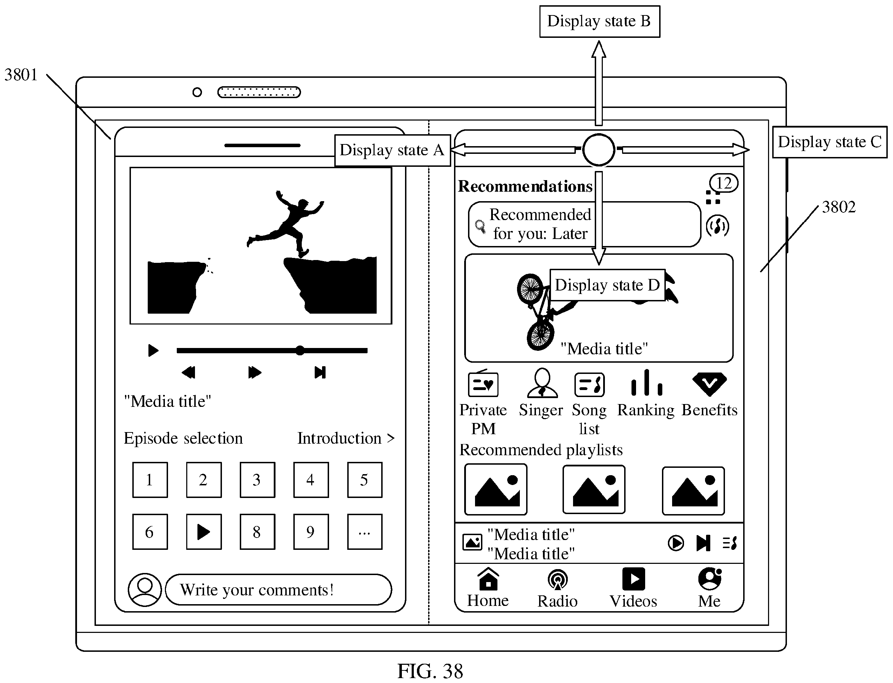

For example, refer to FIG. 38. FIG. 38 is a diagram of corresponding display states to be switched to by different sliding directions of the split-screen window. The mobile phone displays application windows of a video playing application 3801 and a music playing application 3802 in a split-screen state. As shown in FIG. 38, when detecting a sliding operation performed on a split-screen window of the audio playing application 3802, the mobile phone may determine a corresponding second display state based on a sliding direction of the sliding operation.

A leftward sliding operation on the split-screen window of the audio playing application in FIG. 38 may correspondingly trigger a display state A of the audio playing application. An upward sliding operation on the split-screen window of the audio playing application in FIG. 38 may correspondingly trigger a display state B of the audio playing application. A rightward sliding operation on the split-screen window of the audio playing application in FIG. 38 may correspondingly trigger a display state C of the audio playing application. A downward sliding operation on the split-screen window of the audio playing application in FIG. 38 may correspondingly trigger a display state D of the audio playing application. The display state A, the display state B, the display state C, and the display state D may be any other state other than the split-screen state. The display state A, the display state B, the display state C, and the display state D may be the same or different. In an example, the display state A may be a minimization state, the display state B may be a full-screen state, the display state C may be a floating window state, and the display state D may be an application closing state.

It may be understood that if the first display state is the split-screen state, the screen of the mobile phone displays a plurality of application windows. Optionally, when the mobile phone determines, based on a sliding action performed by the user on a target application window, that the second display state of the target application window is any one of the minimization state, the floating window state, the application closing state, or the like, the mobile phone may also adaptively adjust a display state of another application window based on a quantity of remaining application windows.

In an example, when there is one remaining application window, when the target application window is displayed in the second display state, only one application window remains on the screen of the mobile phone and is displayed in the split-screen state. This affects visual perception. Therefore, the mobile phone may switch the another application window from the split-screen state to a full-screen state for display. In another example, when there are a plurality of remaining application windows, when the target application window is displayed in the second display state, a split-screen display area originally occupied by the target application window is reserved on the screen of the mobile phone. Therefore, the mobile phone may adjust a split-screen display area occupied by the remaining application windows, to cover an entire display area of the screen.

For example, the first display state is a multi-task window state. The mobile phone may associate sliding operations on a task window of the application in four sliding directions such as upward sliding, downward sliding, leftward sliding, and rightward sliding with other different display states of the application in advance.

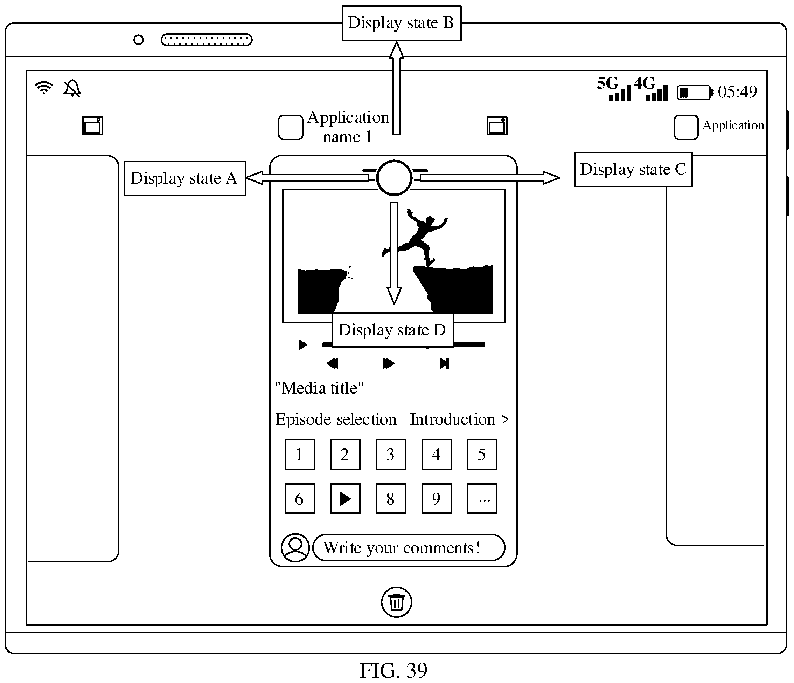

For example, refer to FIG. 39. FIG. 39 is a diagram of corresponding display states to be switched to by different sliding directions of the task window. The mobile phone displays the application window of the video playing application in the multi-task window state. As shown in FIG. 39, a leftward sliding operation on the task window of the video playing application in FIG. 39 may correspondingly trigger a display state A of the video playing application. An upward sliding operation on the task window of the video playing application in FIG. 39 may correspondingly trigger a display state B of the video playing application. A rightward sliding operation on the task window of the video playing application in FIG. 39 may correspondingly trigger a display state C of the video playing application. A downward sliding operation on the task window of the video playing application in FIG. 39 may correspondingly trigger a display state D of the video playing application. The display state A, the display state B, the display state C, and the display state D may be any other state other than the multi-task window state. The display state A, the display state B, the display state C, and the display state D may be the same or different. In an example, the display state A may be a minimization state, the display state B may be a split-screen state, the display state C may be a floating window state, and the display state D may be an application closing state.

An embodiment of this application provides an application window display method. When an electronic device displays an application window in a first display state, a user may trigger, by performing a quick sliding operation in a target direction on a first control of a floating window of an application, the mobile phone to perform, on the application, an operation of switching from the first display state to a second display state. The second display state is corresponding to the target direction. An operation is convenient, and an accidental touch is not likely to occur. This improves user experience.

Because difficulty degrees of sliding a finger of the user at different locations on a screen of the mobile phone are different, if a same target condition is used to determine whether a sliding operation is successfully triggered, triggering experience at different locations is easily inconsistent, that is, triggering is difficult at some locations, and triggering is easy at some locations. Therefore, in some embodiments, the mobile phone may perform area division on the screen based on a sliding difficulty degree of the finger of the user on the screen. Then, the mobile phone may set different target conditions based on different areas of the screen obtained through division.

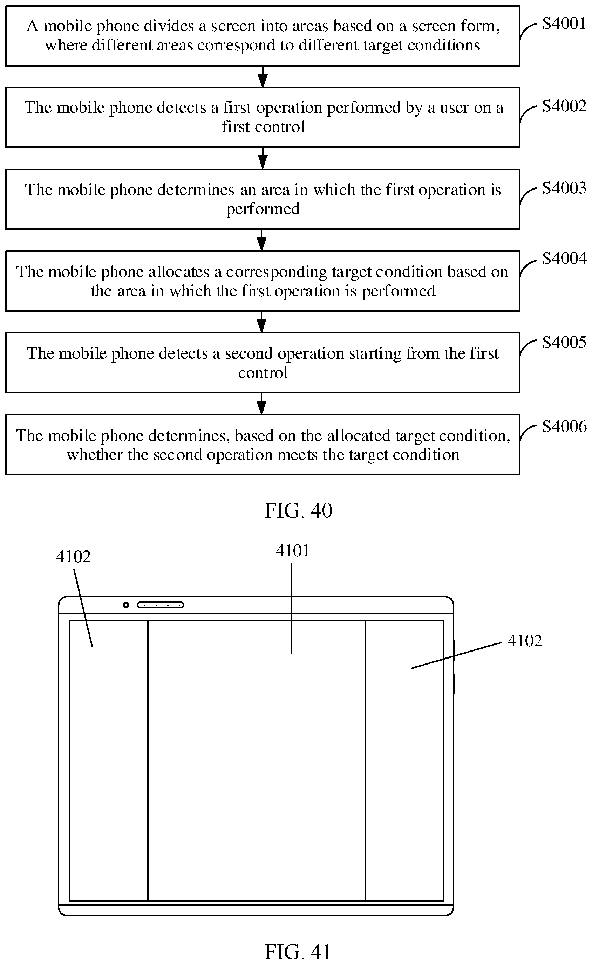

Optionally, refer to FIG. 40. The application window display method in this application may further include the following steps.

S4001: The mobile phone divides the screen into areas based on a screen form, where different areas correspond to different target conditions.

A value of a parameter threshold in the target condition may correspond to a sliding difficulty degree of the area. Optionally, a parameter threshold in a target condition corresponding to an area with a high sliding difficulty degree may be less than a parameter threshold in a target condition corresponding to an area with a low sliding difficulty degree, that is, a decision threshold of the area with the high sliding difficulty degree is decreased, and a decision threshold of the area with the low sliding difficulty degree is increased, to ensure consistent triggering experience at all locations on the screen of the mobile phone.

It may be understood that, by using a test device like a machine arm, the application window may be slid at each location on the screen of the mobile phone based on a sliding parameter, for example, a fixed sliding speed or sliding distance, to determine whether triggering at each location can succeed. When triggering at a location fails, it may be considered that triggering experience at all locations on the screen of the mobile phone is inconsistent. In this case, the target condition may be adjusted and then testing is performed, until triggering experience at all locations on the screen of the mobile phone is consistent.

Optionally, the screen of the mobile phone may be divided into a first area and a second area. The first area may be a sliding easy area on the screen, and the second area may be a sliding difficult area on the screen. Correspondingly, the mobile phone may divide the target condition into a first target condition corresponding to the first area and a second target condition corresponding to the second area. A parameter threshold in the first target condition is greater than a parameter threshold in the second target condition.

For example, the mobile phone detects that a sliding speed, a sliding acceleration, a sliding distance, and a sliding time of the sliding operation all need to meet the target condition. The first target condition corresponding to the first area may be a first threshold set including a first sliding speed threshold, a first sliding acceleration threshold, a first sliding distance threshold, and a first sliding time threshold. The second target condition corresponding to the second area may be a second threshold set including a second sliding speed threshold, a second sliding acceleration threshold, a second sliding distance threshold, and a second sliding time threshold. Therefore, the mobile phone may use the first target condition to determine whether a sliding operation in the first area is successfully triggered, and the mobile phone may use the second target condition to determine whether a sliding operation in the second area is successfully triggered.

In an implementation, refer to FIG. 41. The first area may be a middle area of the screen of the mobile phone, for example, a middle area 4101 of the screen shown in FIG. 41, and the second area may be an edge area of the screen of the mobile phone, for example, edge areas 4102 on left and right sides of the screen shown in FIG. 41.

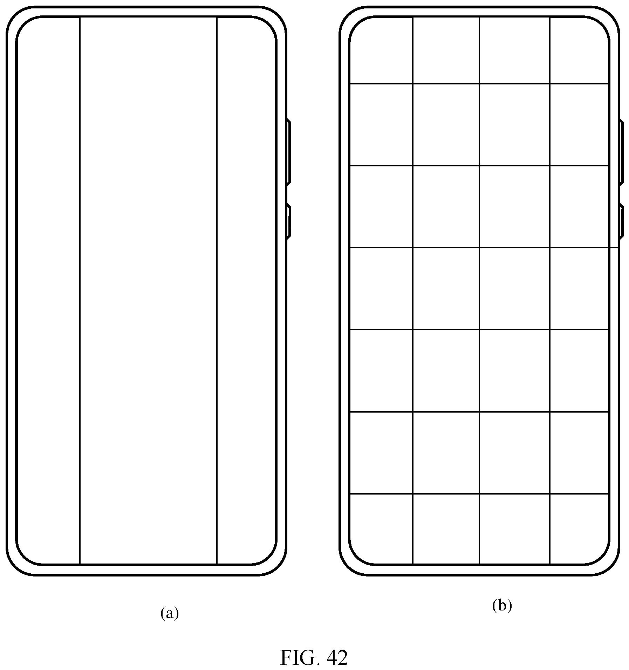

Optionally, the mobile phone may accurately perform area division on the screen based on a detected trigger sensitivity value of each location on the screen. For example, refer to FIG. 42. As shown in (b) in FIG. 42, the screen of the mobile phone may be divided into 28 areas based on a ratio of 4x7, and the mobile phone may divide the screen into a plurality of areas shown in (a) in FIG. 42 based on detected respective trigger sensitivity values of the 28 areas. Areas on two sides of the screen are the second area, and an area in the middle of the screen is the first area.

Optionally, the mobile phone may alternatively divide the screen into three or more areas, and set a target condition corresponding to each area. For example, the screen may be divided into the 28 areas shown in (b) in FIG. 42. Correspondingly, each of the 28 areas corresponds to one target condition.

When the user uses the mobile phone, the mobile phone may be in a landscape state or a portrait state, and a screen area in which the finger of the user is difficult to slide in the landscape state may be different from a screen area in which the finger of the user is difficult to slide in the portrait state. Therefore, in some embodiments, the mobile phone may perform first area division on the screen in the landscape state, and then the mobile phone may correspondingly set different target conditions based on different screen areas obtained through division in the landscape state. In the portrait state, the mobile phone may perform second area division on the screen, and then the mobile phone may correspondingly set different target conditions based on different screen areas obtained through division in the portrait state.

When a display of the mobile phone is a foldable screen, the foldable screen may be folded to form a first screen and a second screen. When the foldable screen is in a folded state, the first screen may be used as a primary screen to display the application window, and the second screen may not be used for display. When the foldable screen is in an unfolded state, the first screen and the second screen may be used as a complete display to display the application window. Therefore, for a foldable mobile phone, a screen area in which the finger of the user is difficult to slide in the folded state may be different from a screen area in which the finger of the user is difficult to slide in the unfolded state. Therefore, in some embodiments, when the mobile phone is a foldable mobile phone, the foldable mobile phone may perform third area division on the screen in the unfolded state, and then the foldable mobile phone may correspondingly set different target conditions based on different screen areas obtained through division in the unfolded state. In the folded state, the foldable mobile phone may perform fourth area division on the screen, and then the foldable mobile phone may correspondingly set different target conditions based on different screen areas obtained through division.

S4002: The mobile phone detects a first operation performed by the user on the first control.

Optionally, when the finger of the user performs the quick sliding operation starting from the first control, the finger of the user needs to first touch a location of the application window on the screen. Therefore, the first operation may be a touch operation performed on the first control. The touch operation may be understood as a start operation of the quick sliding operation.

Optionally, when the user may trigger the sliding operation on the application window by touching and holding the application window, the first operation may alternatively be a touching and holding operation performed on the application window.

S4003: The mobile phone determines an area in which the first operation is performed.

In embodiments of this application, when detecting the first operation performed by the user on the application window, the mobile phone may identify location coordinates of the first operation, and then the mobile phone determines, based on the location coordinates, the area in which the first operation is performed.

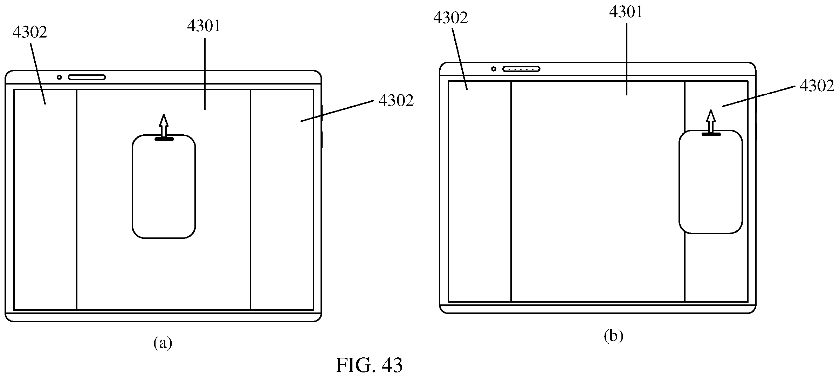

For example, the screen is divided into the first area and the second area. Refer to FIG. 43. As shown in (a) in FIG. 43, when detecting a touch operation performed by the user on a drag bar control at the top of the floating window, the mobile phone may identify that location coordinates of the touch operation are in a first area 4301 of the screen, namely, a sliding easy area. As shown in (b) in FIG. 43, when detecting a touch operation performed by the user on the dragging bar control at the top of the floating window, the mobile phone may identify that the location coordinates of the touch operation are in a second area 4302 of the screen, namely, the sliding difficult area.

It may be understood that when the finger of the user touches the application window on the screen, coordinates of a touch point of the finger definitely fall within a display range of the application window. Therefore, in some embodiments, the mobile phone may alternatively quickly determine, based on a display location of the application window on the screen, the area in which the first operation is performed. In this way, the mobile phone can determine in advance the area in which the user operation is performed, and does not need to determine in real time the area in which the operation is performed when the user performs the operation. This improves a response speed.

For example, as shown in (a) in FIG. 43, because the floating window is displayed in the first area 4301 on the screen, the mobile phone may directly determine that the location coordinates of the touch operation falling in the floating window are also in the first area 4301 on the screen, namely, the sliding easy area. For another example, as shown in (b) in FIG. 43, because the floating window is displayed in the second area 4302 on the screen, the mobile phone may directly determine that the location coordinates of the touch operation falling in the floating window are also in the second area 4302 on the screen, namely, the sliding difficult area.

Optionally, when the application window includes a window operation area, when detecting the first operation performed by the user on the window operation area, the mobile phone may determine, based on a display location of the window operation area on the screen, the area in which the first operation is performed.

Optionally, when the application window includes the first control used to move a window location, when detecting the first operation performed by the user on the first control, the mobile phone may determine, based on the display location of the first control on the screen, the area in which the first operation is performed.

Optionally, when the application window includes a floating control used to move a window location, when detecting the first operation performed by the user on the floating control, the mobile phone may determine, based on a display location of the floating control on the screen, the area in which the first operation is performed.

S4004: The mobile phone allocates a corresponding target condition based on the area in which the first operation is performed.

Because different target conditions are used in different areas, to determine whether the sliding operation can successfully trigger switching of the display state of the application window. Therefore, after determining the area in which the first operation is performed, the mobile phone may allocate the corresponding target condition based on the area in which the first operation is performed. Further, the mobile phone may determine, based on the target condition adapted to the area, whether the sliding operation can successfully trigger switching of the display state of the application window. In this way, when detecting sliding operations in different areas, the mobile phone may adaptively adapt to an appropriate triggering decision condition, to ensure consistent triggering experience at all locations on the screen of the mobile phone.

For example, the screen is divided into the first area and the second area. If the mobile phone detects that the area in which the first operation is performed is the first area, the mobile phone may determine, based on the first target condition, whether the user operation can successfully trigger switching of the display state of the application window. If the mobile phone detects that the area in which the first operation is performed is the second area, the mobile phone may determine, based on the second target condition, whether the user operation can successfully trigger switching of the display state of the application window.

S4005: The mobile phone detects a second operation starting from the first control.

The second operation may be a subsequent quick sliding operation after the first operation. Optionally, the second operation may be the foregoing first sliding operation or the like.

Optionally, when the application window includes the window operation area, when detecting the second operation performed by the user on the window operation area, the mobile phone may determine that the mobile phone detects the second operation performed by the user on the application window.

Optionally, when the application window includes the first control used to move the window location, when detecting the second operation performed by the user on the first control, the mobile phone may determine that the mobile phone detects the second operation performed by the user on the application window.

Optionally, when the application window includes the floating control used to move the window location, when detecting the second operation performed by the user on the floating control, the mobile phone may determine that the mobile phone detects the second operation performed by the user on the application window.

It may be understood that, after the finger of the user touches the application window on the screen, the user may have another intention, and does not necessarily perform a quick sliding operation on the application window. When the mobile phone does not detect the quick sliding operation performed by the user on the application window, it may be considered that the user does not intend to switch the display state of the application window, and the method in the subsequent embodiments of this application may not be performed. When the mobile phone detects the quick sliding operation performed by the user on the application window, it may be considered that the user intends to switch the display state of the application window, and the method in the subsequent embodiments of this application may be performed. That is, the mobile phone may determine the second display state corresponding to the second operation.

S4006: The mobile phone determines, based on the allocated target condition, whether the second operation meets the target condition.

After determining the area in which the first operation is performed, the mobile phone may determine, based on the target condition corresponding to the area, whether the subsequent second operation after the first operation can successfully trigger switching of the display state of the application window. For example, the screen of the mobile phone may be divided into the first area and the second area. If the mobile phone detects that the area in which the first operation is performed is the first area, the mobile phone may determine whether a sliding parameter of the second operation meets the first target condition. If the mobile phone detects that the area in which the first operation is performed is the second area, the mobile phone may determine whether a sliding parameter of the second operation meets the second target condition.

In conclusion, according to the application window display method in embodiments of this application, the user can complete switching between different display states of the application window in one step by sliding only the application window in the first display state. This avoids scattered and separated gesture interaction. In addition, because a gesture is simple and concentrated in the application window in the first display state, interaction is more systematic, and learning and remembering are more convenient for the user. This greatly improves interaction efficiency and user operation convenience. In addition, because a hot zone (usually an entire screen) corresponding to the sliding operation is large, a user operation is convenient, and an accidental touch is not likely to occur. This greatly improves operation accuracy of the user.

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that, in embodiments, the division of the modules is an example, and is merely logical function division. During an actual implementation, another division manner may be used.

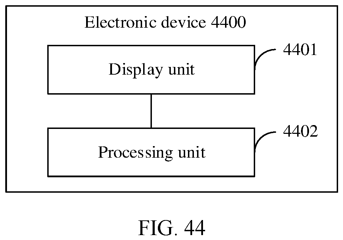

When each function module is obtained through division based on each corresponding function, FIG. 44 is a possible diagram of composition of an electronic device 4400 in the foregoing embodiments. As shown in FIG. 44, the electronic device 4400 may include a display unit 4401 and a processing unit 4402.

The display unit 4401 may be configured to support the electronic device 4400 in performing the foregoing corresponding steps and/or another process of the technology described in this specification.

The processing unit 4402 may be configured to support the electronic device 4400 in performing the foregoing corresponding steps and/or another process of the technology described in this specification.

It should be noted that all related content of the steps in the foregoing method embodiments may be cited in function descriptions of corresponding functional modules. Details are not described herein again.

The electronic device 4400 provided in embodiments is configured to execute the foregoing application window display method, and therefore can achieve same effect as the foregoing implementation method.

When an integrated unit is used, the electronic device 4400 may include a processing module, a storage module, and a communication module. The processing module may be configured to: control and manage actions of the electronic device 4400, for example, may be configured to support the electronic device 4400 in performing the steps performed by the display unit 4401 and the detection unit 4402. The storage module may be configured to support the electronic device 4400 in storing program code, data, and the like. The communication module may be configured to support communication between the electronic device 4400 and another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, for example, a radio frequency circuit, a Bluetooth chip, or a Wi-Fi chip.

In an embodiment, when the processing module is a processor, and the storage module is a memory, for a structure of the electronic device in embodiments, refer to a structure of the electronic device 100 shown in FIG. 4.

Some other embodiments of this application further provide an application window display apparatus. The apparatus may be used in the foregoing electronic device. The apparatus is configured to perform functions or steps performed by the mobile phone in the foregoing method embodiments.

An embodiment of this application further provides a chip system. The chip system includes at least one processor and at least one interface circuit. The processor and the interface circuit may be interconnected by using a line. The interface circuit may read instructions stored in the memory, and send the instructions to the processor. When the instructions are executed by the processor, the electronic device is enabled to perform the steps in the foregoing embodiments. Certainly, the chip system may further include another discrete device. This is not specifically limited in embodiments of this application.

An embodiment of this application further provides a computer storage medium. The computer storage medium includes computer instructions. When the computer instructions are run on the foregoing electronic device, the electronic device is enabled to perform functions or steps performed by the mobile phone in the foregoing method embodiments.

Embodiments of this application further provide a computer program product. When the computer program product runs on a computer, the computer is enabled to perform functions or steps performed by the mobile phone in the foregoing method embodiments.

The electronic device, the computer storage medium, the computer program product, or the chip provided in the embodiments may be configured to perform the corresponding method provided above. Therefore, for beneficial effects that can be achieved, refer to the beneficial effects of the corresponding method provided above. Details are not described herein again.

The foregoing descriptions about embodiments allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, module and unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An application window display method, applied to an electronic device, wherein the method comprises:
displaying an application window in a floating window state, wherein the application window comprises a first control used to move the application window;
in response to a first sliding operation starting from the first control, moving the application window along a sliding track of the first sliding operation, wherein the first sliding operation is a first movement in a first direction; and
displaying the application window in a full-screen state in response to a first lifting operation after the first movement, wherein
before the displaying the application window in a full-screen state, the method further comprises:
continuing to move the application window in the first direction in response to the first lifting operation after the first movement, wherein a window size of the application window gradually increases in a moving process until the application window is in the full-screen state.

2. The method according to claim 1, wherein the method further comprises:
in response to a second sliding operation starting from the first control, moving the application window along a sliding track of the second sliding operation, wherein the second sliding operation is a second movement in a second direction; and
displaying the application window in a minimization state in response to a first lifting operation after the second movement, wherein
before the displaying the application window in a minimization state, the method further comprises:
continuing to move the application window in the second direction in response to the first lifting operation after the second movement, wherein the window size of the application window gradually decreases in a moving process until the application window is in the minimization state.

3. The method according to claim 1 or 2, wherein the method further comprises:
in response to a third sliding operation starting from the first control, moving the application window along a sliding track of the third sliding operation, wherein the third sliding operation is a third movement in a third direction; and
closing the application window in response to a first lifting operation after the third movement, wherein
before the closing the application window, the method further comprises:
continuing to move the application window in the third direction in response to the first lifting operation after the third movement, wherein the window size of the application window gradually decreases in a moving process until the application window is closed.

4. The method according to any one of claims 1 to 3, wherein the method further comprises:
determining, based on a sliding angle of the first sliding operation and an angle range corresponding to a preset sliding direction, that a sliding direction of the first sliding operation is the first direction; or
determining, based on a sliding angle of the second sliding operation and an angle range corresponding to a preset sliding direction, that a sliding direction of the second sliding operation is the second direction; or
determining, based on a sliding angle of the third sliding operation and an angle range corresponding to a preset sliding direction, that a sliding direction of the third sliding operation is the third direction.

5. The method according to any one of claims 1 to 4, wherein before the continuing to move the application window in the first direction, the method further comprises:
detecting that a sliding parameter of the first sliding operation meets a first target condition, wherein the sliding parameter comprises at least one of a sliding speed, a sliding acceleration, a sliding distance, and a sliding time;
before the continuing to move the application window in the second direction, the method further comprises:
detecting that a sliding parameter of the second sliding operation meets a second target condition, wherein the sliding parameter comprises at least one of a sliding speed, a sliding acceleration, a sliding distance, and a sliding time; or
before the continuing to move the application window in the third direction, the method further comprises:
detecting that a sliding parameter of the third sliding operation meets a third target condition, wherein the sliding parameter comprises at least one of a sliding speed, a sliding acceleration, a sliding distance, and a sliding time.

6. The method according to claim 5, wherein a screen of the electronic device is divided into at least two areas, a corresponding target condition is allocated to each area, and the detecting that a sliding parameter of the first sliding operation meets a target condition comprises:
detecting that the sliding parameter of the first sliding operation meets the first target condition corresponding to a first area, wherein the first area is an area that is in the at least two areas and in which the first sliding operation is performed;
the detecting that a sliding parameter of the second sliding operation meets a target condition comprises:
detecting that the sliding parameter of the second sliding operation meets the second target condition corresponding to a second area, wherein the second area is an area that is in the at least two areas and in which the second sliding operation is performed; or
the detecting that a sliding parameter of the third sliding operation meets a target condition comprises:
detecting that the sliding parameter of the third sliding operation meets the third target condition corresponding to a third area, wherein the third area is an area that is in the at least two areas and in which the third sliding operation is performed.

7. The method according to claim 6, wherein the method further comprises:
determining the first area from the at least two areas based on a contact point location of the first sliding operation; or
determining the second area from the at least two areas based on a contact point location of the second sliding operation; or
determining the third area from the at least two areas based on a contact point location of the third sliding operation.

8. The method according to claim 6, wherein the method further comprises:
determining, from the at least two areas based on a display location of the application window, the area in which the sliding operation is performed.

9. The method according to any one of claims 6 to 8, wherein the method further comprises:
determining, based on a screen status of the electronic device, the at least two areas obtained by dividing the screen and the target condition corresponding to each area.

10. The method according to claim 9, wherein the screen status comprises a landscape state or a portrait state.

11. The method according to claim 9 or 10, wherein the electronic device comprises a foldable screen, and the screen status comprises a folded state or an unfolded state.

12. The method according to any one of claims 1 to 11, wherein the method further comprises:
displaying the application window in the floating window state at a location after the first movement in response to a second lifting operation after the first movement; or
displaying the application window in the floating window state at a location after the second movement in response to a second lifting operation after the second movement; or
displaying the application window in the floating window state at a location after the third movement in response to a second lifting operation after the third movement.

13. The method according to any one of claims 1 to 12, wherein the first lifting operation indicates that a lifting operation detected after a sliding operation ends occurs in a first time period, and the second lifting operation indicates that a lifting operation detected after a sliding operation ends occurs in a second time period, wherein the first time period is less than the second time period.

14. The method according to any one of claims 1 to 13, wherein the continuing to move the application window in the first direction comprises:
moving the application window along a first specified route if the sliding track of the first sliding operation does not point to the first direction, wherein the first specified route points to the first direction.

15. The method according to any one of claims 1 to 13, wherein the continuing to move the application window in the first direction comprises:
moving the application window along an extension line of the sliding track if the sliding track of the first sliding operation points to the first direction.

16. The method according to any one of claims 3 to 15, wherein before the continuing to move the application window in the third direction, the method further comprises:
displaying a close icon at a screen edge corresponding to the third direction; and
the continuing to move the application window in the third direction comprises:
moving the application window along a second specified route, wherein the second specified route points to the close icon.

17. The method according to any one of claims 2 to 16, wherein the displaying the application window in a minimization state comprises:
displaying the application window in a mini floating window state; or
displaying a floating icon of the application window.

18. An electronic device, wherein the electronic device comprises a memory and one or more processors, the memory is coupled to the processor, the memory is configured to store computer program code, the computer program code comprises computer instructions, and when the processor executes the computer instructions, the electronic device performs the method according to any one of claims 1 to 17.

19. A chip system, wherein the chip system is used in an electronic device; the chip system comprises one or more interface circuits and one or more processors; the interface circuit and the processor are interconnected through a line; the interface circuit is configured to: receive a signal from a memory of the electronic device, and send the signal to the processor, wherein the signal comprises computer instructions stored in the memory; and when the processor executes the computer instructions, the electronic device performs the method according to any one of claims 1 to 17.

20. A computer storage medium, comprising computer instructions, wherein when the computer instructions are run on an electronic device, the electronic device is enabled to perform the method according to any one of claims 1 to 17.

21. A computer program product, wherein when the computer program product runs on a computer, the computer is enabled to perform the method according to any one of claims 1 to 17.
